# EUROPEAN PATENT APPLICATION

(11) **EP 2 209 238 A2**
(43) Date of publication of application: **21.07.2010**
(21) Application number: 10150876.0
(22) Date of filing: 15.01.2010
(51) Int. Cl.: H04H 60/86, H04H 60/72, H04N 5/00, H04N 7/24

(54) **Rich media-enabled service guide provision method and system for broadcast service**

(30) Priority: 15.01.2009 KR 20090003185; 05.06.2009 KR 20090049958; 12.06.2009 KR 20090052574; 24.06.2009 KR 20090056688
(71) Applicant: Samsung Electronics Co., Ltd., Suwon-si, Gyeonggi-do (KR)
(72) Inventor: Lee, Jong Hyo, Gyeonggi-do (KR); Hwang, Seo Young, Gyeonggi-do (KR); Song, Jae Yeon, Gyeonggi-do (KR); Hwang, Sung Oh, Gyeonggi-do (KR); Jung, Bo Sun, Gyeonggi-do (KR)
(74) Representative: Ketelaars, Maarten F.J.M.

(57) **Abstract**

A service guide provision method and system for a digital broadcast service is provided for distributing a rich media-enabled service guide. A rich media-enabled service guide provisioning method for a digital broadcast service includes creating a Rich Media Solution (RMS) template for a service guide with reference to service guide fragments; creating a service guide delivery descriptor containing RMS information on the RMS template and service guide fragment information on the service guide fragments; and broadcasting the service guide fragments, the RMS template, and the service guide delivery descriptor.

## Description

### BACKGROUND OF THE INVENTION

### 1. Field of the Invention

The present invention relates to broadcast services and, in particular, to a service guide provision method and system for a digital broadcast service that is capable of distributing a rich media-enabled service guide.

### 2. Description of the Related Art

Broadcasting is a service that may be received by all users having broadcast receivers. The broadcast services can be roughly divided into two categories: a radio broadcasting service carrying only audio, and a multimedia broadcasting service carrying audio and video plus data. Such broadcasting services have developed from analog services to digital services. Recently, various types of broadcasting systems (such as cable broadcasting systems, satellite broadcasting systems, and hybrid broadcasting systems using both a cable network and a satellite) have been developed to provide high quality audio and video broadcasting services along with high speed data services.

The mobile communication market is confronted with the need for new services through a recombination or reintegration of existing technologies. The development of communication and broadcast technologies has allowed users to enjoy broadcasting services on the move using portable devices such as mobile phones and Personal Digital Assistants (PDAs). Due to potential and actual market needs and increasing user demand for multimedia services, service providers' intended strategies for providing new services such as broadcast service in addition to the existing voice service, and the identified interests of Information Technology (IT) companies, which are bolstering their mobile communication businesses to meet the user's demands, and the convergence of mobile communication services and Internet Protocol (IP) technology has become a priority in the development of the next generation mobile communication technologies. The convergence has come to introduce and apply various wireless/broadcast services not only in the mobile communication market but also in the general wired communication market, and the all-around convergence has enabled the same consumption environment for different services no matter whether they are wired or wireless broadcast services.

Open Mobile Alliance (OMA), a group developing the standard for interworking between individual mobile solutions, serves to define various application standards for mobile games and Internet services. OMA Mobile Broadcast Services Enabler Suite (OMA BCAST) is an open global specification designed to support mobile broadcast technologies. The OMA BCAST deals with the standardizations of technologies for providing the IP-based mobile content delivery such as a variety of functional areas including service guides, downloading and streaming, service and content protection, service subscription, and roaming.

With the trend of fixed-mobile convergence, the mobile broadcast technologies such as OMA BCAST are evolving to provide the service in a fixed-mobile integrated environment.

The conventional mobile broadcast systems provide service guides configured to be processed by only the terminals designed to receive the corresponding broadcast system.

In such mobile broadcast systems, the service guide is provided with the content-related information but not the display method, such that the display format of the service guide is determined depending on the implementation of the terminal. Since the service guide as a start point of all the broadcast services provided by the service provider may be displayed in different formats depending on the manufacturer and model of the terminal, it is difficult to provide the broadcast users with uniform service accessibility. In order to solve this problem, there is a need for a rich media technology to define a display format adaptive to various terminal displays. Moving Pictures Experts Group-Lightweight Application Scene Representation (MPEG-LASeR), 3^{rd} Generation Partnership-Dynamic and Interactive Multimedia Scenes (3GPP-DIMS), and Open Mobile Alliance-Rich Media Environment (OMA-RME) are representative rich media integrated solutions. In the case of applying the rich media technology to the service guide, however, compatibility problems occur such that the service guide can be displayed normally only on the rich media-enabled terminal display. There is therefore a need to develop a method for providing the rich media-enabled service guide adapted to the terminal capability.

### SUMMARY OF THE INVENTION

In order to overcome at least the problems of the prior art, the present invention provides a rich media-enabled service guide provisioning method and system for a broadcast service.

Also, the present invention provides a rich media-enabled service guide provisioning method and system for a broadcast service that is capable of rendering a rich media-enabled service guide without compromising backward compatibility by using a rich media-based service guide template.

In accordance with an embodiment of the present invention, a rich media-enabled service guide provisioning method for a digital broadcast service includes creating a Rich Media Solution (RMS) template for a service guide with reference to service guide fragments; creating a service guide delivery descriptor containing RMS information on the RMS template and service guide fragment information on the service guide fragments; and broadcasting the service guide fragments, the RMS template, and the service guide delivery descriptor.

In accordance with another embodiment of the present invention, a rich media-enabled service guide handling method for a digital broadcast service includes receiving at least one service guide delivery descriptor; extracting service guide fragments with reference to information on the service guide fragment contained in the service guide delivery descriptor; receiving a Rich Media Solution (RMS) template with reference to RMS information of the service guide delivery descriptor; and outputting a service guide rendered with the service guide fragments using the RMS template.

In accordance with still another embodiment of the present invention, a rich media-enabled service guide provisioning system for a digital broadcast service includes a broadcast distribution/adaptation unit which transports a service guide delivery descriptor comprising information on service guide fragments, a Rich Media Solution (RMS) template, service guide fragment information, and RMS template information; and a terminal which extracts the service guide fragments with reference to the service guide fragment information of the service guide delivery descriptor, receives the RMS template with reference to the RMS template information of the service guide delivery descriptor, and outputs a service guide rendered with the service guide fragments using the RMS template.

### BRIEF DESCRIPTION OF THE DRAWINGS

The above and other objects, features and advantages of the present invention will be more apparent from the following detailed description in conjunction with the accompanying drawings, in which:
FIG. 1 is a block diagram illustrating the logical architecture of a BCAST system specified by OMA BCAST working group dealing with application layer and transport layer;
FIG. 2 is a diagram illustrating a structure of a Service Guide Data Model for use in the OMA BCAST system;
FIG. 3 is a block diagram illustrating a relationship between a Service Guide Delivery Descriptor (SGDD) and a Service Guide Delivery Unit (SGDU) in a Service Guide Data Model of FIG. 2;
FIG. 4 is a flowchart illustrating a rich media-enabled service guide provisioning method according to an embodiment of the present invention;
FIG. 5 is a flowchart illustrating a procedure for handling a received rich media-enabled-service guide in the rich media-enabled service guide provision method according to an embodiment of the present invention; and
FIG. 6 is a block diagram illustrating a configuration of the terminal according to an embodiment of the present invention.
FIG. 7 is a block diagram illustrating a a Service Guide Data Model based on a rich media.

### DETAILED DESCRIPTION OF EXEMPLARY EMBODIMENTS

Embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

The terms and words used in the following description and claims are not limited to their dictionary meanings, but are merely used by the inventor to enable a clear and consistent understanding of the invention. Accordingly, it should be apparent to those skilled in the art that the following description of embodiments of the present invention are provided for illustration purpose only and not for the purpose of limiting the invention as defined by the appended claims and their equivalents.

In the following, the description is made using the terms and expressions specified in the 3GPP DIMS and OMA BCAST standards, however, the present invention is not limited to these standards as it can be applied to other technologies and systems developed under the similar concept.

A digital broadcast system according to an embodiment invention is described hereinafter. Although the description on the digital broadcast system is made with the OMA BCAST technology as a representative mobile broadcast standard, the present invention is not limited thereto.

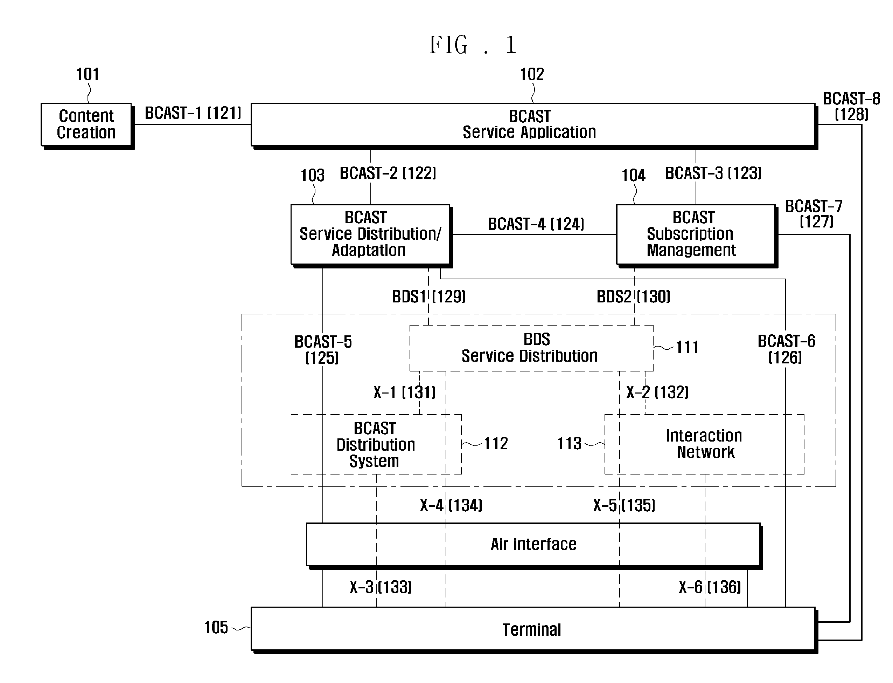

FIG. 1 is a block diagram illustrating the logical architecture of a BCAST system specified by OMA BCAST working group dealing with application layer and transport layer.

As shown in FIG. 1, the logical architecture of the BCAST system includes a Content Creation (CC) 101, a BCAST Service Application 102, a BCAST Service Distribution/Adaptation 103, a BCAST Subscription Management 104, a Terminal 105, a BDS Service Distribution 111, a Broadcast Distribution System 112, and an Interworking Network 113.

The Content Creation (CC) 101 provides content that is the basis of the BCAST services. The content can be files for common broadcast services, e.g. data for movie, audio and video. The Content Creation 101 provides the BCAST Service Application 102 with attributes for the content, which are used to create a service guide and determine a transmission bearer over which the services will be delivered.

The BCAST Service Application 102 receives data for the BCAST services provided from the Content Creation 101, and converts the received data into a form suitable to provide media encoding, content protection, interactive services, etc. The BCAST Service Application 102 provides the attributes for the content, which are received from the Content Creation 101, to the BCAST Service Distribution/Adaptation (BSDA) 103 and the BCAST Subscription Management (BSM) 104.

The BCAST Service Distribution/Adaptation 103 performs operations such as file/streaming delivery, service gathering, service protection, service guide creation/delivery and service notification, using the BCAST service data provided from the BCAST Service Application 102. The BCAST Service Distribution/Adaptation 103 adapts the services to the Broadcast Distribution System (BDS) 112.

Particularly in an embodiment of the present invention, the BCAST Service Distribution/Adaptation 103 creates a Rich Media Solution (RMS) template and transmits RMS template information with the RMS template to the terminal 105.

The BCAST Subscription Management 104 manages, via hardware and/or software, service provisioning such as subscription and charging-related functions for BCAST service users, information provisioning used for BCAST services, and mobile terminals that receive the BCAST services.

The terminal 105 receives content/service guide and program support information such as content protection, and provides a broadcast service to a user. Particularly in an embodiment of the present invention, the terminal 105 receives the RMS information and the RMS template based on the RMS information. The terminal 105 also receives the service guide and outputs the service guide using the RMS template.

The BDS Service Distribution 111 delivers mobile broadcast services to a plurality of terminals through mutual communication with the Broadcast Distribution System 112 and the Interaction Network 113.

The Broadcast Distribution System 112 delivers mobile broadcast services over a broadcast channel, and may include, for example, Multimedia Broadcast Multicast Service (MBMS) by 3rd Generation Project Partnership (3GPP), Broadcast Multicast Service (BCMCS) by 3rd Generation Project Partnership 2 (3GPP2), DVB-Handheld (DVB-H) by Digital Video Broadcasting (DVB), or Internet Protocol (IP) based broadcasting/communication networks. The Interaction Network 113 provides an interaction channel, and may include, for example, a cellular network and the like.

A description is now made of reference points which are connection paths between the above logical entities. The reference points have a plurality of interfaces according to their purposes. The interfaces are used for communication between two or more logical entities for their specific purposes, and a message format, a protocol and the like, for the interfaces are applied.

BCAST-1 121 in FIG. 1 is a transmission path for content and content attributes, and BCAST-2 122 is a transmission path for a content-protected or a content-unprotected BCAST service, attributes of the BCAST service, and content attributes.

BCAST-3 123 is a transmission path for attributes of a BCAST service, attributes of content, user preference/subscription information, a user request, and a response to the request. BCAST-4 124 is a transmission path for a notification message, attributes used for a service guide, and a key used for content protection and service protection.

BCAST-5 125 is a transmission path for a protected BCAST service, an unprotected BCAST service, a content-protected BCAST service, a content-unprotected BCAST service, BCAST service attributes, content attributes, a notification, a service guide, security materials such as Digital Right Management (DRM) Rights Object (RO) and key values used for BCAST service protection, and all data and signaling transmitted through a broadcast channel.

BCAST-6 126 is a transmission path for a protected BCAST service, an unprotected BCAST service, a content-protected BCAST service, a content-unprotected BCAST service, BCAST service attributes, content attributes, a notification, a service guide, security materials such as DRM RO and key values used for BCAST service protection, and all data and signaling transmitted through an interaction channel.

BCAST-7 127 is a transmission path for service provisioning, subscription information, device management, and user preference information transmitted through an interaction channel for control information related to receipt of security materials such as DRM RO and key values used for BCAST service protection

BCAST-8 128 is a transmission path through which user data for a BCAST service is interacted.

BDS-1 129 is a transmission path for a protected BCAST service, an unprotected BCAST service, BCAST service attributes, content attributes, a notification, a service guide, and security materials such as DRM RO and key values used for BCAST service protection.

BDS-2 130 is a transmission path for service provisioning, subscription information, device management, and security materials such as DRM RO and key values used for BCAST service protection.

X-1 131 is a reference point between the BDS Service Distribution 111 and the Broadcast Distribution System 112. X-2 132 is a reference point between the BDS Service Distribution 111 and the Interaction Network 113. X-3 133 is a reference point between the Broadcast Distribution System 112 and the terminal 105. X-4134 is a reference point between the BDS Service Distribution 111 and the terminal 105 over a broadcast channel. X-5 135 is a reference point between the BDS Service Distribution 111 and the terminal 105 over an interaction channel. X-6 136 is a reference point between the Interaction Network 113 and the terminal 105.

A description is now made of a service guide data model for providing the service guide according to an embodiment of the present invention.

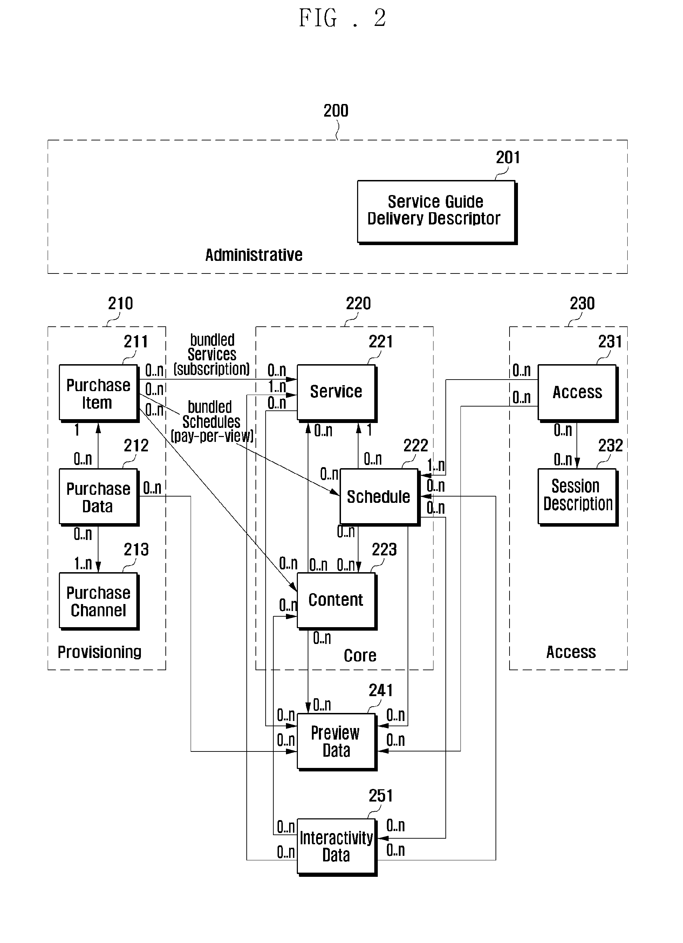

FIG. 2 is a diagram illustrating a structure of a service guide data model for use in the OMA BCAST system. In FIG. 2, each block is called fragment, the solid arrows between the fragments indicate reference directions between the fragments.

As shown in FIG. 2, the service guide data model includes an Administrative Group 200 for providing basic information about the entire service guide, a Provisioning Group 210 for providing subscription and purchase information, a Core Group 220 as a core part of the service guide, and an Access Group 230 for providing access information to control access to services and contents.

The Administrative Group 200 includes a Service Guide Delivery Descriptor (SGDD) 201. The Provision Group 210 includes a Purchase Item 211, a Purchase Data 212, and a Purchase Channel 213. The Core Group 220 Includes a Service 221, a Schedule 222, and a Content 223. The Access Group 230 includes an Access 231 and a Session Description 232.

The service guide data model further includes Preview Data 241 and Interactivity Data 251 in addition to the four information groups 200, 210, 220, and 230.

The aforementioned components are referred to as fragments and are the basic units constituting the service guide.

Hereinafter, descriptions are made of the individual fragments of the service guide data model.

The SGDD fragment 201 provides information about a delivery session where a Service Guide Delivery Unit (SGDU) containing the fragments constituting the service guide is located. The SGDU is a container for containing the service guide fragments 211, 212, 213, 221, 222, 223, 231, 232, 241, and 251 constituting the service guide. The SGDD 201 also provides the information on the entry points for receiving the grouping information and notification messages.

The Service Fragment 221, which is an upper aggregate of the content included in the broadcast service, and includes information on service content, genre, service location and so forth.

The Schedule Fragment 222 defines the timeframes in which associated content items are available for streaming, downloading, and/or rendering.

The Content Fragment 223 provides a detailed description of a specific content item and information about the targeted user group or geographical area as well as genre.

The Access fragment 231 provides access-related information for allowing the user to view the service and delivery method, and session information associated with the corresponding access session.

The Session Description fragment 232 may be included in the Access fragment 231, and provides location information in a Uniform Resource Identifier (URI) form so that the terminal may detect information on the Session Description fragment 232. The Session Description fragment 232 provides address information, codec information and so forth about multimedia content existing in the session.

The Purchase Item fragment 211 provides a bundle of service, content, time, etc. to help the user subscribe to or purchase the Purchase Item fragment 211.

The Purchase Data fragment 212 includes detailed purchase and subscription information such as price information and promotion information for the service or content bundle.

The Purchase Channel fragment 213 provides access information for a subscription or purchase.

The Preview Data fragment 241 can be used to provide preview information for a service, schedule, and content. The Interactivity Data fragment 251 can be used to provide an interactive service according to the service, schedule, and content in the middle of broadcasting.

The detailed information about the service guide can be defined with various elements and attributes for providing detailed contents and values based on the upper data model in FIG. 2.

Although not described, the fragments constituting the service guide can include element and attribute values for fulfilling their purposes.

A message schema table according to an embodiment of the present invention is described hereinafter. Table 1 shows an exemplary schema table for use in an embodiment of the present invention.

**Table 1**

| | | | | | |
|---|---|---|---|---|---|
| Name | Type | Category | Cardinality | Description | Data Type |

As shown in Table 1, the schema table includes a name field, a type field, a category field, a cardinality field, a description field, and a data type field.

The name field indicates the name of an element value or an attribute vale. The type field indicates the type of the element or the attribute. An element has one of the values, i.e. E1, E2, E3, and E4. E1 is a sub-element of element E, E2 is a sub-element of E1, E3 is a sub-element of E2, and E4 is a sub-element of E3. An attribute has a value A and indicates the attribute of an element. For instance, A below E1 means the attribute of element E1.

The category field is used to indicate whether the element/attribute is mandatory or optional, and marked by M for mandatory element/attribute and O for optional element/attribute.

The cardinality field indicates the relationship between elements and has a value of "0", "0..1", "1 ", "0..n", and "1..n". If an element or attribute has a cardinality of 0, it is optional. If an element or attribute has a cardinality of 1, it is mandatory. Also, if an element or attribute has a cardinality of n, it can have multiple values. For instance, the cardinality "0..n" means that the element or attribute can have no value or n values.

The description field provides detailed description of the element or attribute. The data type field indicates the data type of the element or attribute.

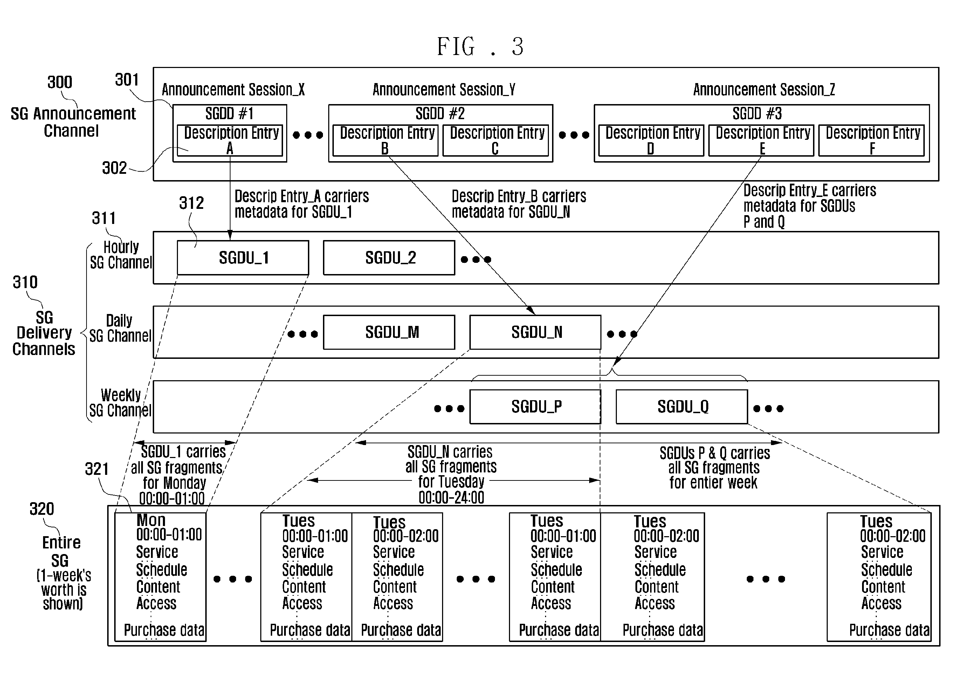

FIG. 3 is a block diagram illustrating a relationship between SGDD and SGDU in a Service Guide Data Model of FIG. 2.

Referring to FIG. 3, the Service Guide Deliver Descriptor (SGDD) fragment 301 (201 in FIG. 2) includes the session information, grouping information, and notification message access information related to all the fragments containing service information. Particularly in an embodiment of the present invention, the SGDD 301 includes the information on an RMS template. The description on the information of the RMS template is made later in more detail.

If a terminal supporting the mobile broadcast service powers on and starts receiving the service guide, the terminal accesses a Service Guide Announcement Channel (SG Announcement Channel) 300.

The SG Announcement Channel 300 includes at least one SGDD 301 (e.g. SGDD #1, ..., SGDD #2, ..., SGDD #3) formatted as shown in Table 2.

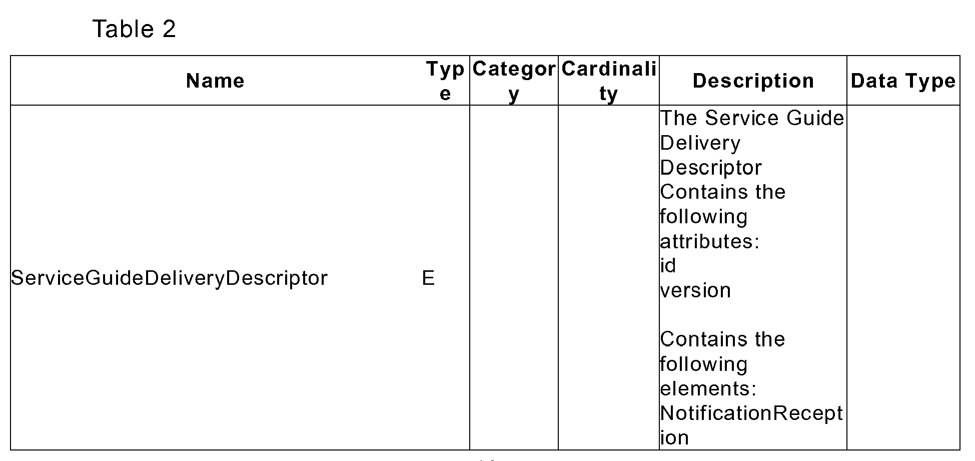

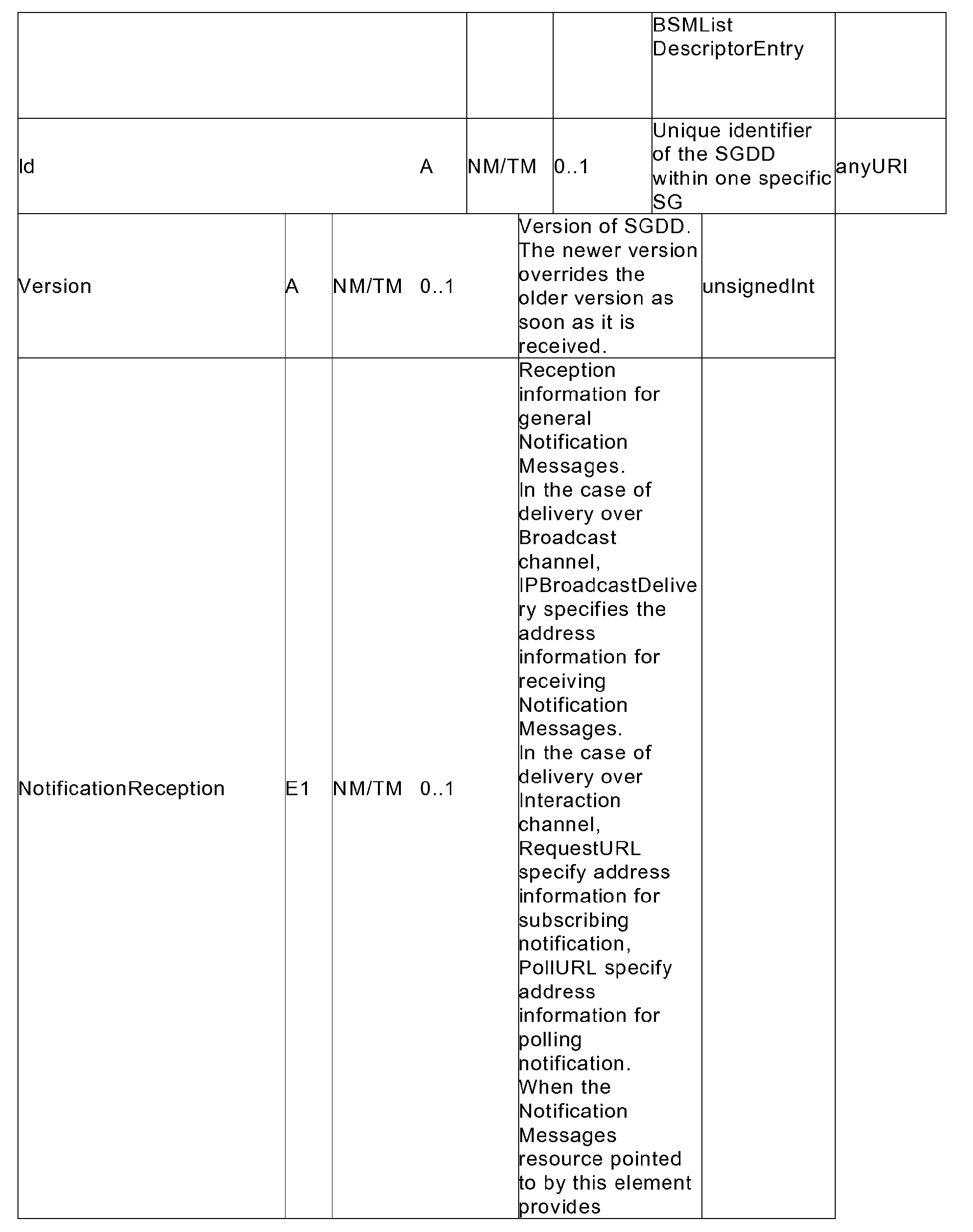

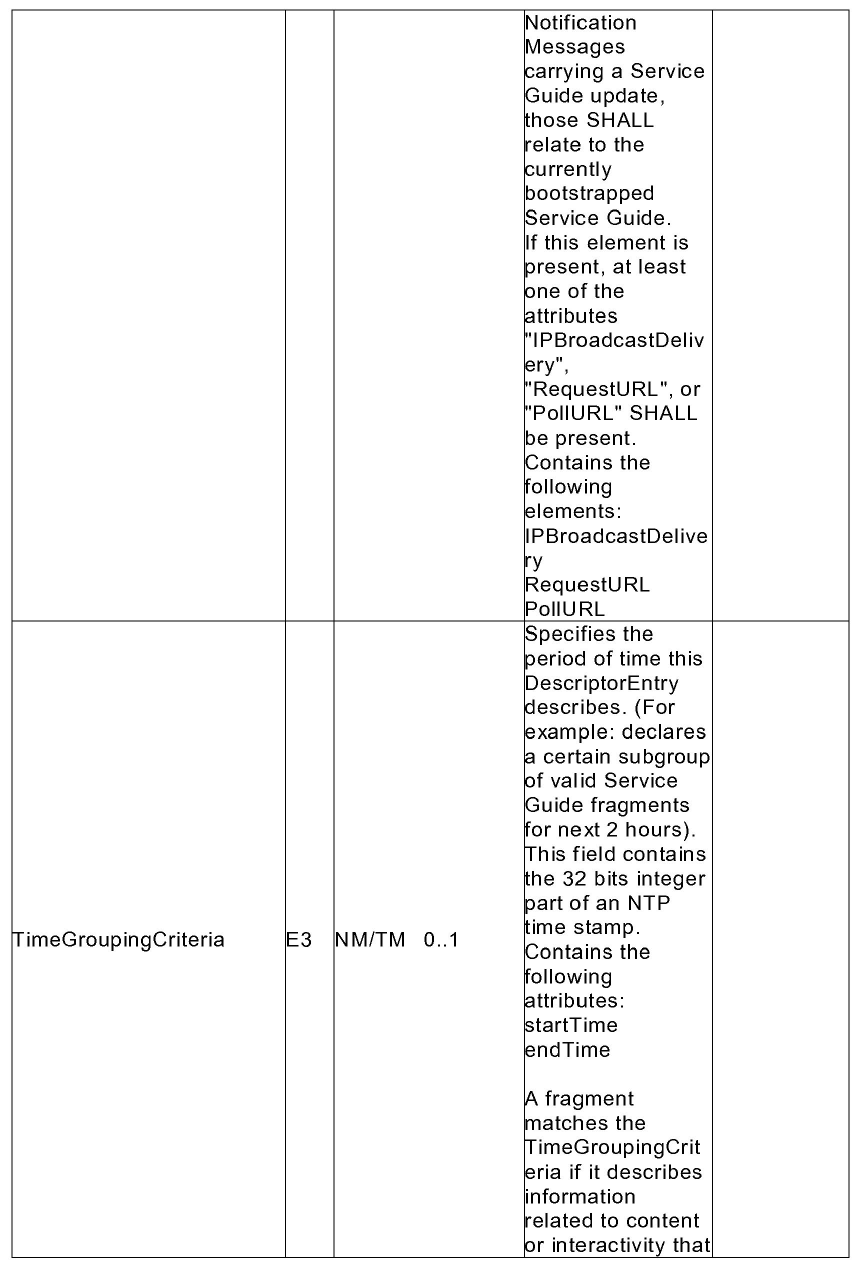

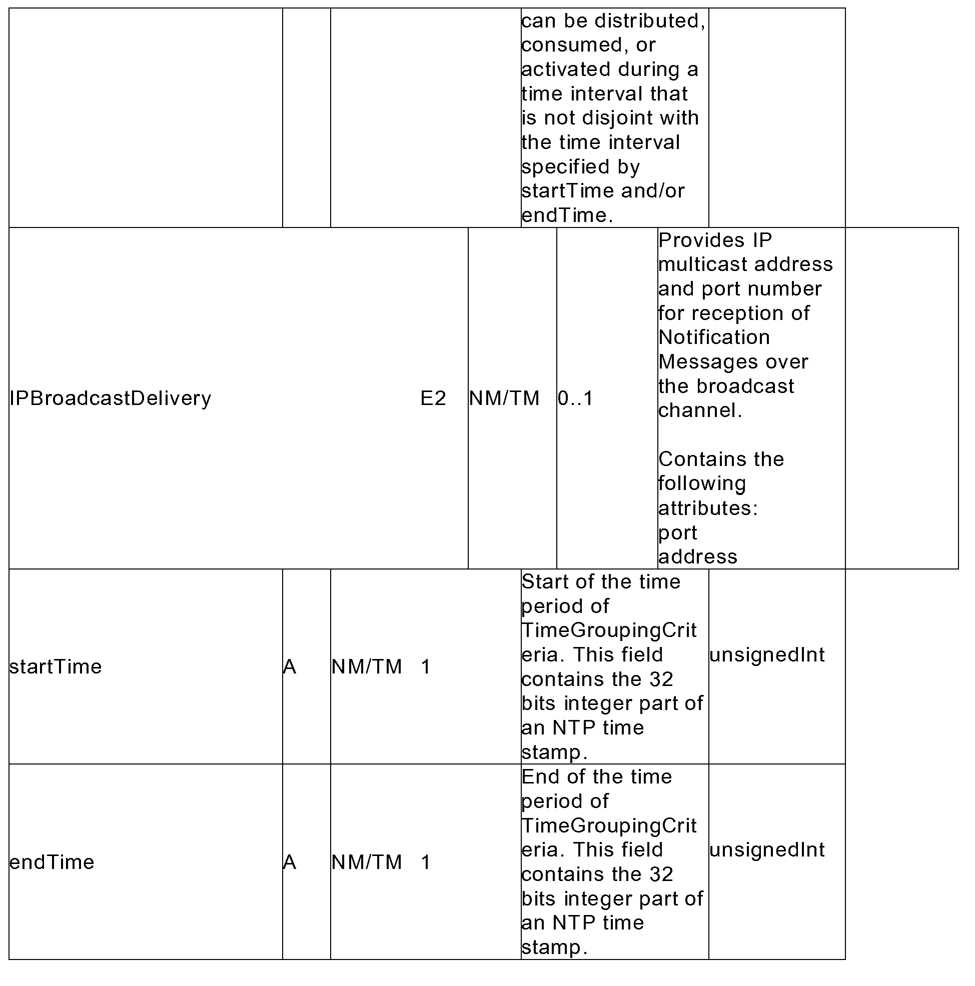

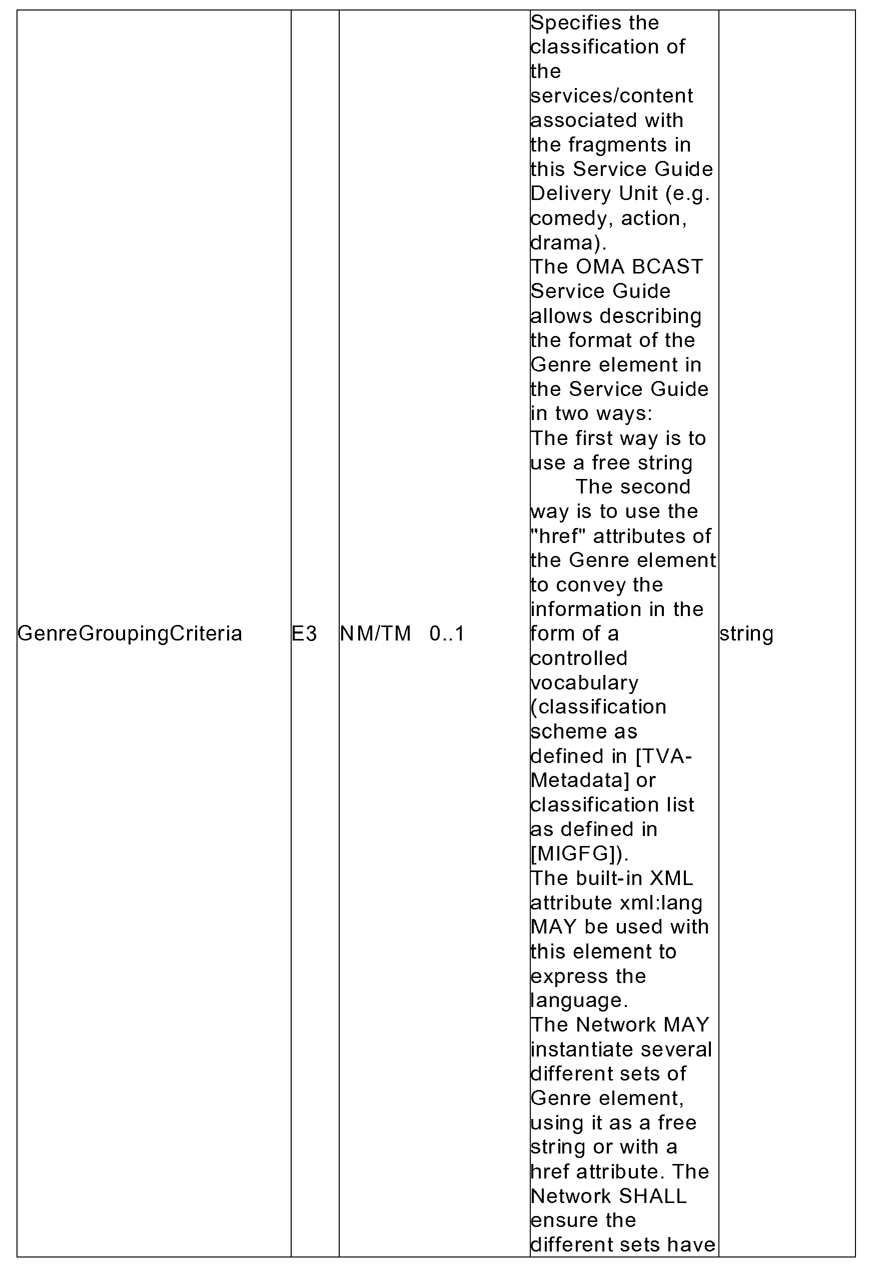

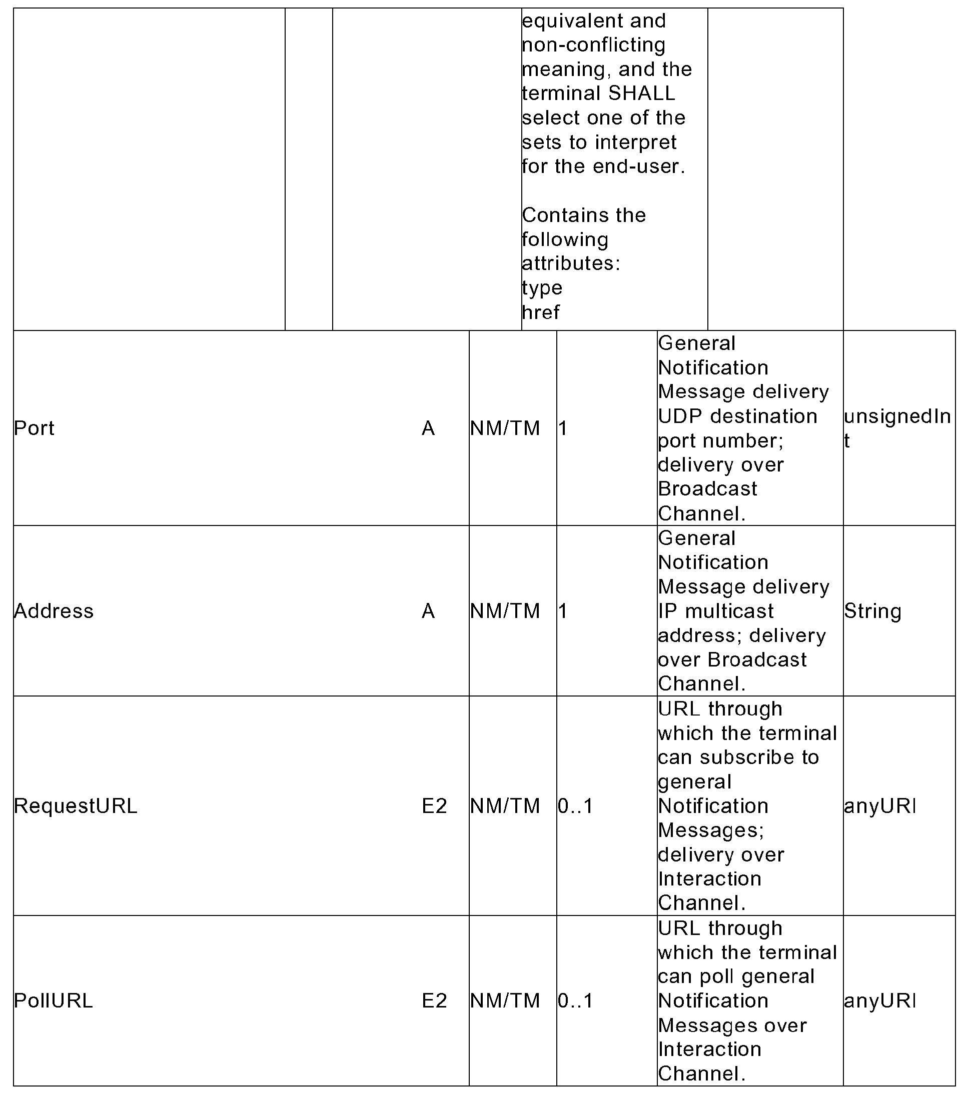

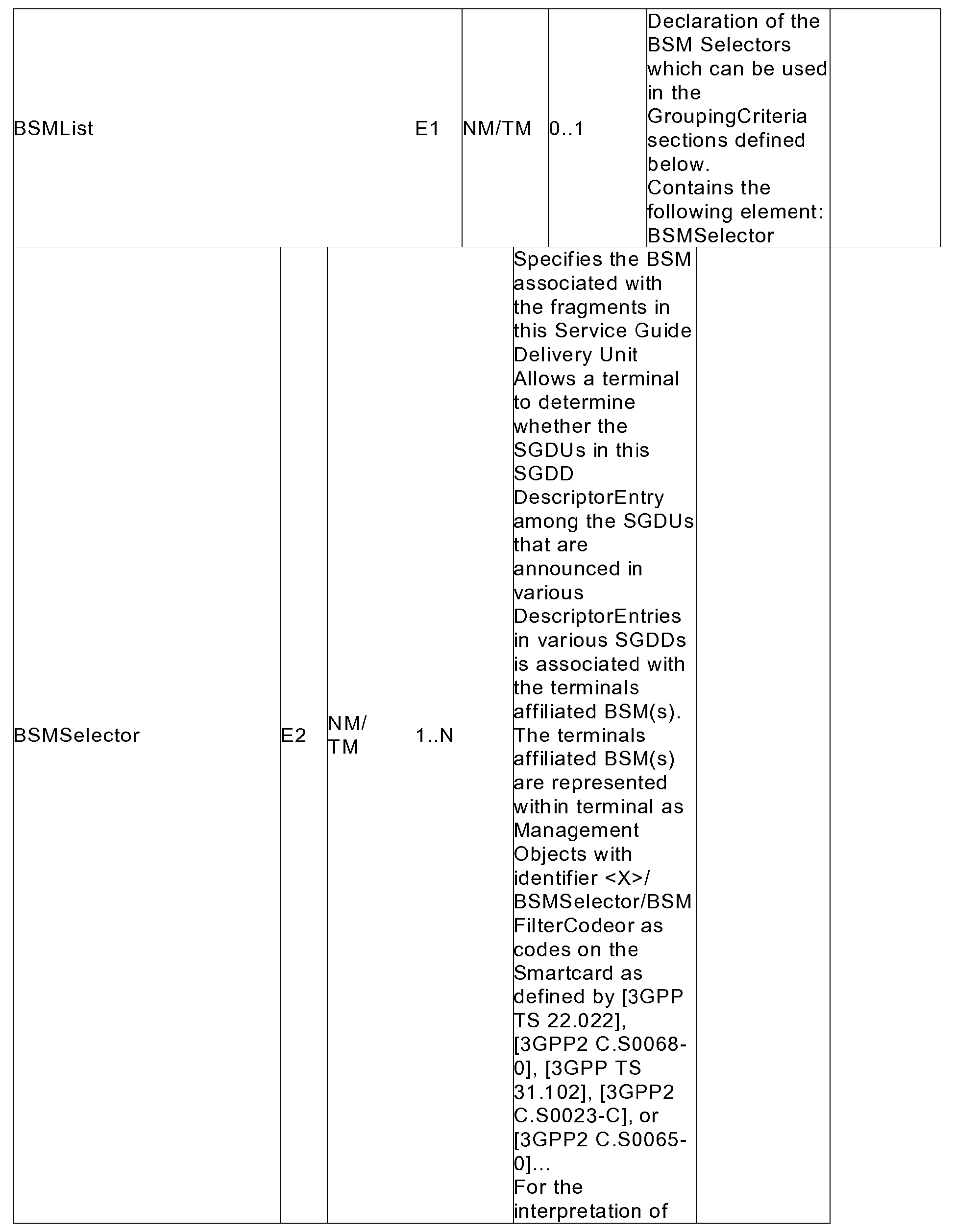

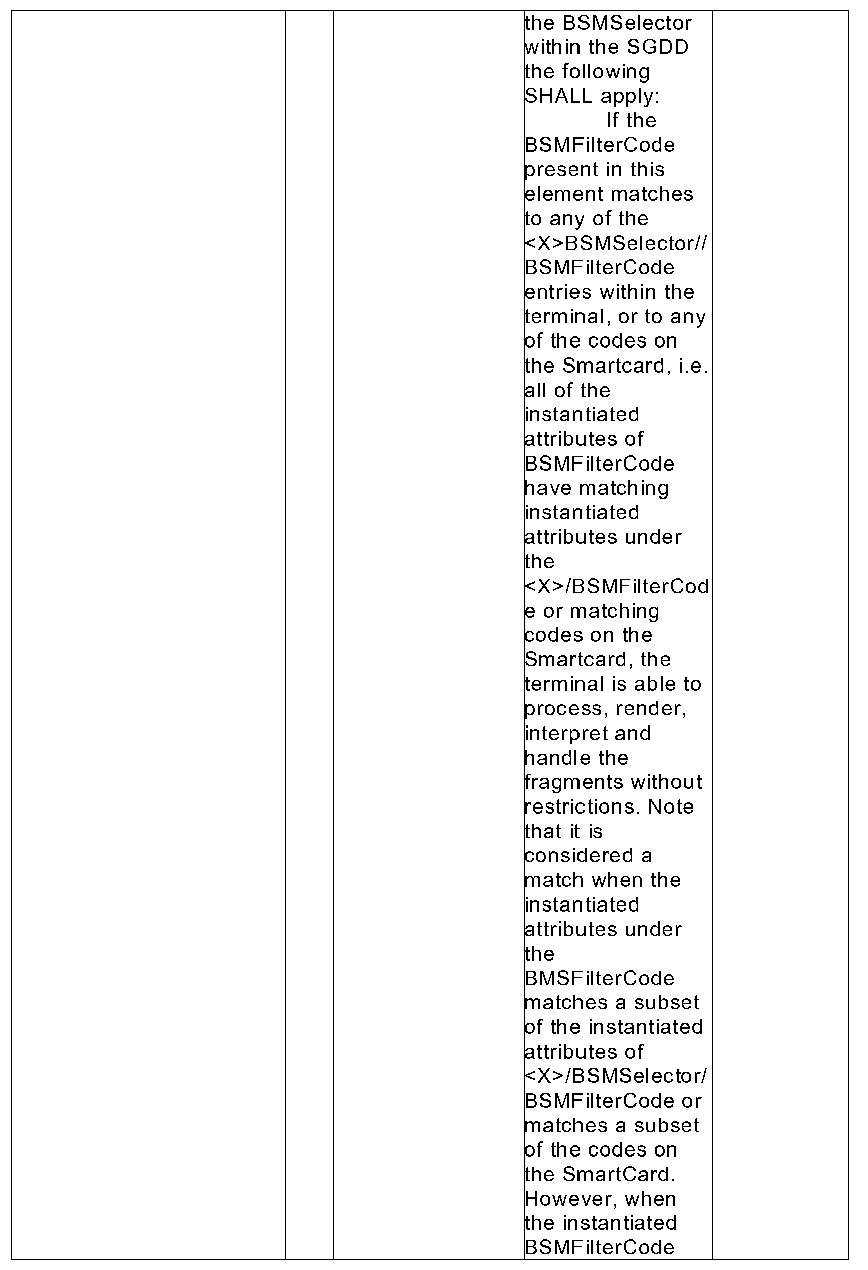

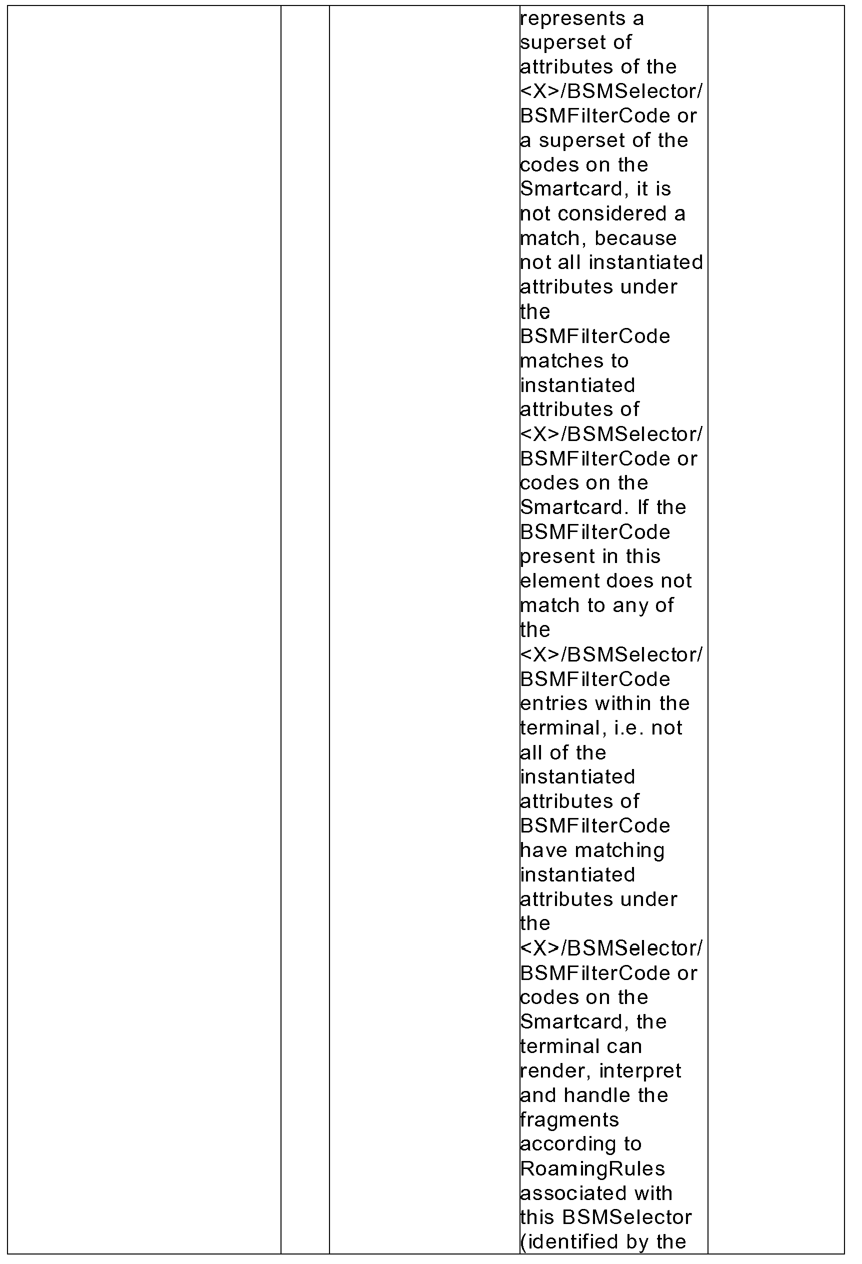

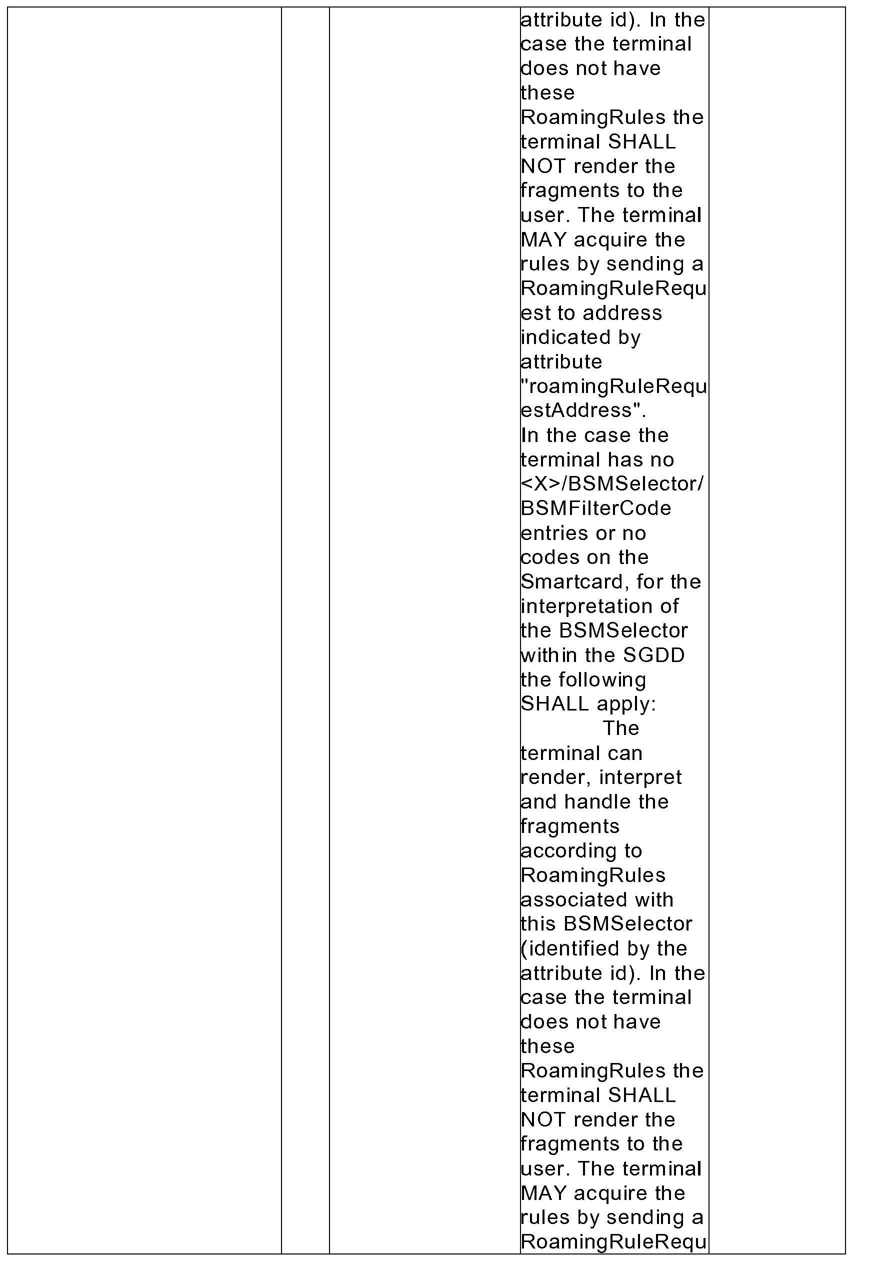

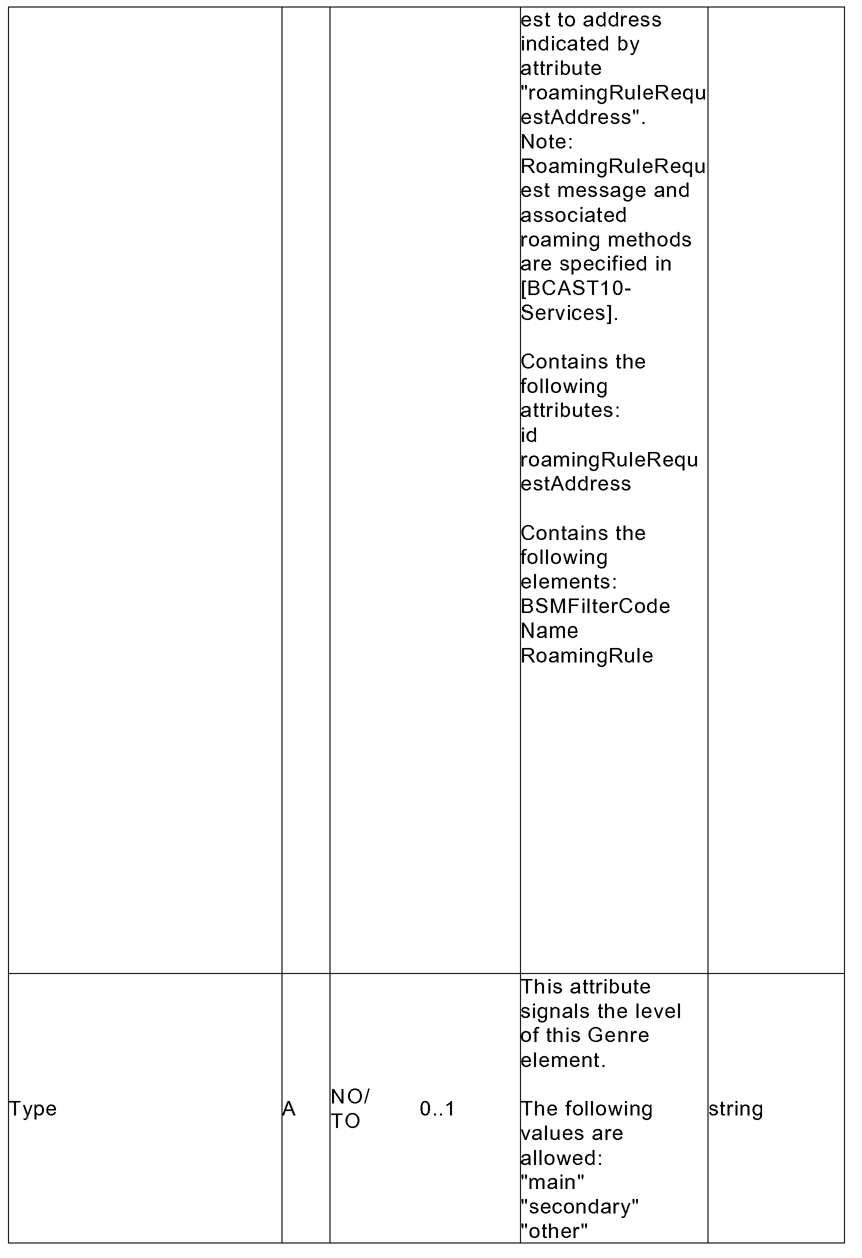

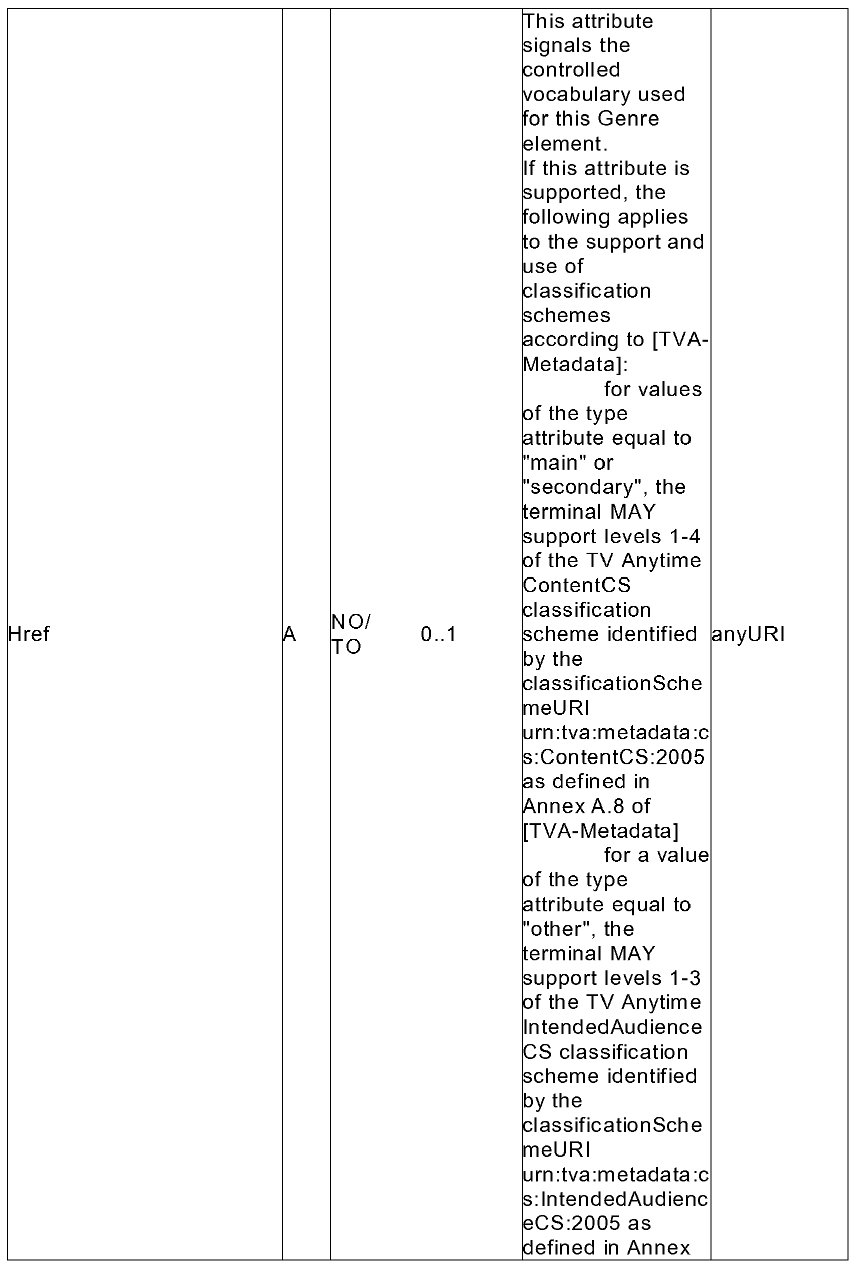

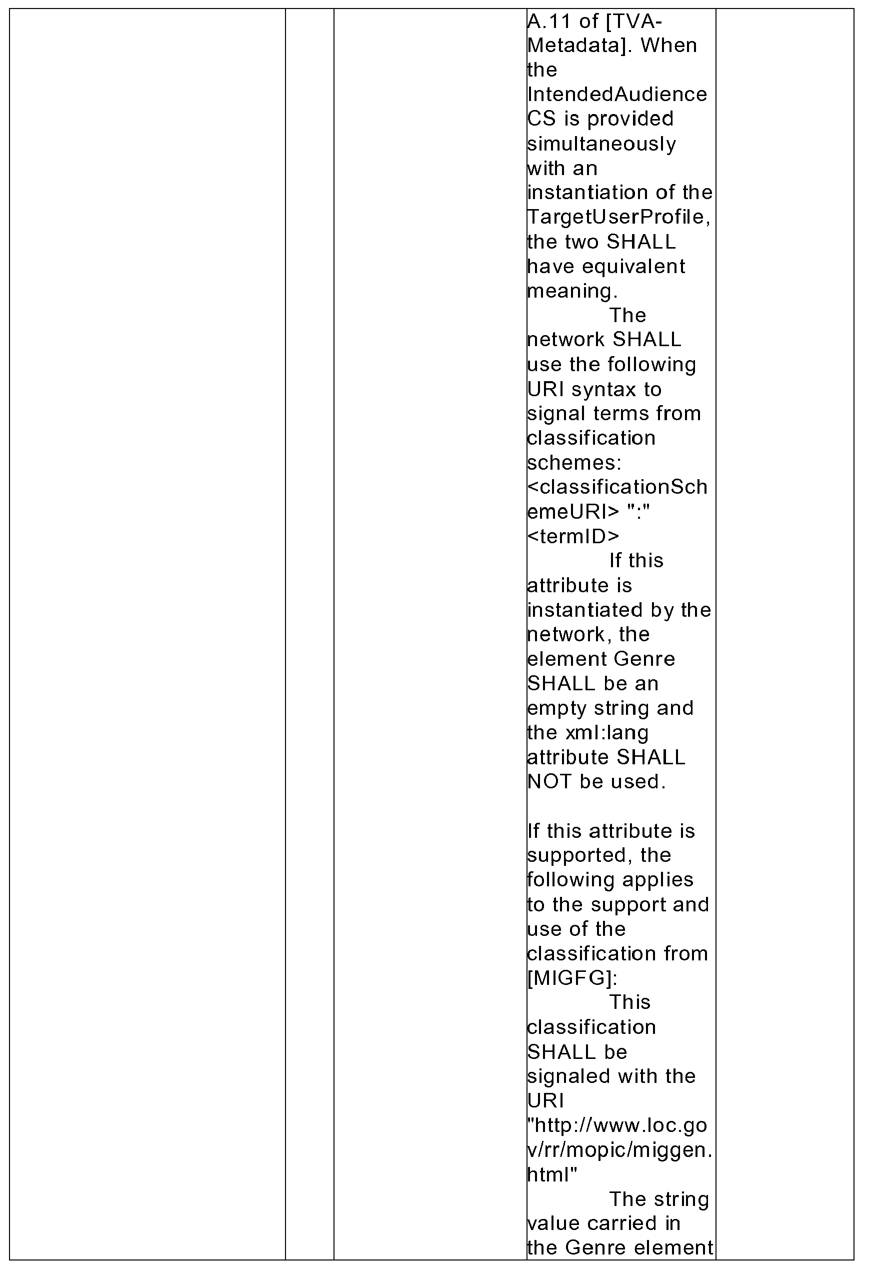

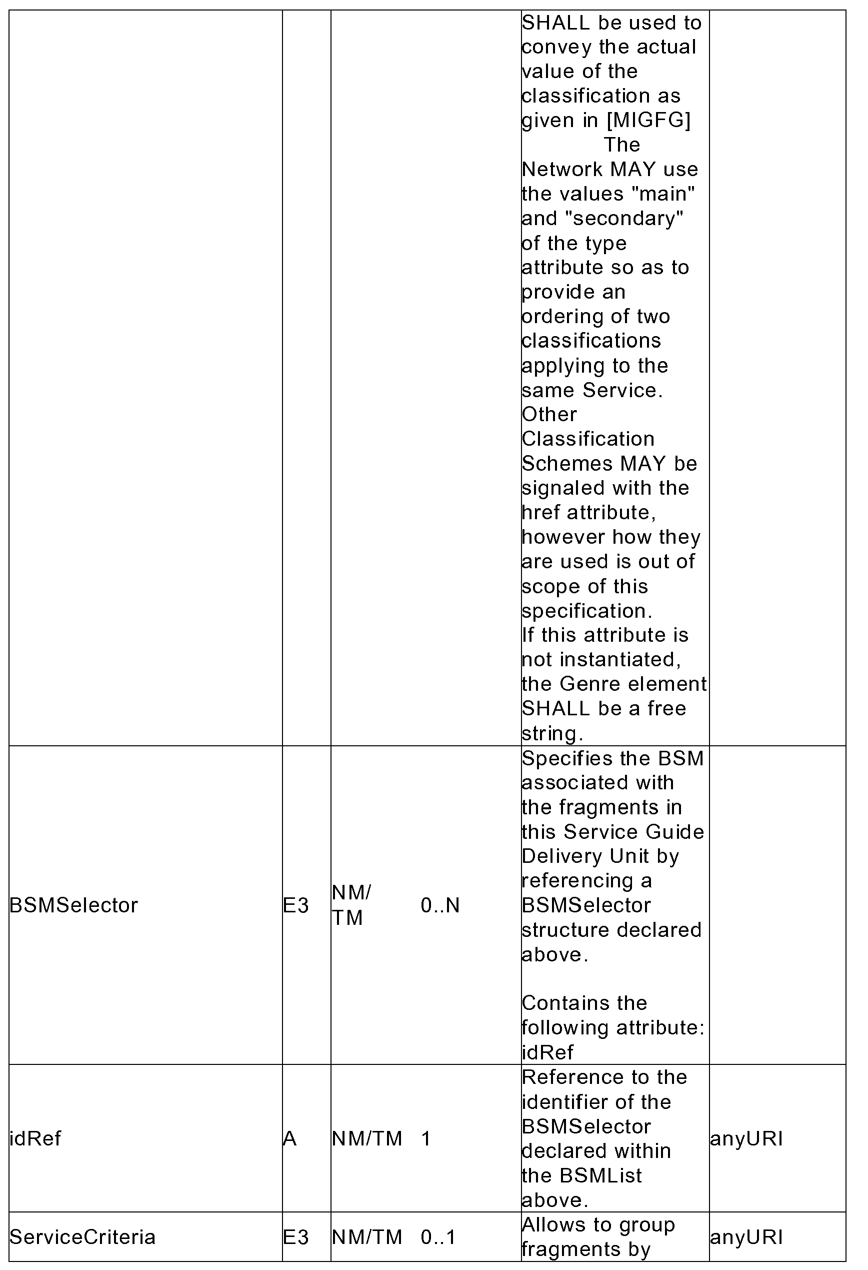

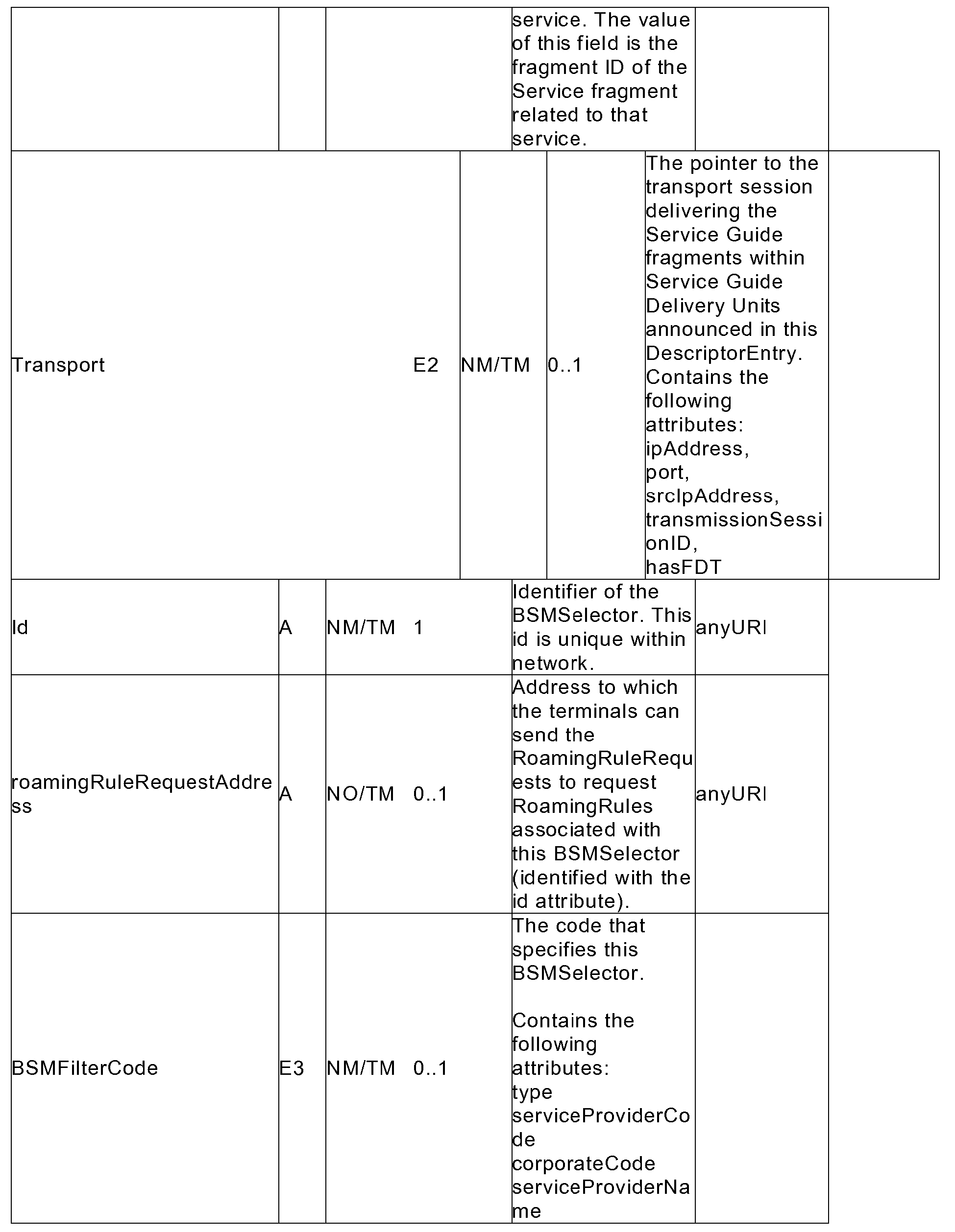

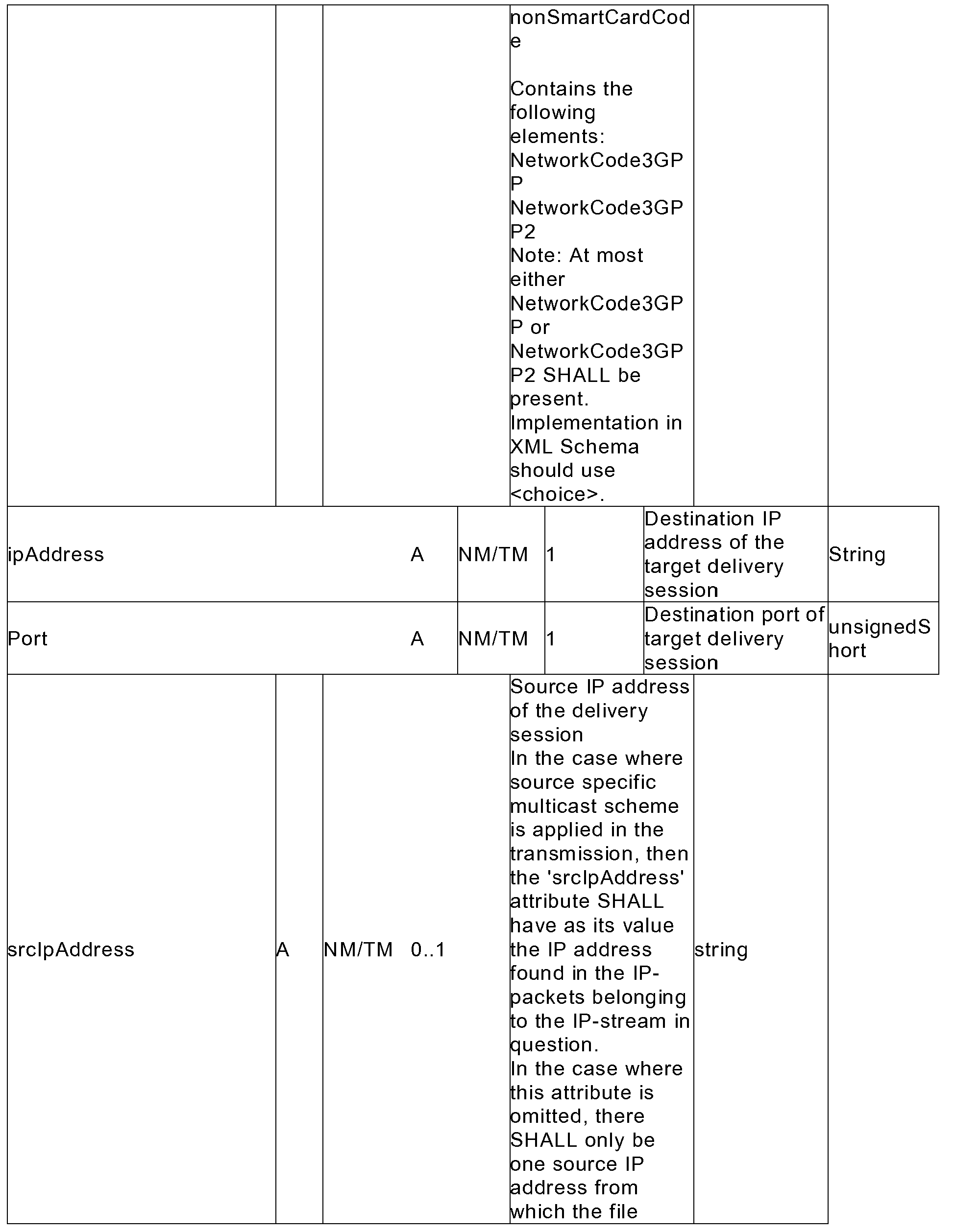

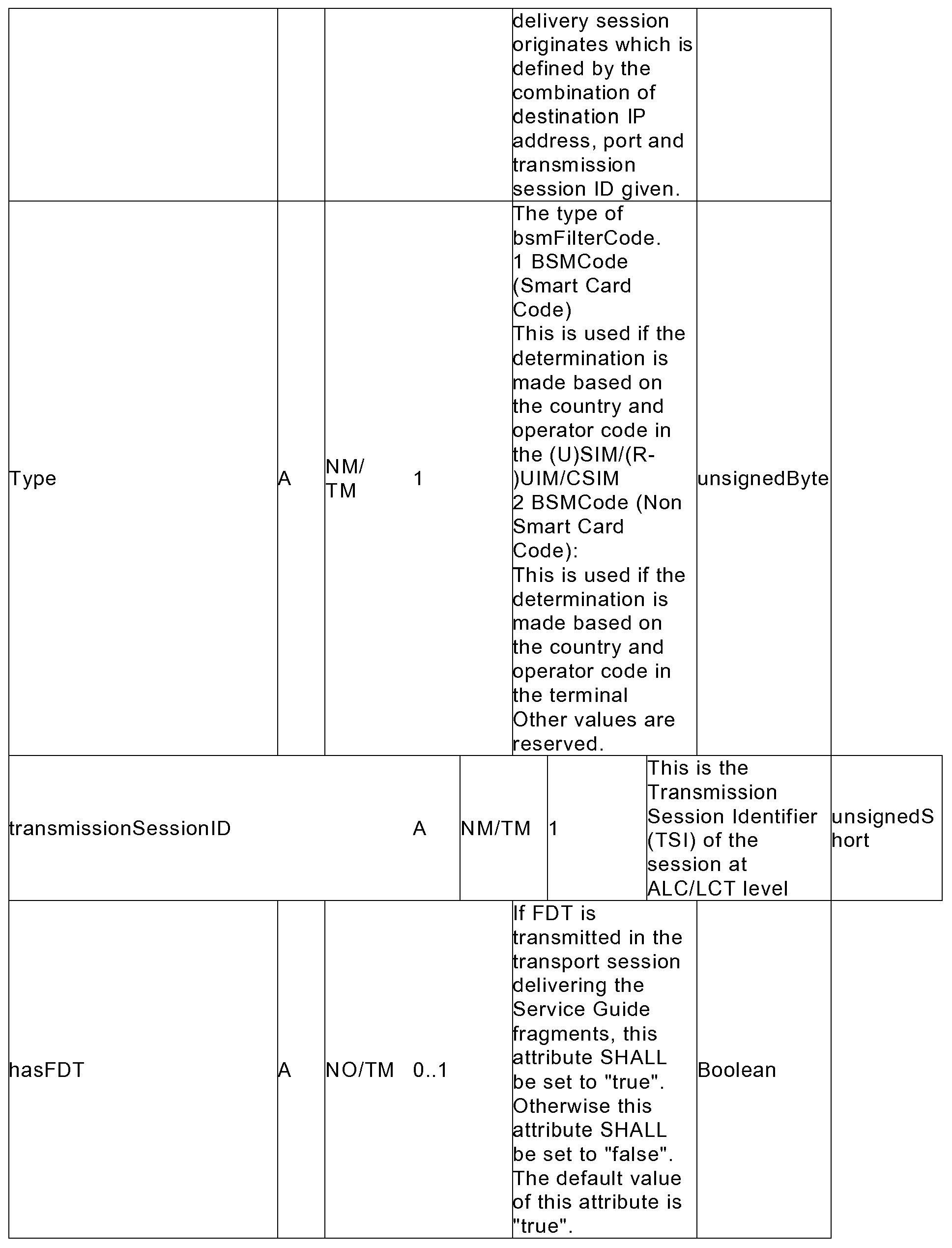

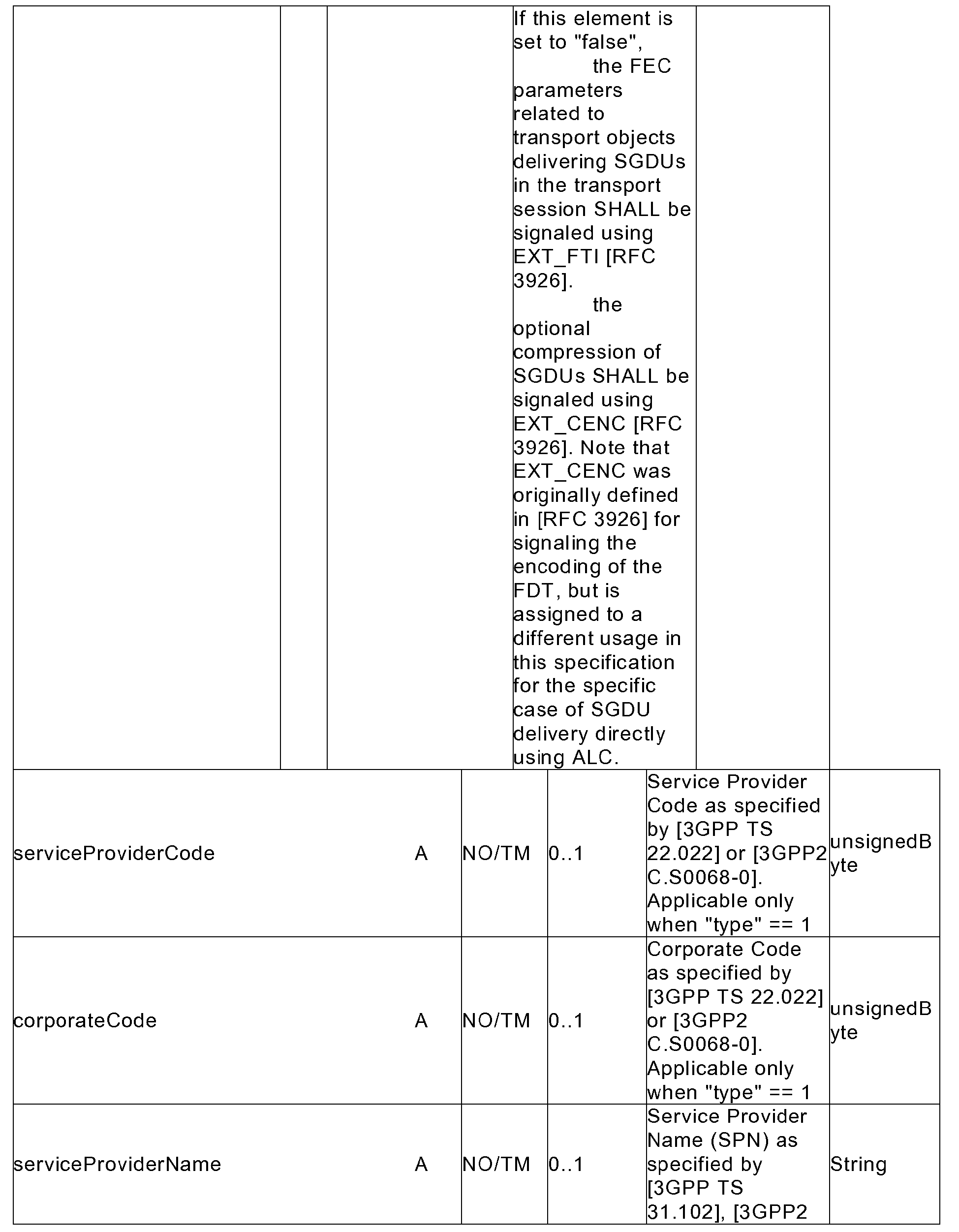

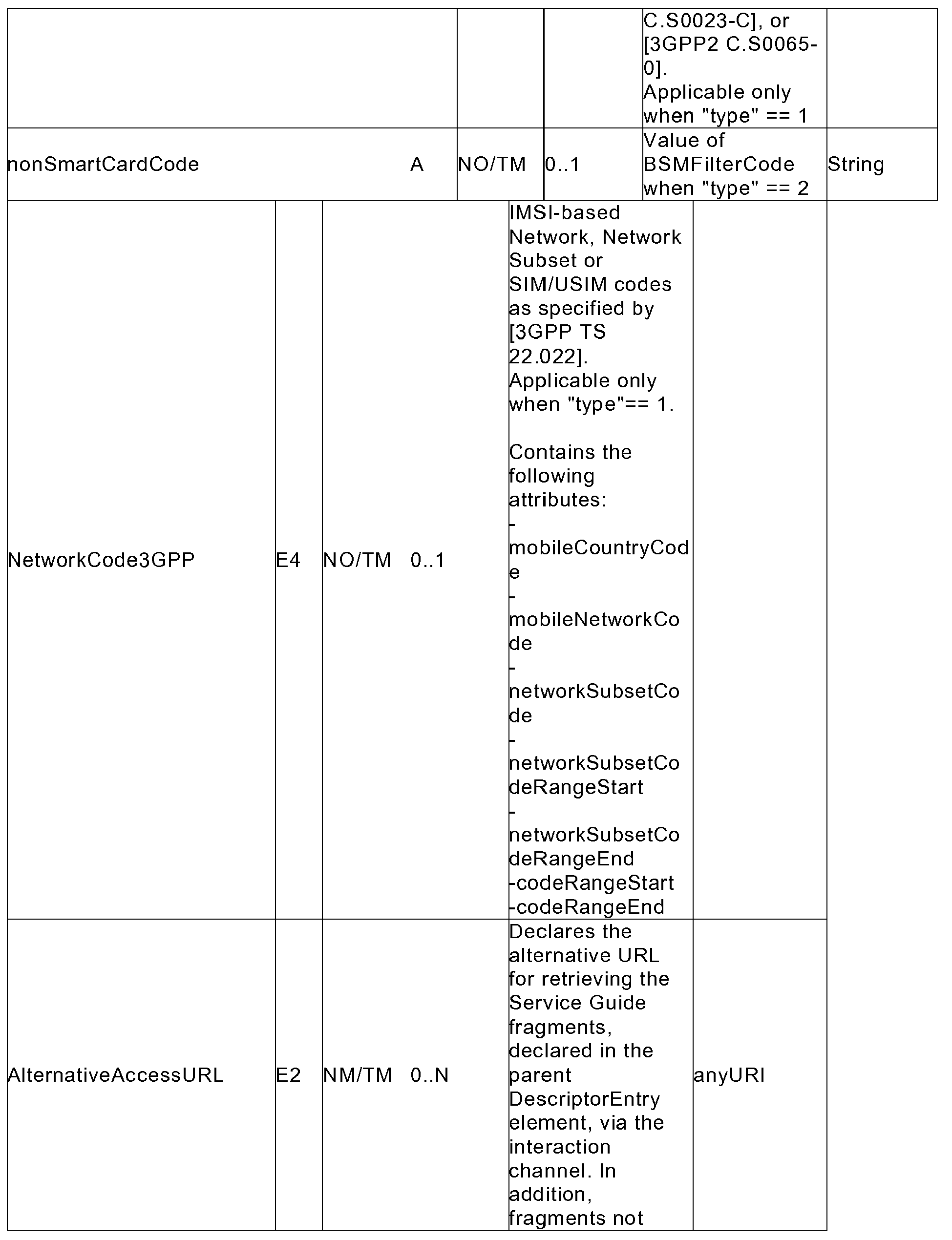

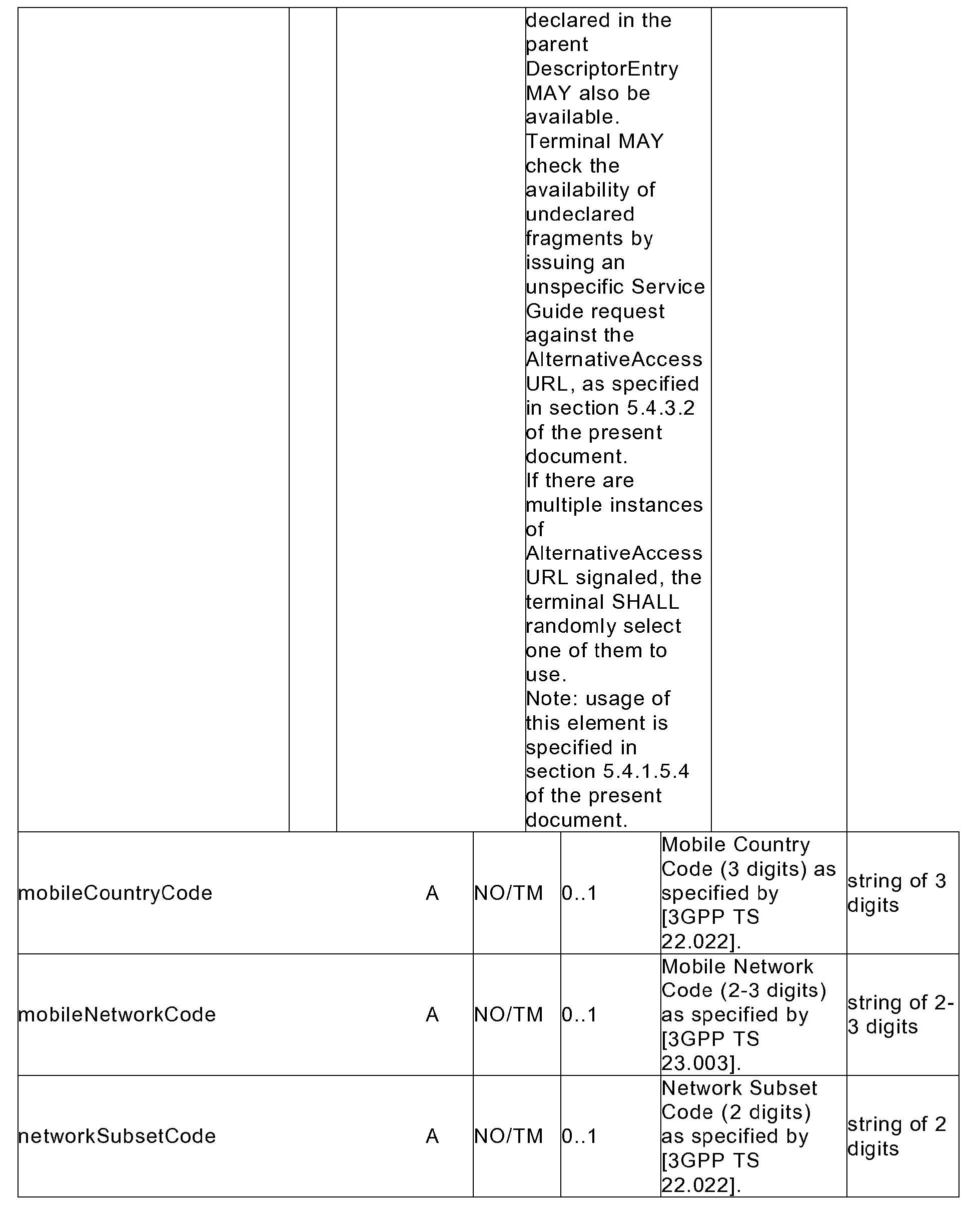

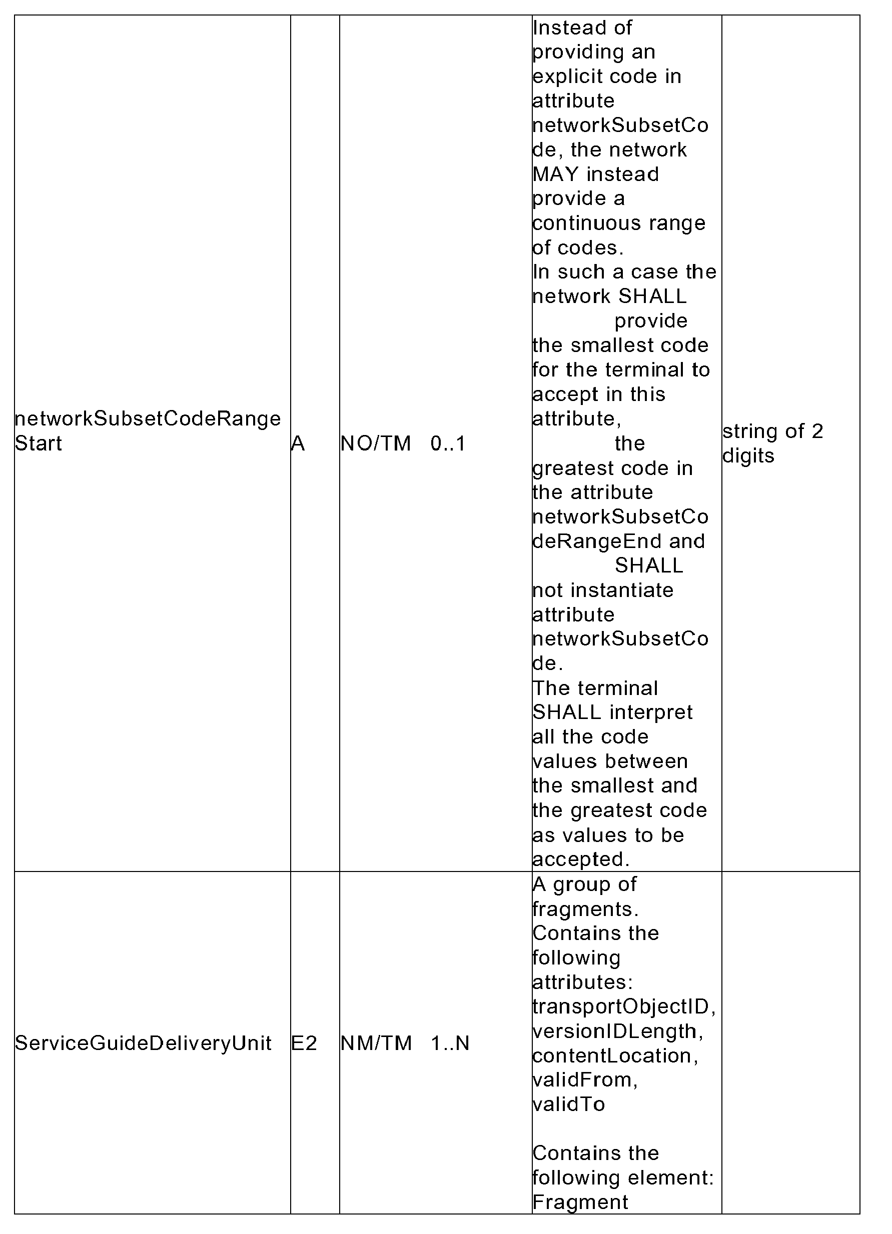

Table 2 describes the elements and attributes constituting a SGDD fragment 301. The SGDD 301 can be expressed in the form of an eXtensible Markup Language (XML) schema. Table 2 is partitioned into a plurality of parts for convenience, and individual parts describe corresponding items.

Actual data is provided in XML format according to the content of the SGDD 301. The information related to the service guide can be provided in various data format (such as binary) having the elements and attributes set to corresponding values, depending on the broadcast system.

The SGDD 301 transported on the SG Announcement Channel 300 includes the Description Entry 302. The Description Entry 302 contains the transport information about the SGDU 312 carrying the fragment information, and the terminal 105 checks the transport information of the SGDU 312 by means of the Description Entry 302. As shown in Table 2, the Description Entry 302 includes "GroupingCriteria", "ServiceGuideDeliveryUnit", "Transport", and "AlternativeAccessURI".

The transport-related channel information is provided by the "Transport" or "AlternativeAccessURI", and the actual value of the corresponding channel is provided by "ServiceGuideDeliveryUnit".

Also, the upper layer group information about the SGDU 312 such as "Service" and "Genre" can be provided by "GroupingCriteria". The terminal 105 can receive and present all of the SGDUs 312 to the user according to the corresponding group information.

Once the transport information has been checked, the terminal 105 accesses all of the Delivery Channels acquired from the SGDD 301 on the SG Delivery Channel 310 to receive the actual SGDU 312.

The SG Delivery Channels 310 can be identified by using the "GroupingCriteria". In the case of time grouping, the SGDU can be transported with a time-based transport channel such as Hourly SG Channel 311 and Daily SG Channel.

Accordingly, the terminal 105 can selectively access the channels and receive all the SGDUs existing on the corresponding channels. Once all of the SGDUs have been completely received on the SG Delivery Channels 310, the terminal 105 checks all of the SG fragments 320 (211, 212, 213, 221, 222, 223, 231, 232, 241, and 251 in FIG. 2) carried by the SGDUs received on the SG Delivery Channels and assembles the SG fragments to displays an actual service guide on the screen.

In an embodiment of the present invention, all of the service guide fragments can be output with the RMS template. The description of the service guide provisioning method based the RMS template according to an embodiment of the present invention is described hereinafter.

RMS is the acronym standing for "Rich Media Solution" which is defined in the OMA BCAST standard to comprehensively express the rich media technologies.

If the RMS is directly applied to the service guide fragment including the service guide information in order to display the service guide, the legacy BCAST terminals do not interpret or process the newly introduced service guide due the lack of compatibility. In order to solve the compatibility problem, the RMS template is configured such that the terminals supporting the RMS, display the service guide using the RMS template, while the legacy terminals display the service guide in their own display format.

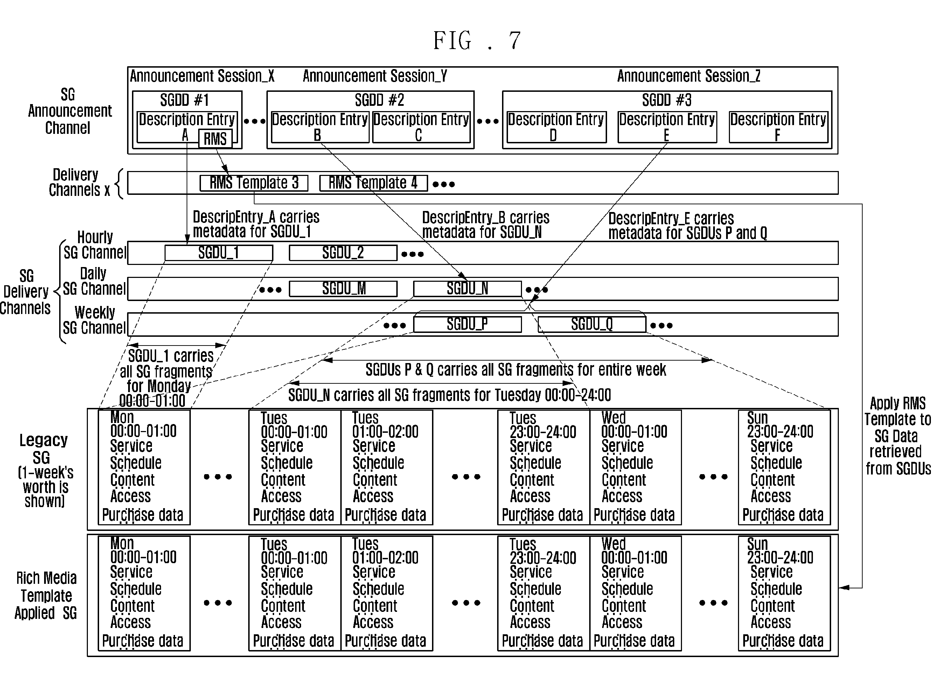

The information on the RMS template (hereinafter called RMS information) is transported on the SGDD. In a first embodiment of the present invention, the SGDD includes the RMS information as shown in FIG. 7 and Table 3a in addition to the information as shown in Table 2.

Table 3a describes the RMS information according to the first embodiment of the present invention.

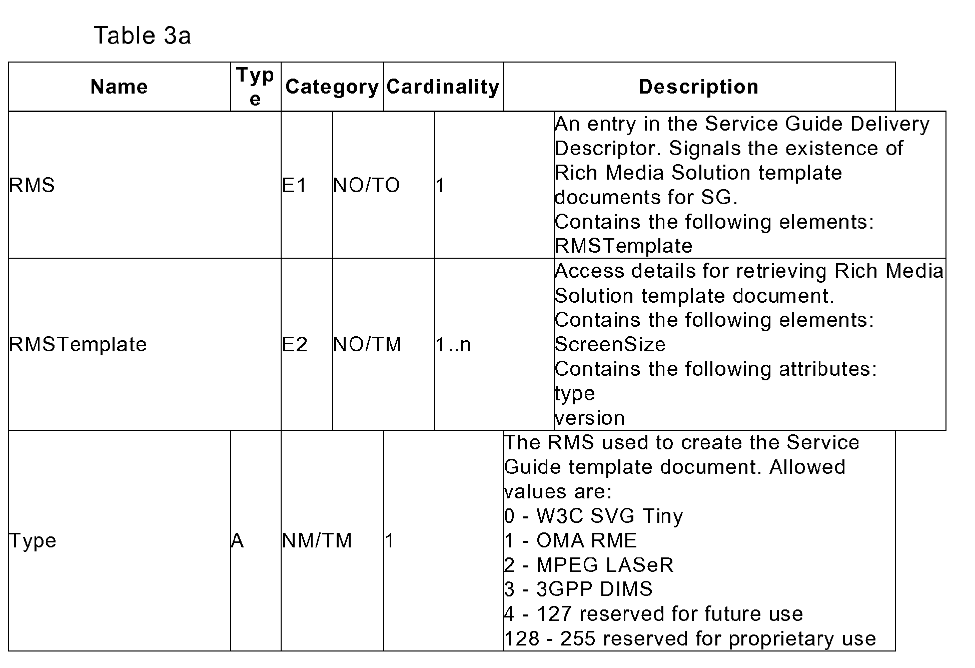

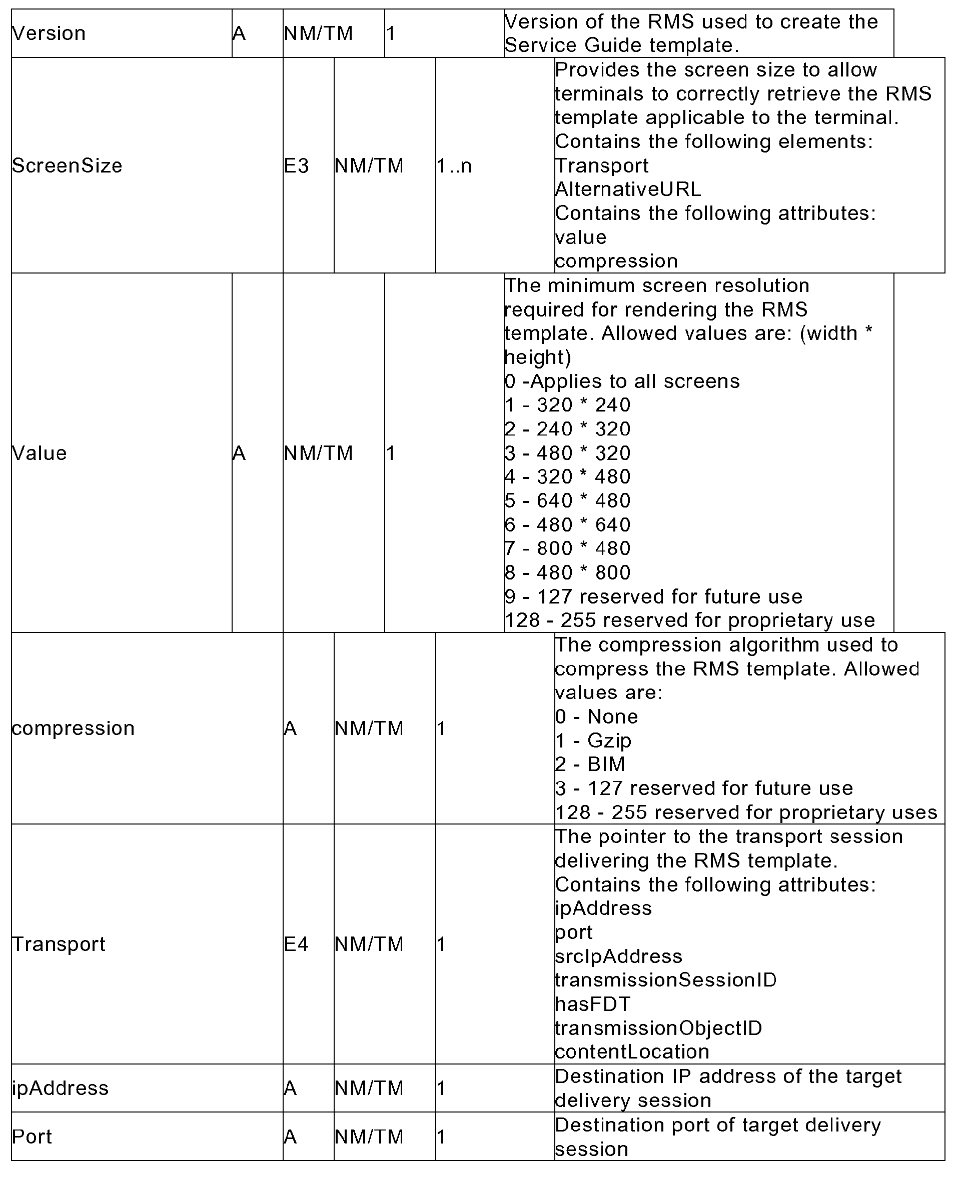

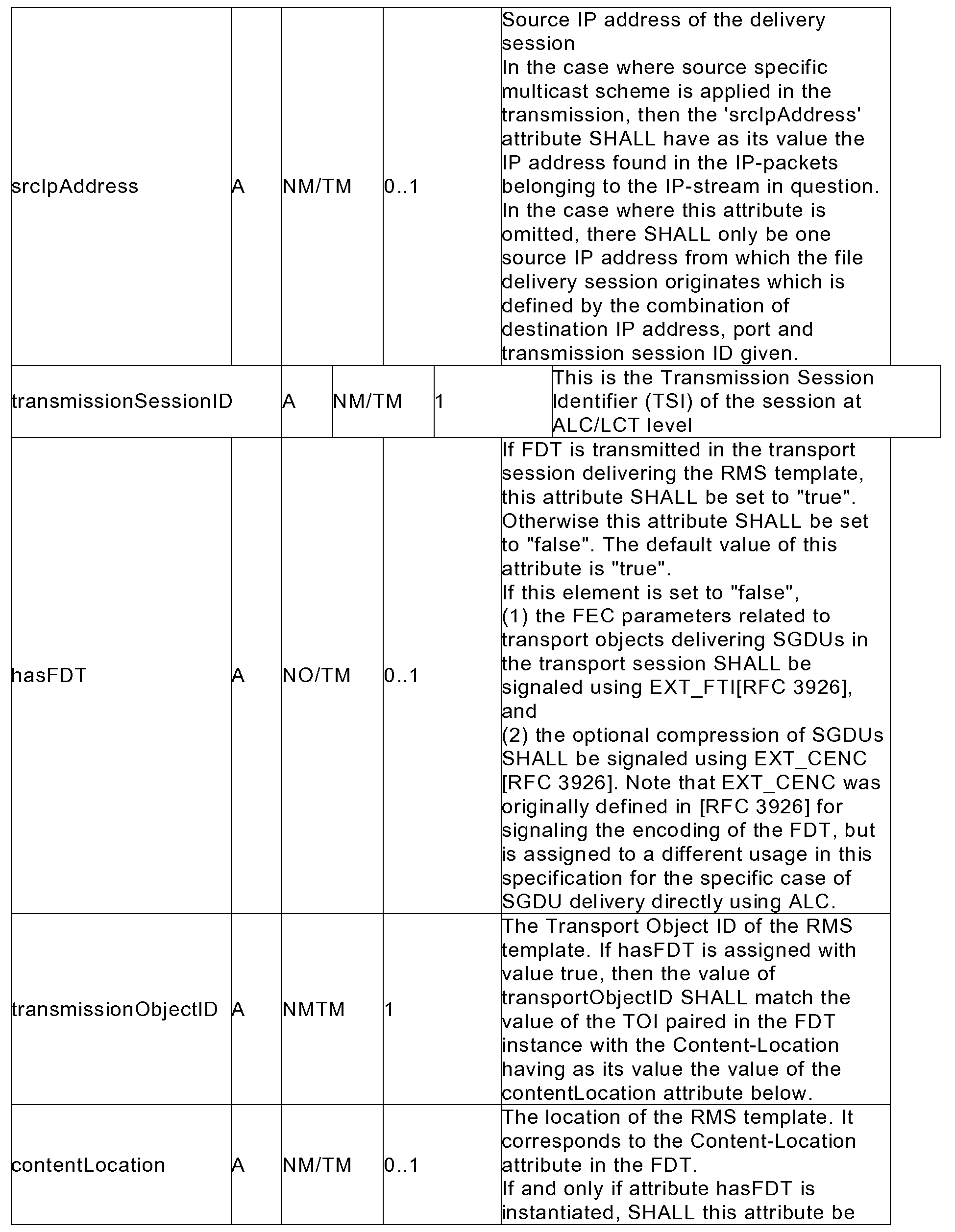

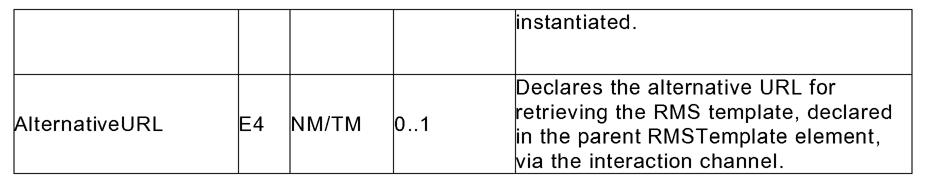

In Table 3a, the data type field as described with reference to Table 1 is omitted.

Referring to Table 3a, the RMS information according to an embodiment of the present invention includes information on an RMS template flag for indicating whether the RMS template exists, information about the RMS template, information about the requirement for executing the RMS template, and information on the transport of the RMS template.

The RMS information includes the elements and attributes such as RMS, RMSTemplete, Type, Version, ScreenSize, Value, Compression, Transport, IpAddress, port, srcIPAddress, TransmissionSessionID, hasFDT, TransmissionObjectID, contentLocation, and AlternativeURL.

The RMS is a higher element used to indicate whether an RMS template for use to display the service guide exists.

The RMSTemplate is an element for indicating the at least one RMS technology available with the RMS template.

The Type is an attribute that indicates the RMS used to create the service guide template document.

The Version is an attribute that indicates the version of the RMS used to create the service guide template.

In Table 3a, the value "W3C" of the Type attribute includes the SVG, SVB Basic, SVG mobile, etc. that are derived from the Scalable Vector Graphics (SVG).

The ScreenSize is an element for providing the screen size to allow the terminals to correctly retrieve the RMS template applicable to the terminal.

The Value is an attribute indicating the minimum screen resolution required for rendering the RMS template. Although the value of this attribute is expresses by "width * height" in Table 3a, the value can also be expressed by pixel resolution, diagonal length of the screen, or standardized formats such as Common Intermediate Format/Quarter Common Intermediate Format (CIF/QCIF).

The Compression is an attribute indicating whether or not the RMS is compressed and, if compressed, the compression algorithm used to compress the RMS template.

The Transport is an element for indicating the pointer to the transport session delivering the RMS template.

The IpAddress is an attribute for providing the information the destination address of the target delivery session, and the Port is an attribute for providing the information on the Destination port of the target delivery session.

The srclpAddress is an attribute for providing the information on the source IP address of the delivery session, i.e. the IP address required for the source specific multicasting.

The TransmissionSessionID is an attribute indicating the Transmission Session Identifier (TSI) of the session.

The hasFDT is an attribute for indicating whether the FDT is transmitted in the transport session delivering the RMS template. If this attributed is set to "true", the file name of the RMS template is indicated by using the contentLocation attribute such that the terminal 105 receives the RMS template.

The TransmissionObjectID is an attribute indicating the Transport Object ID of the RMS template.

The AlternativeURL is an element for providing the information used when the RMS template is delivered via one-to-one interaction channel.

In accordance with an embodiment of the present invention, the RMS information is transported on the SGDD, and the terminal receives the RMS template using the RMS information. As described with reference to FIGs. 2, 3, and 7, the terminal receives the service guide (service guide fragment) and outputs the received service guide using the RMS template.

In the second embodiment of the present invention, the SGDD includes the RMS information as shown in FIG. 7 and Table 3b in addition to the information as shown in Table 2. Table 3b describes the RMS information according to the second embodiment of the present invention. The RMS information represented by Table 3b is defined to support the case where multiple BCAST Subscription Managements (BSMs) share the SGDD.

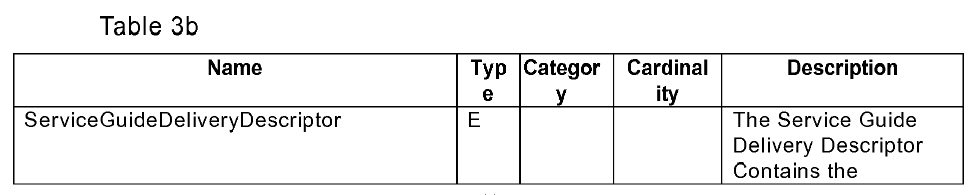

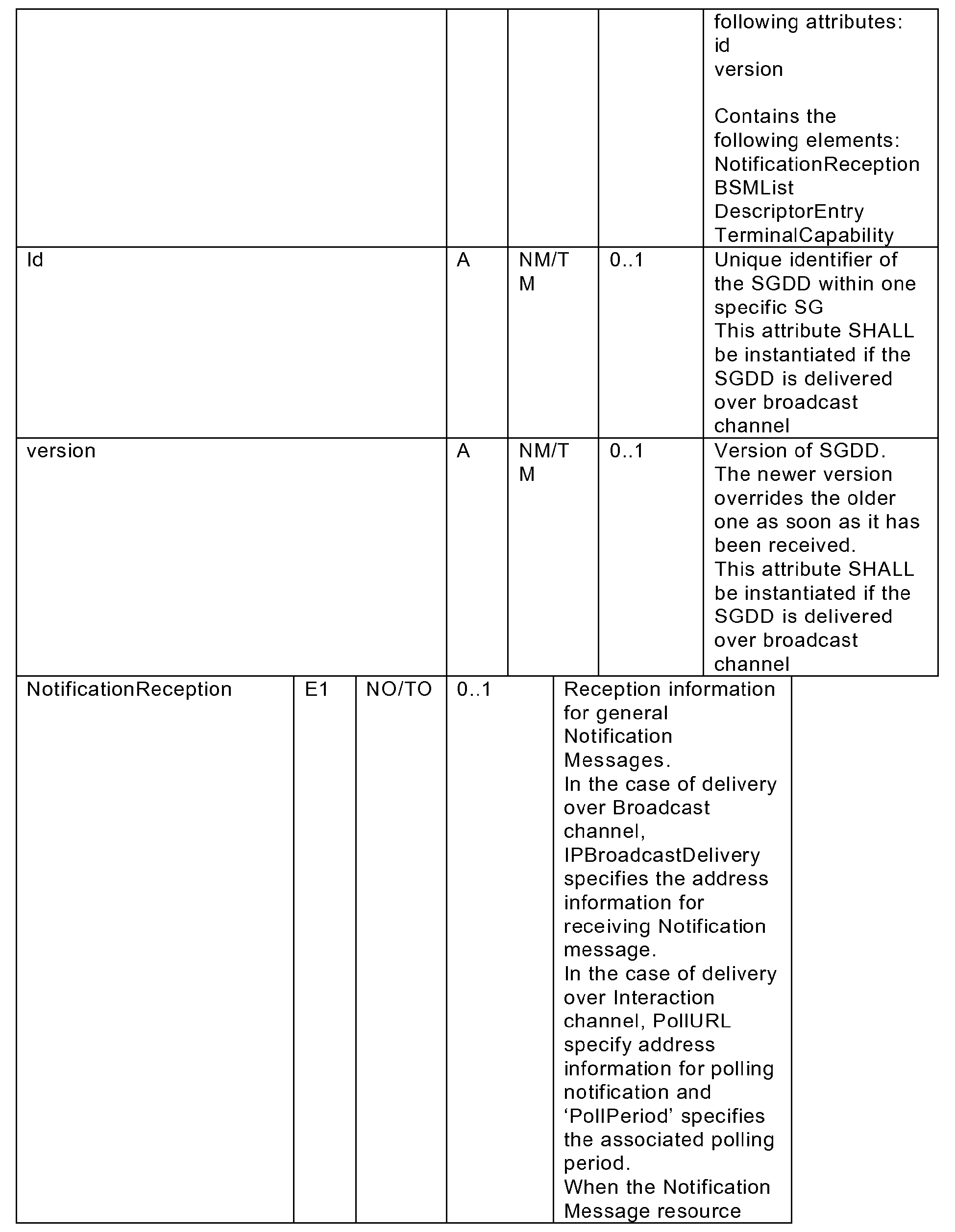

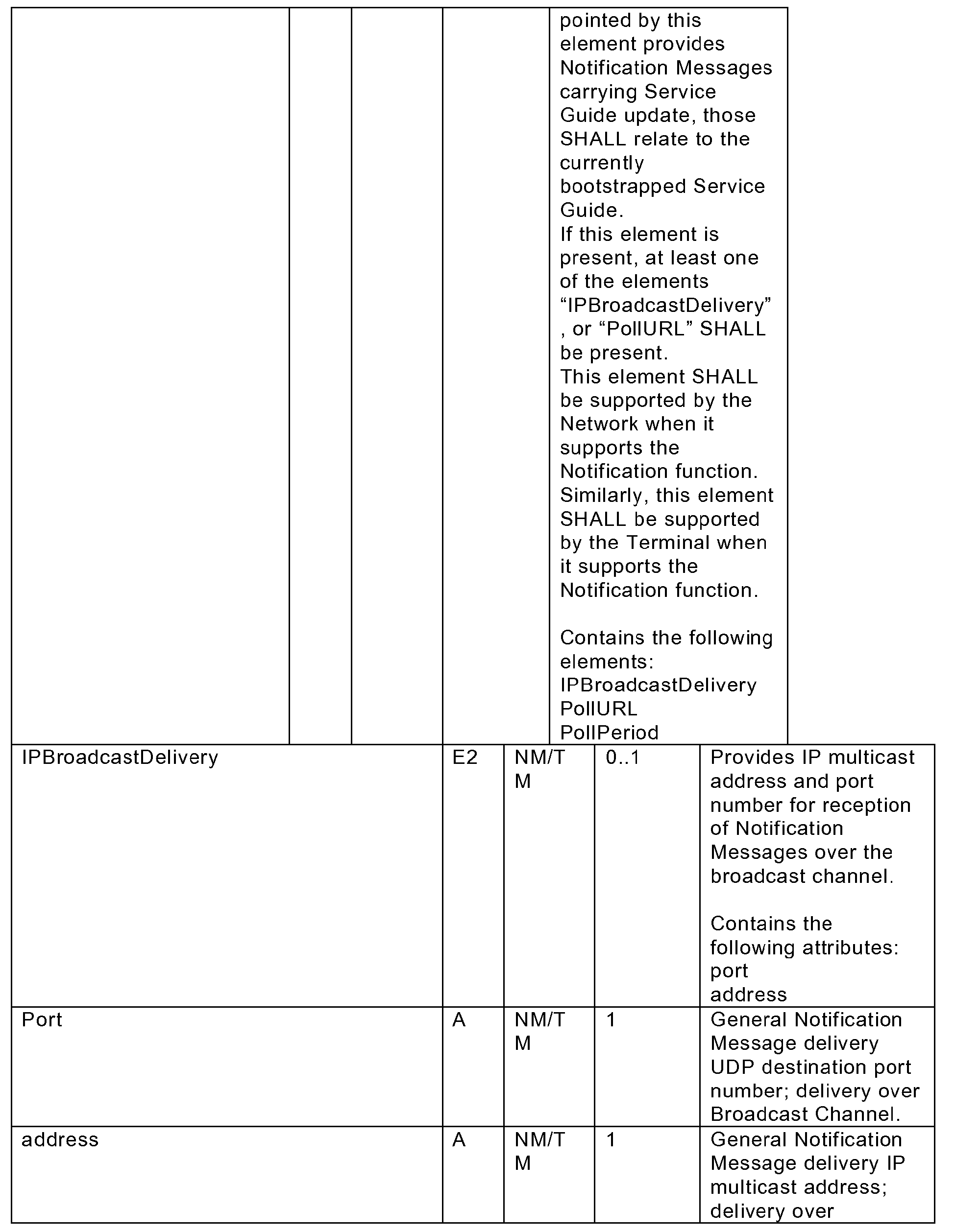

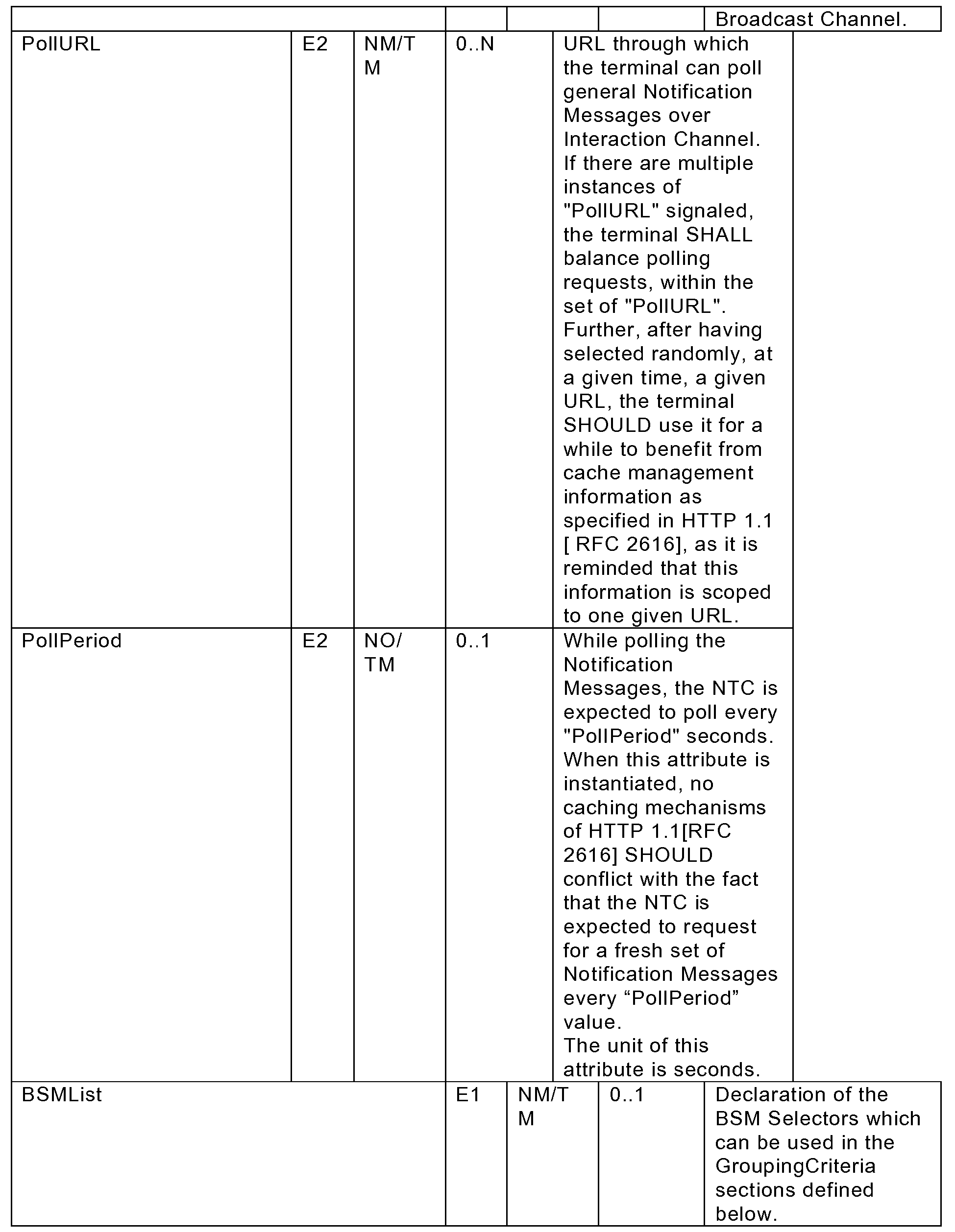

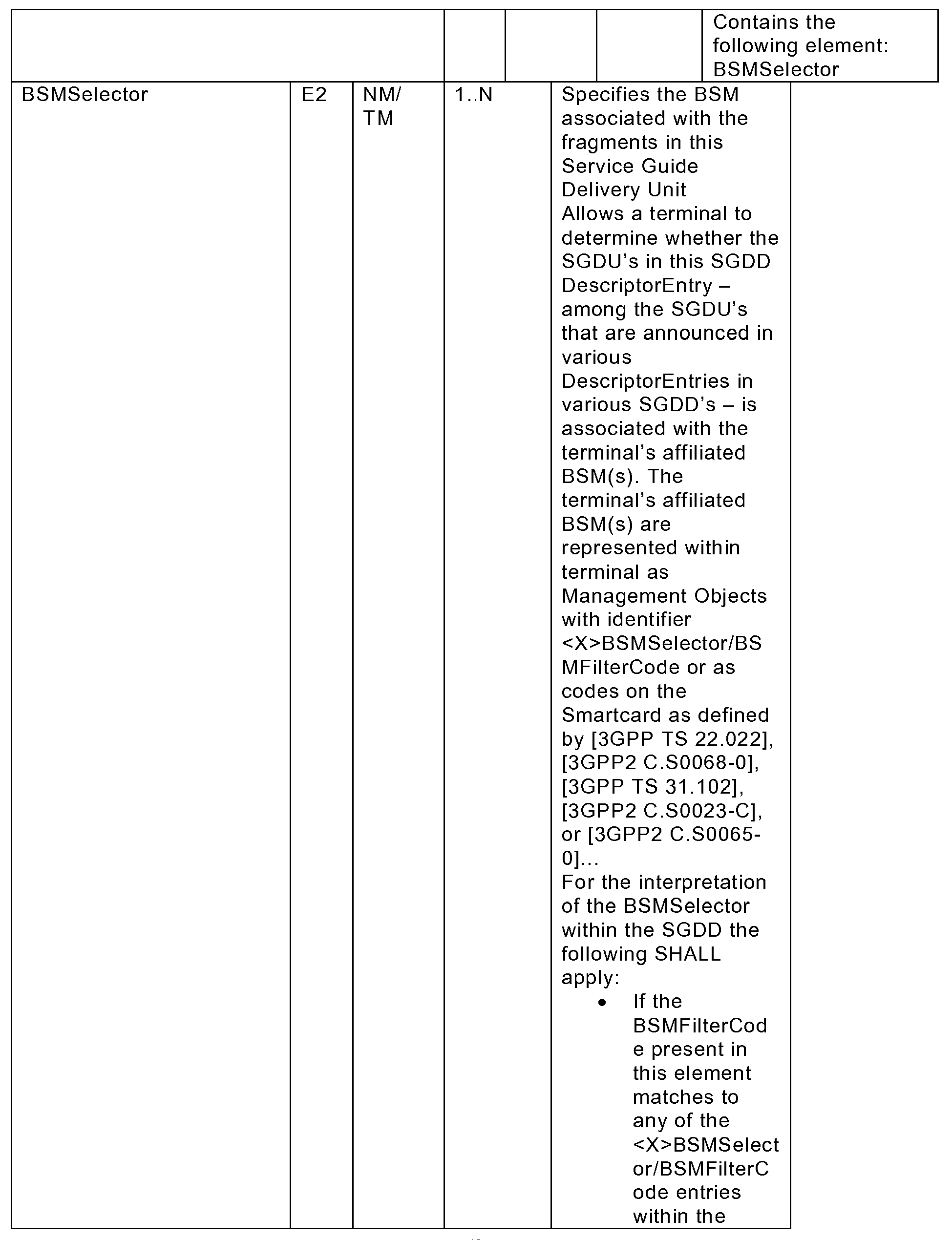

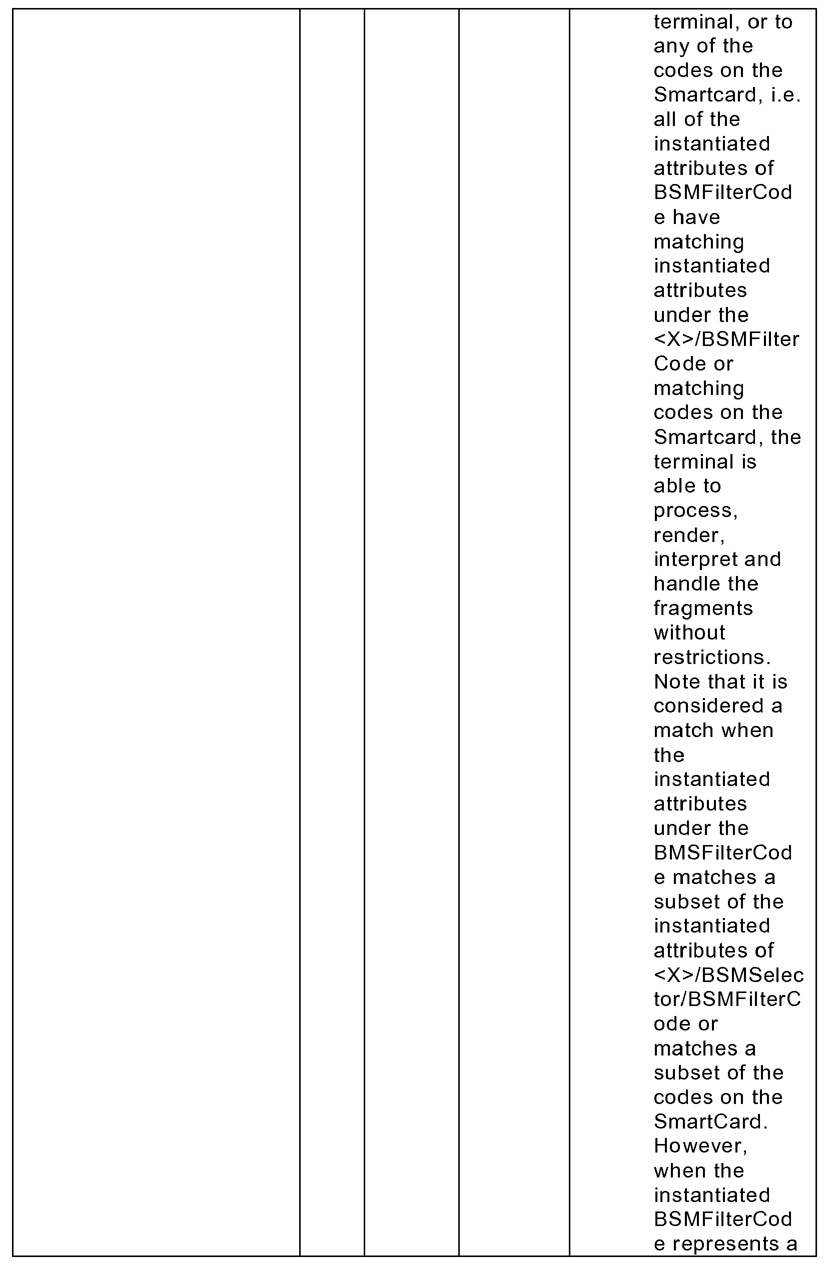

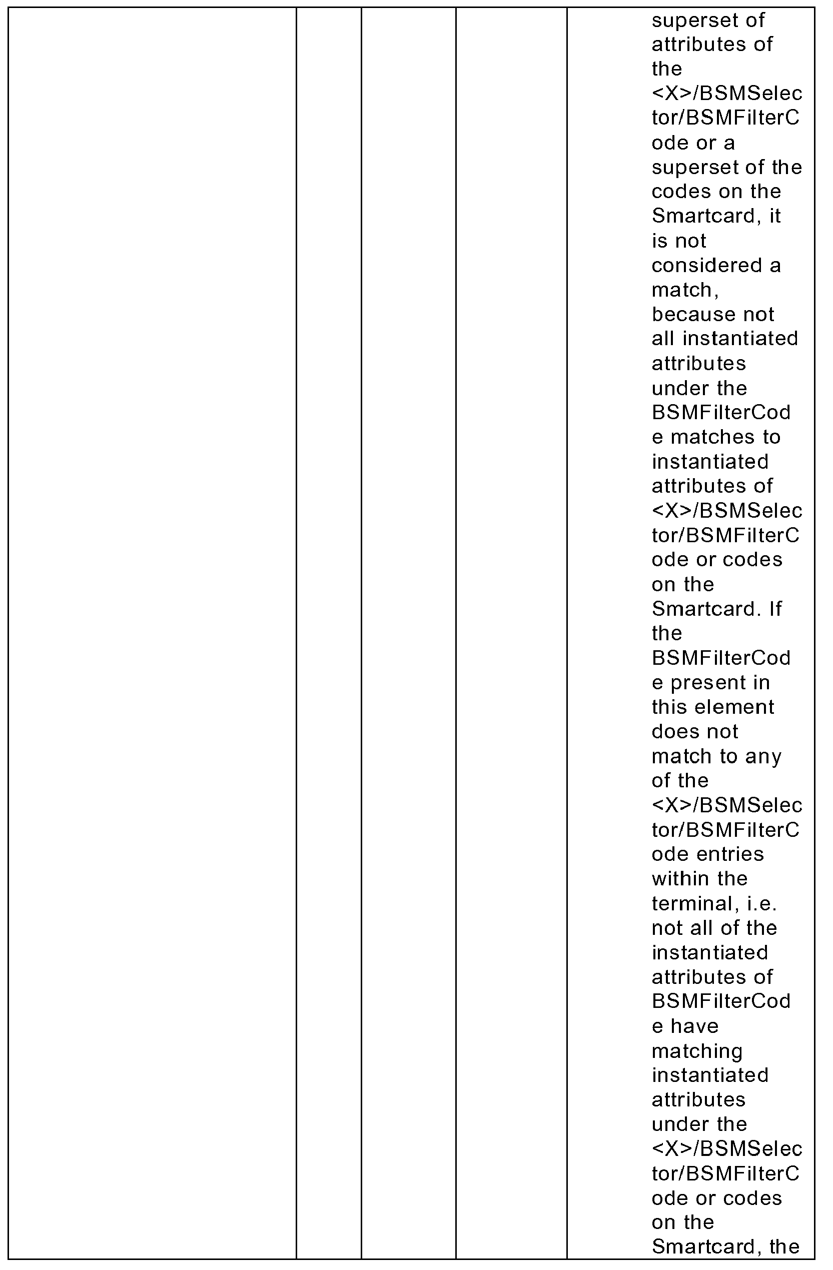

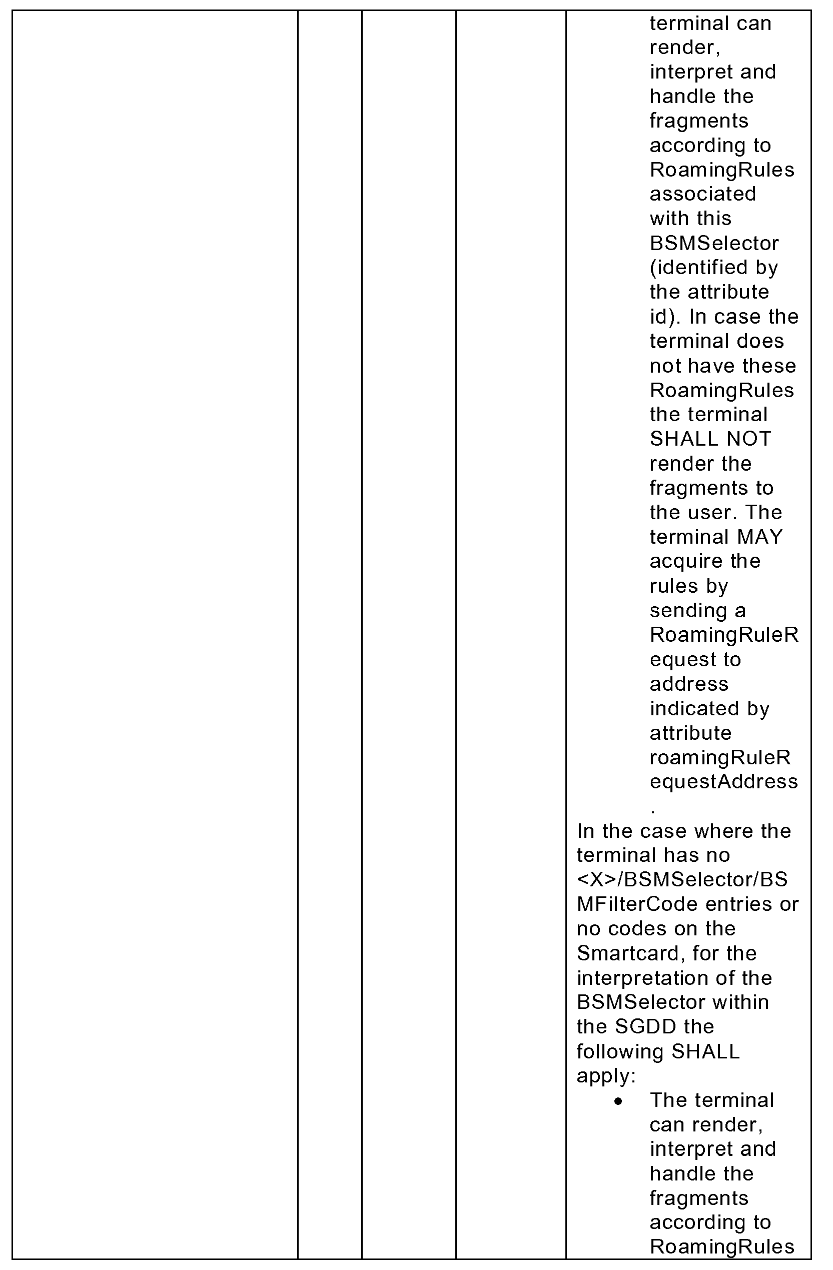

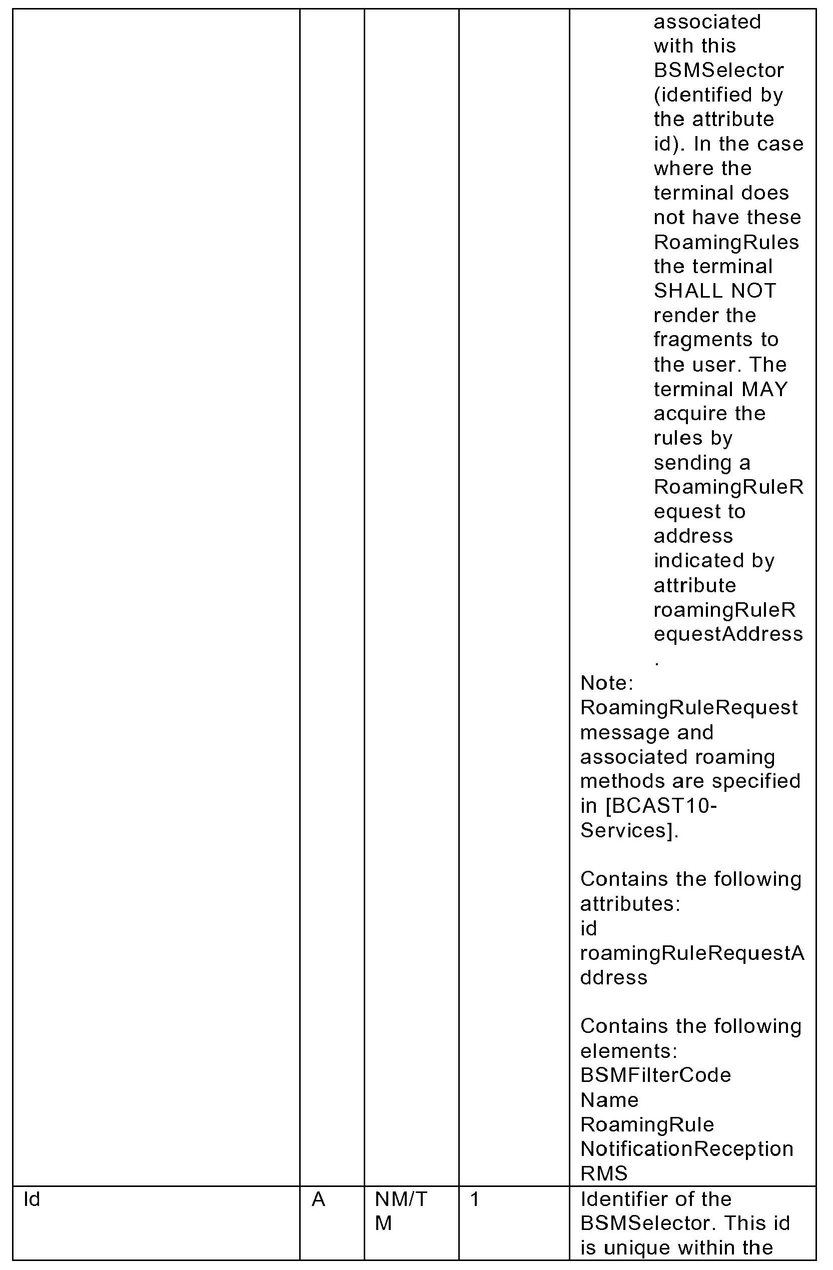

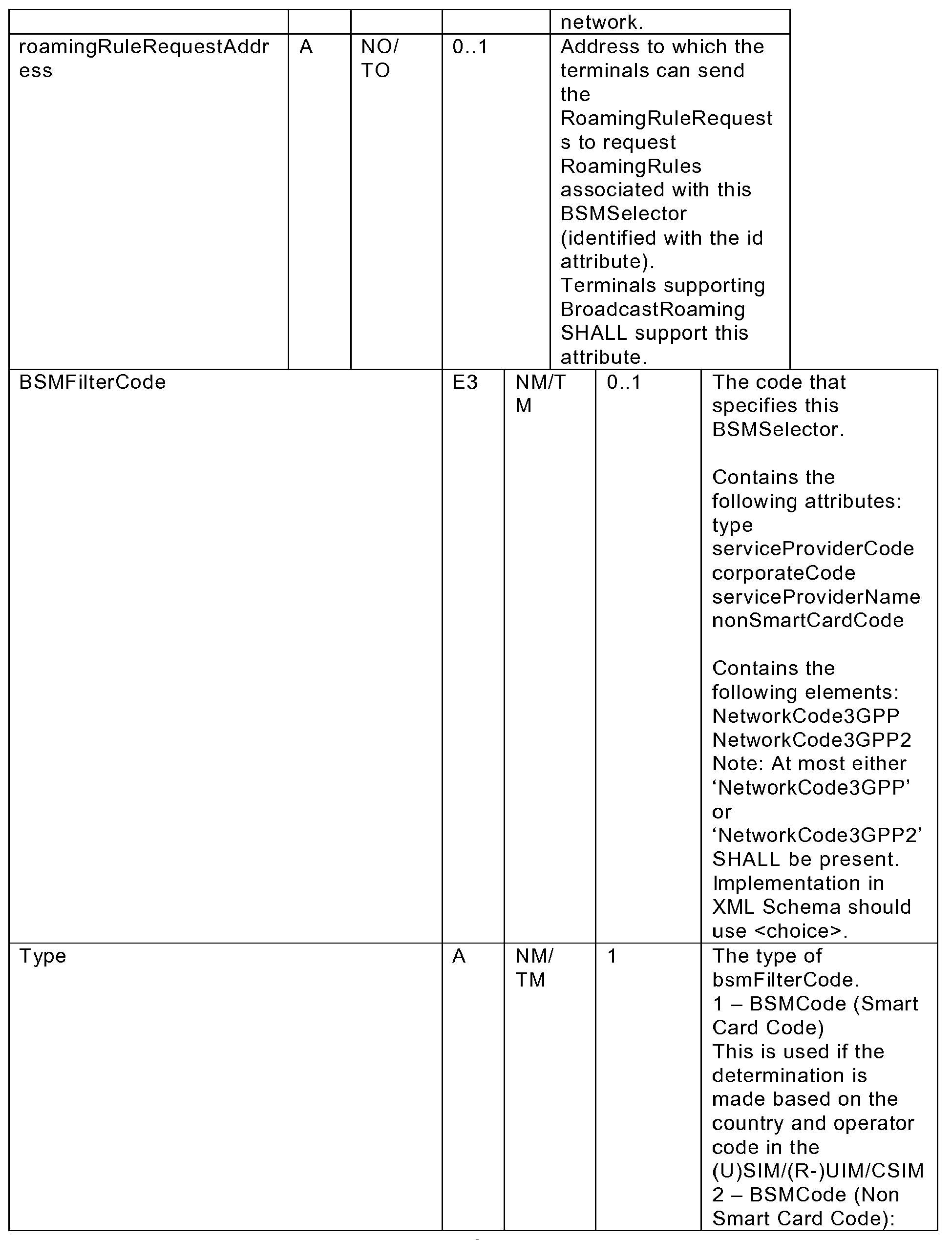

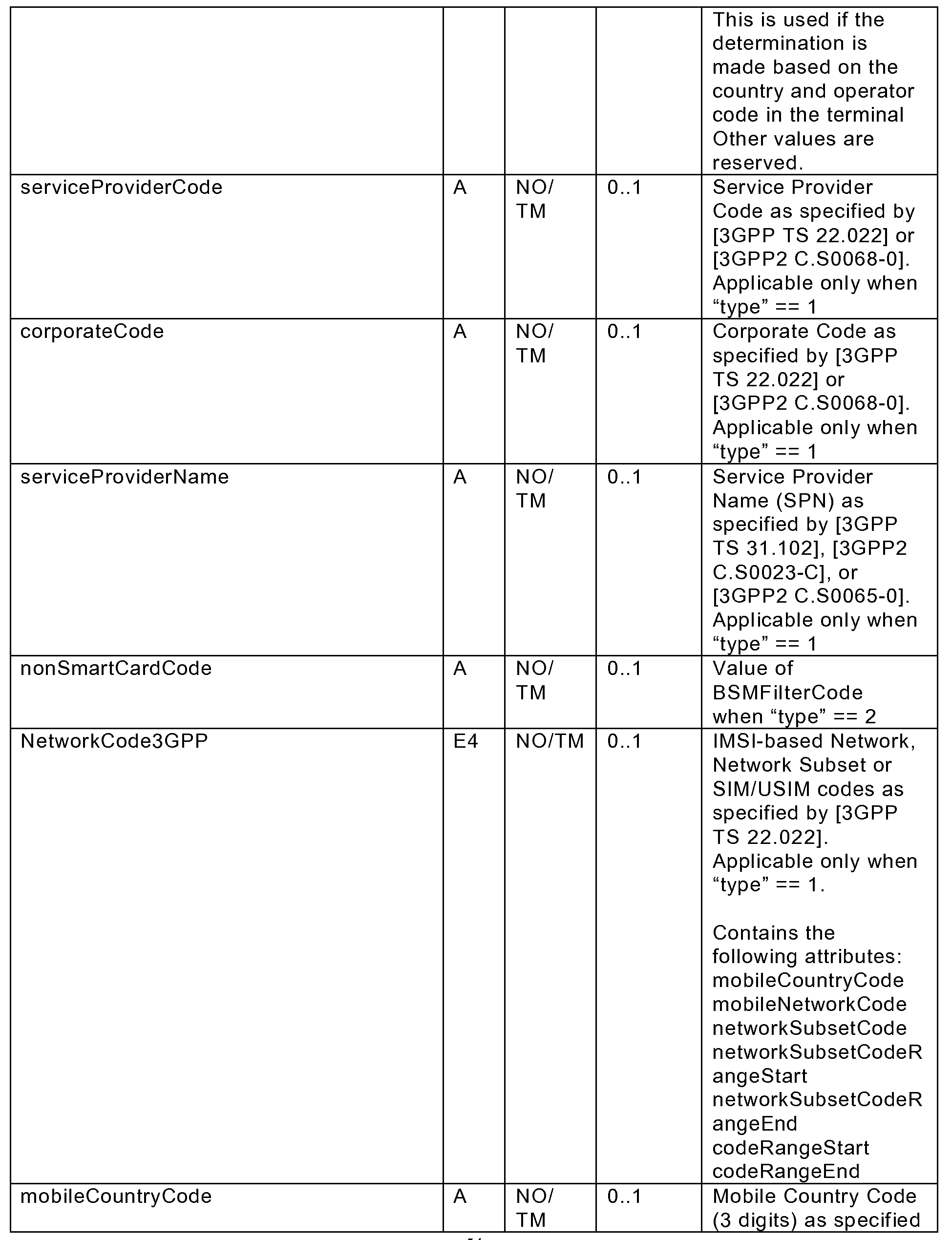

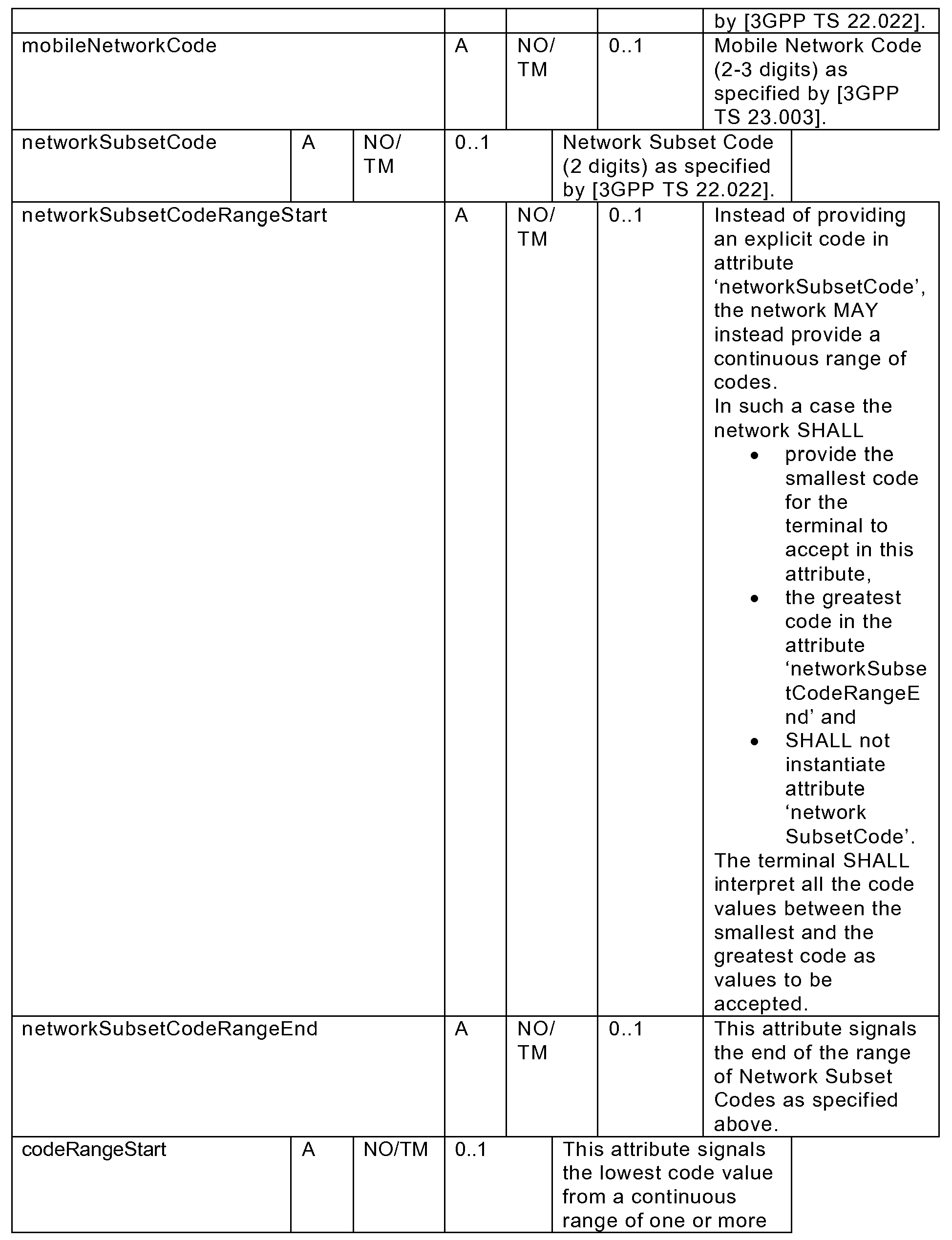

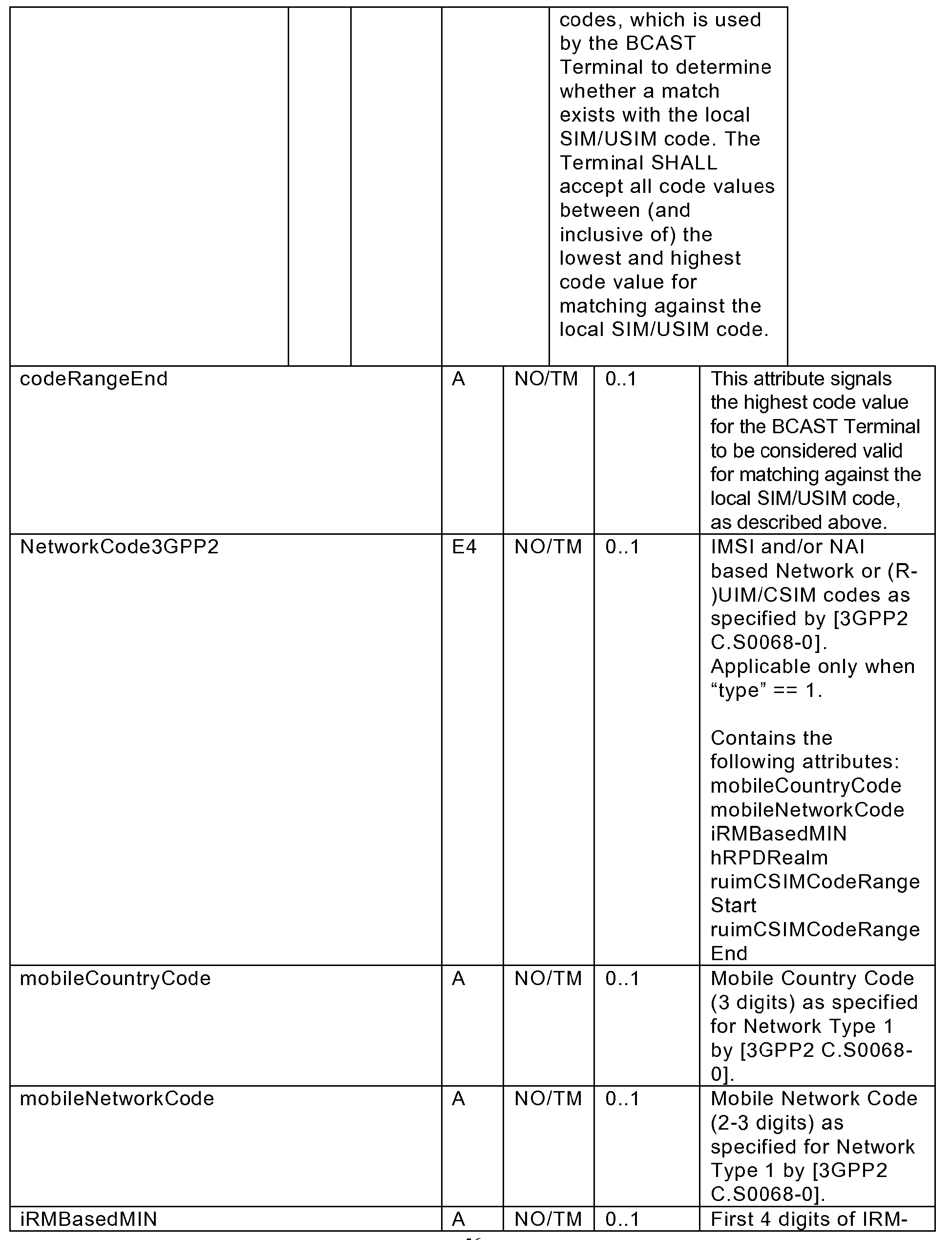

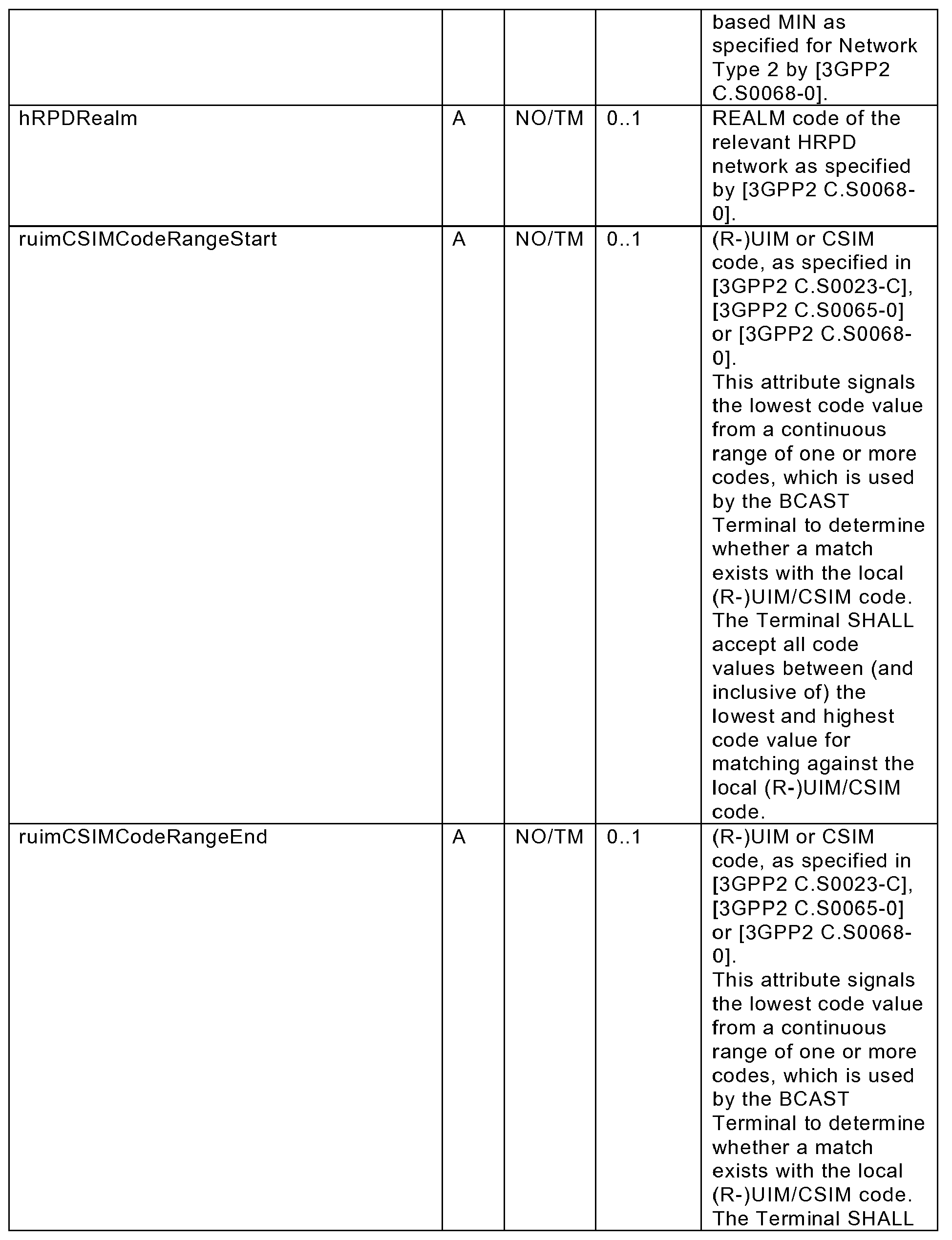

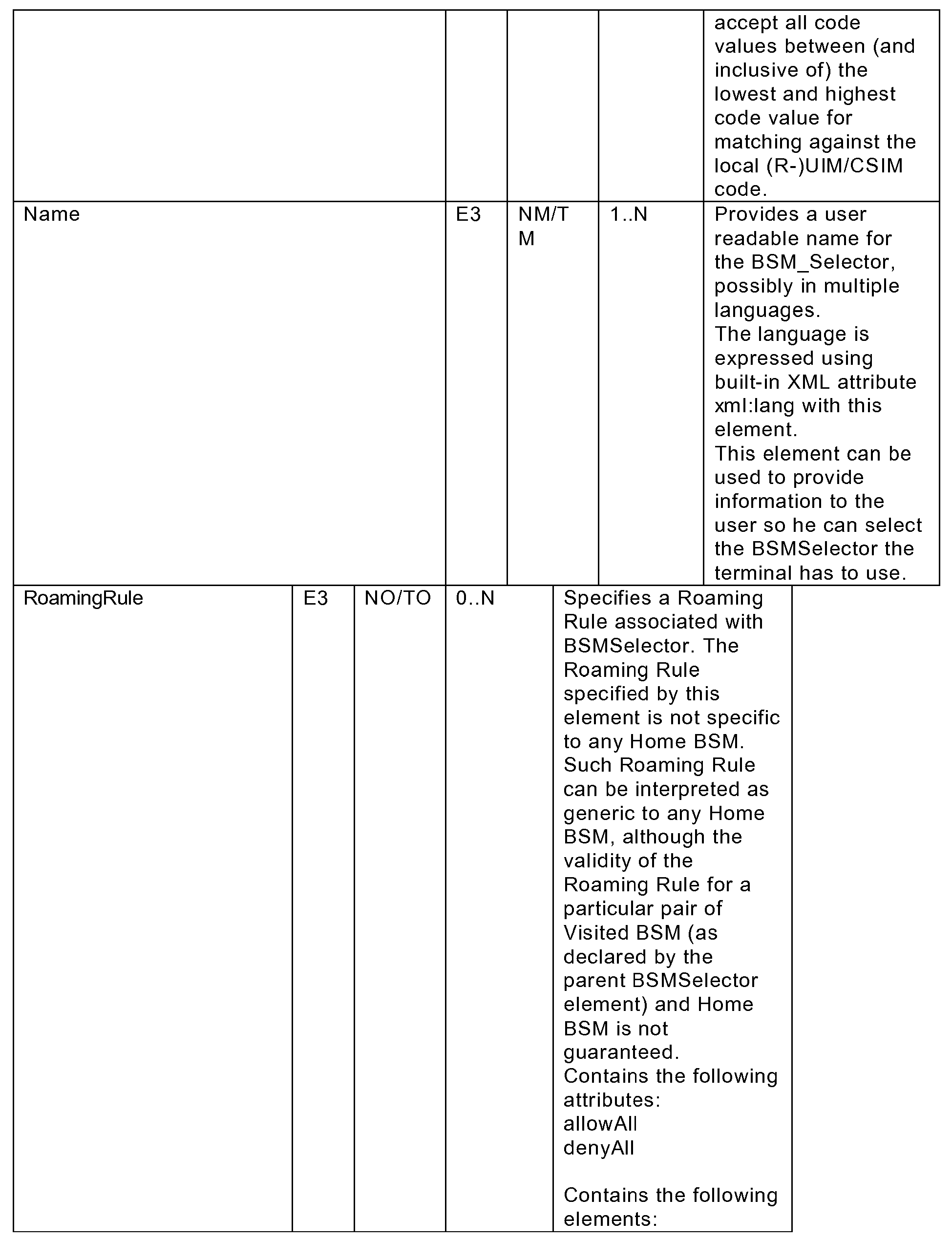

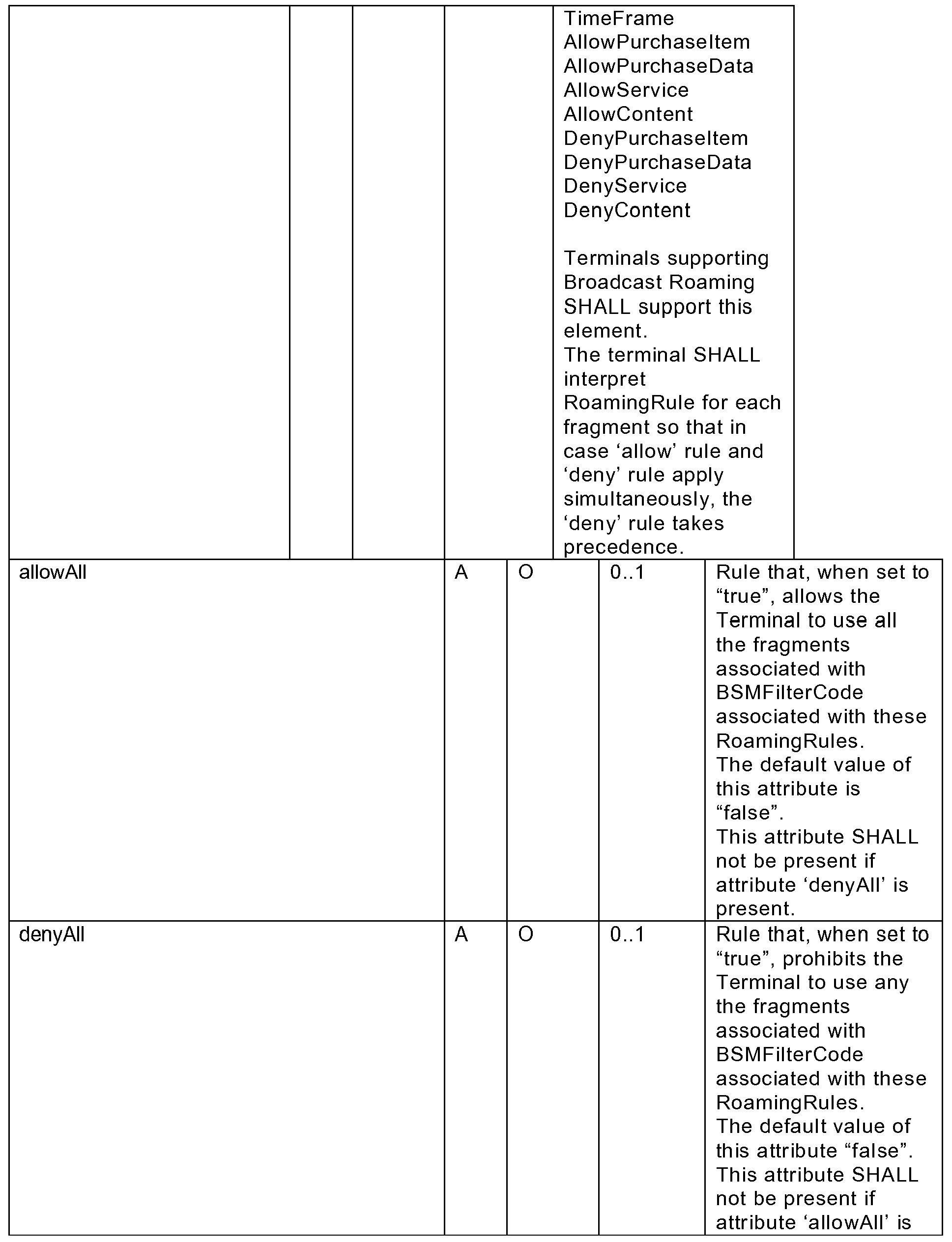

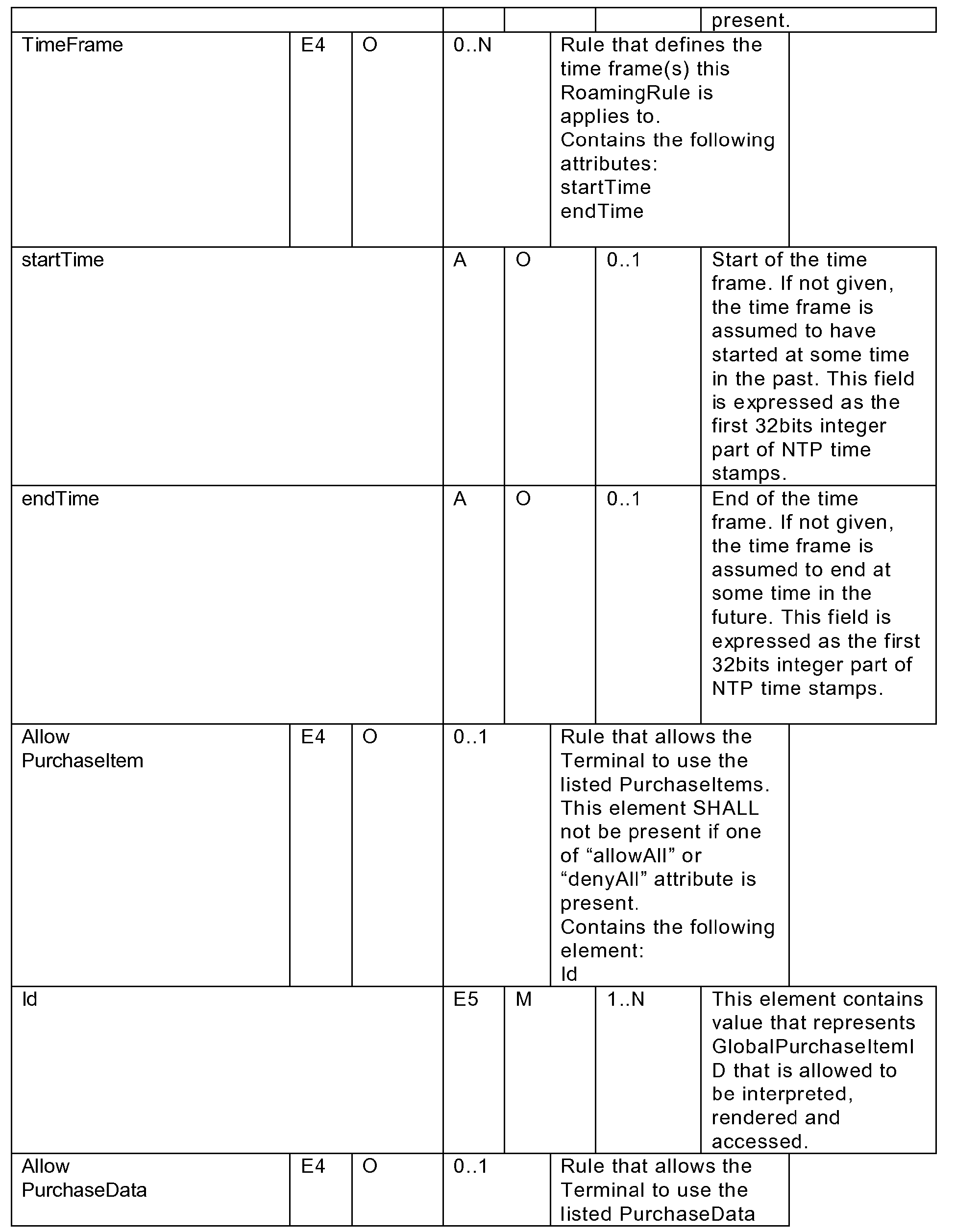

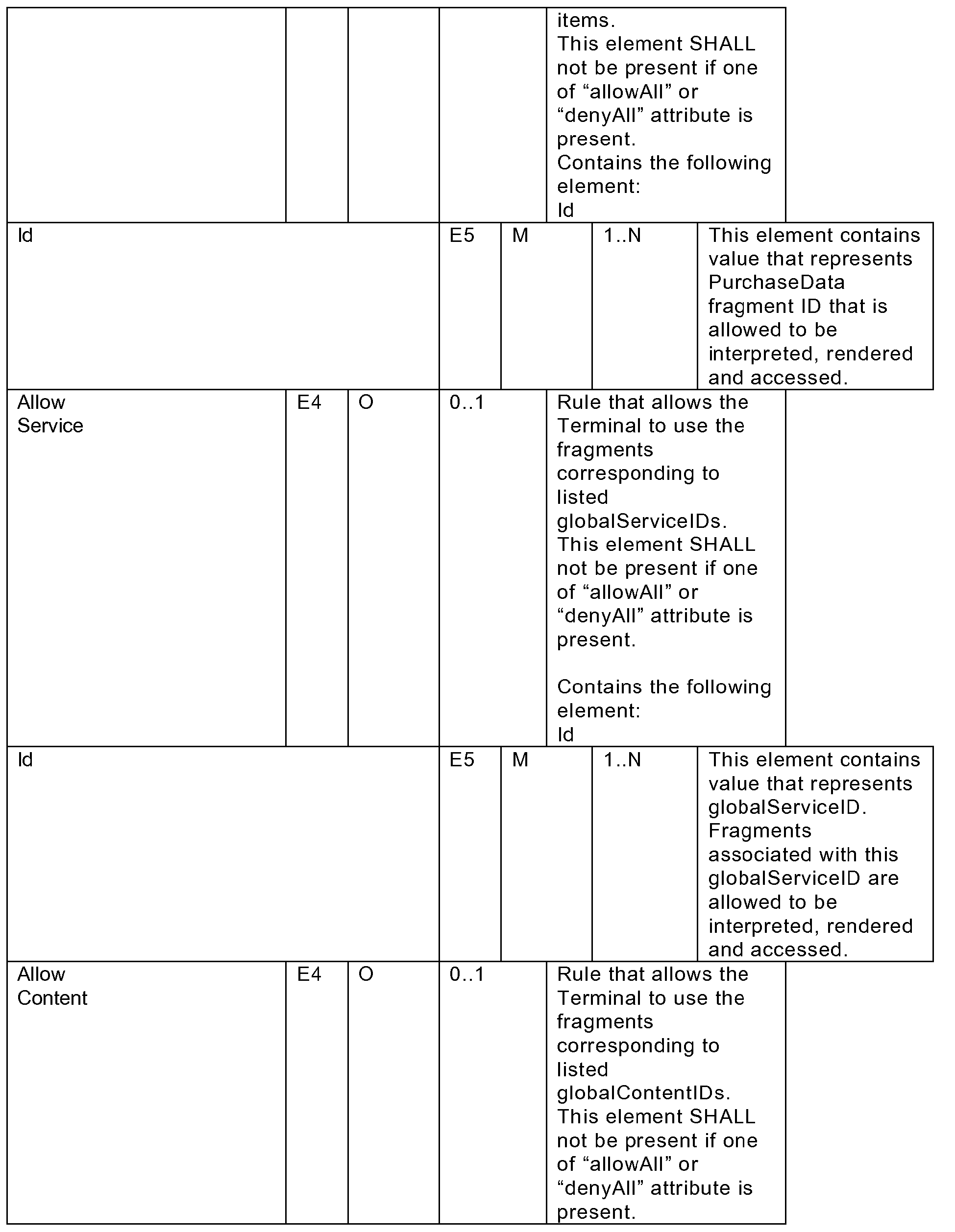

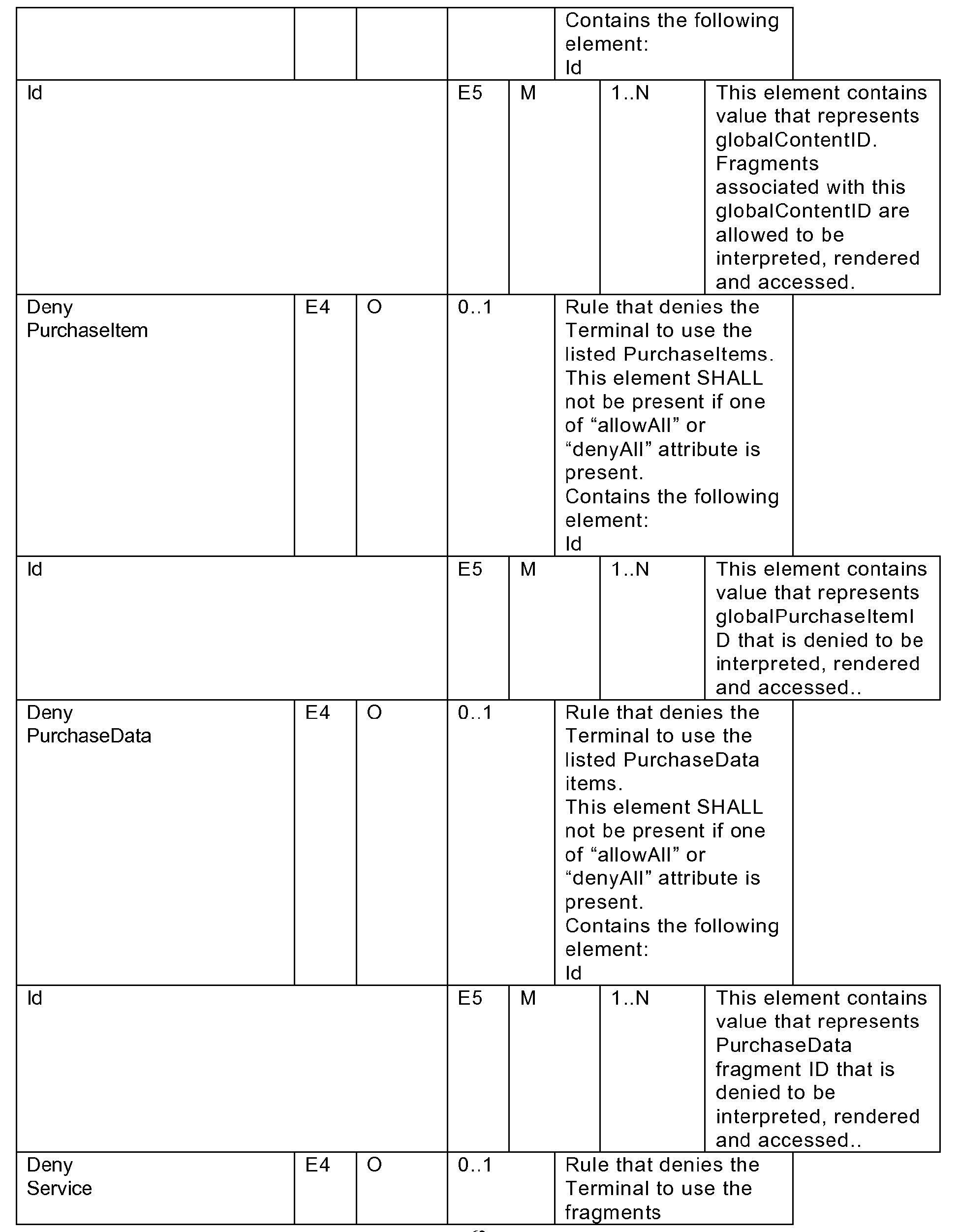

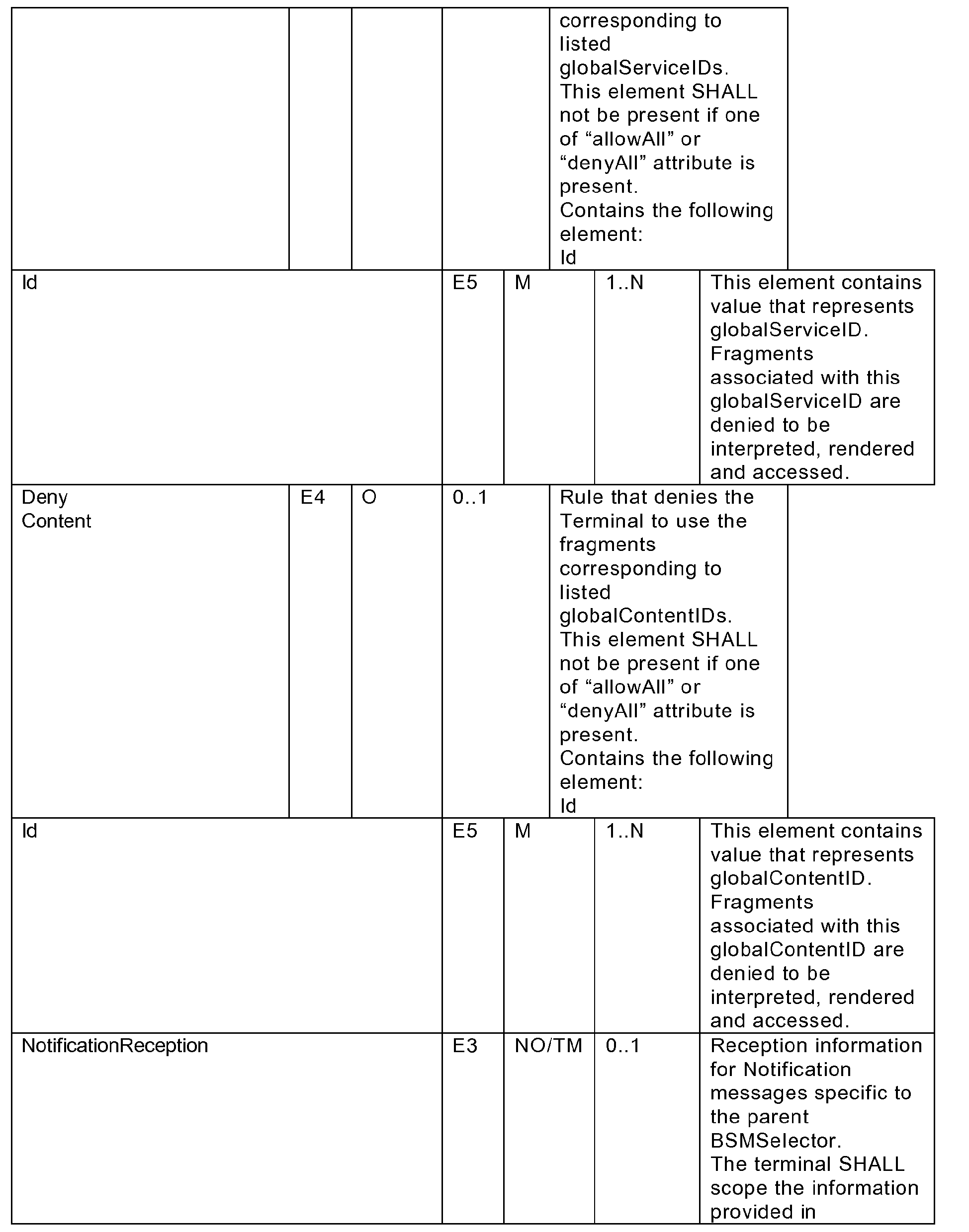

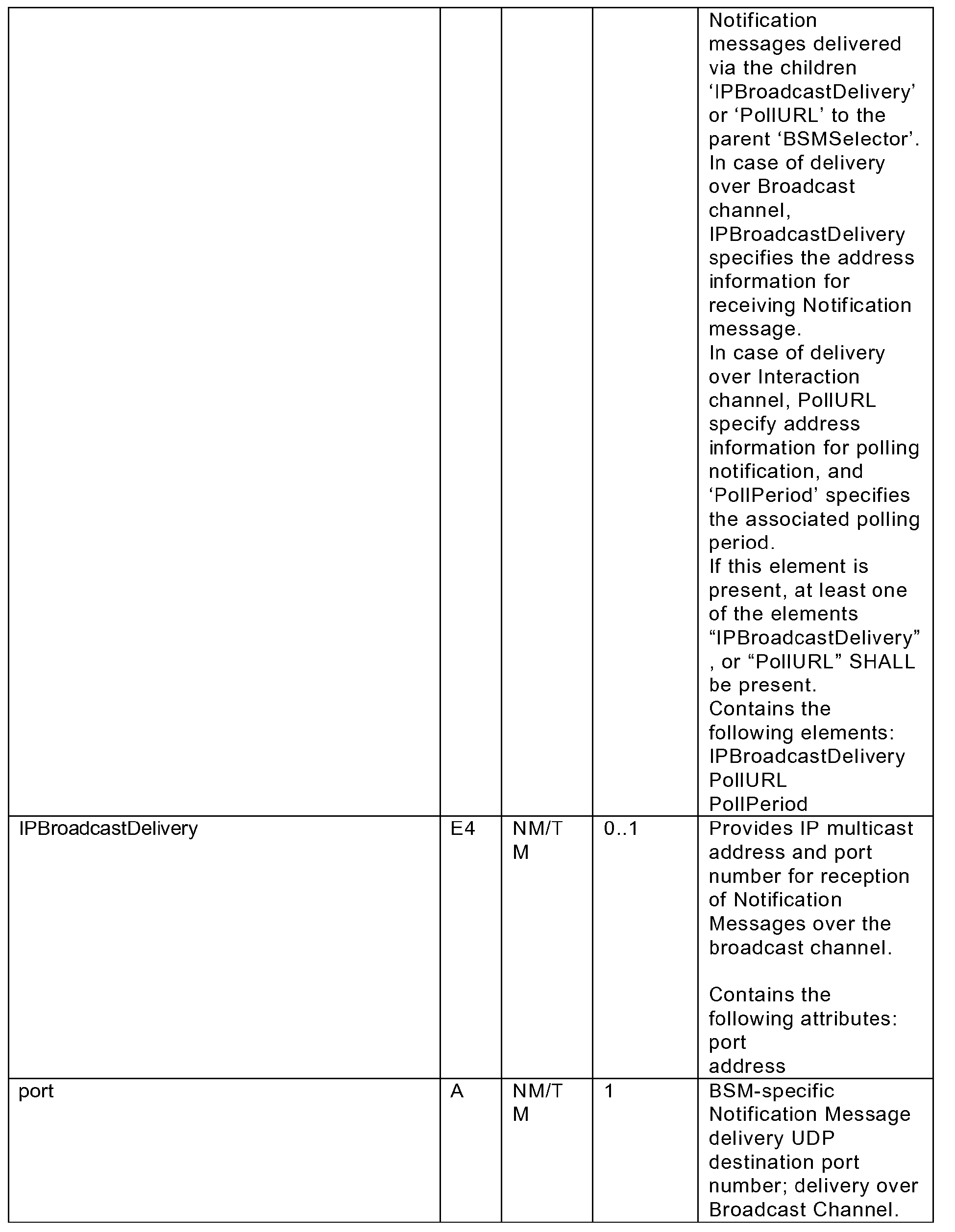

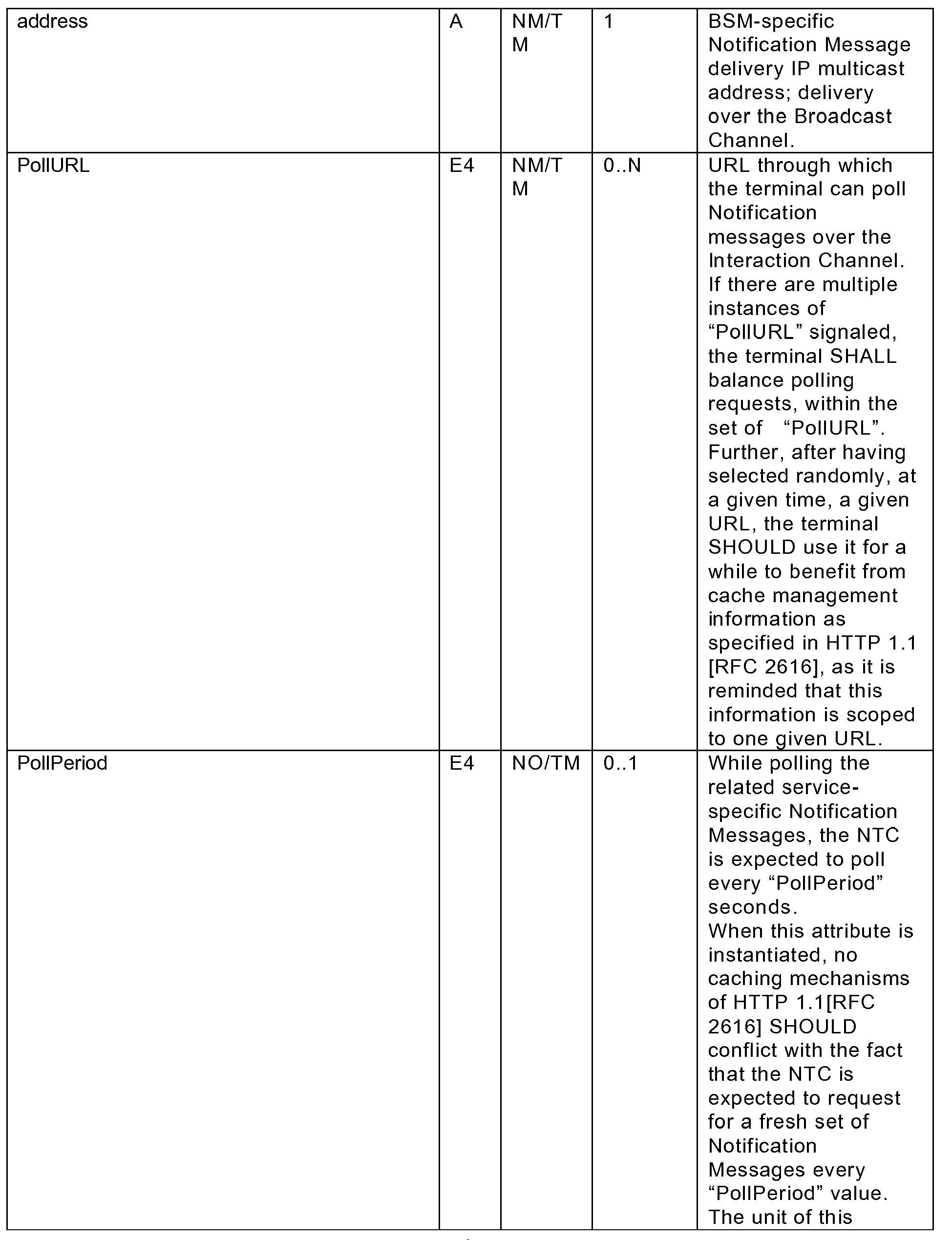

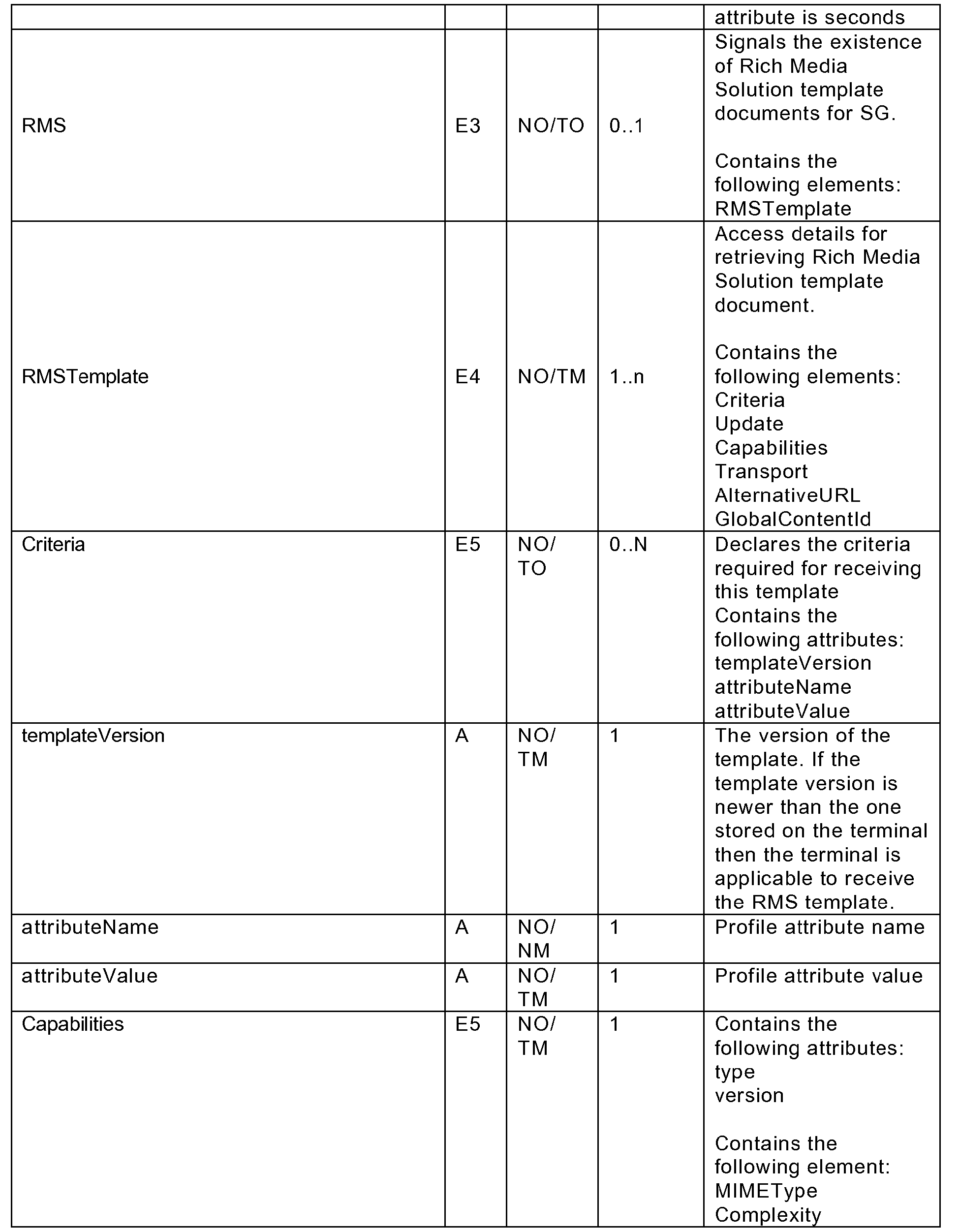

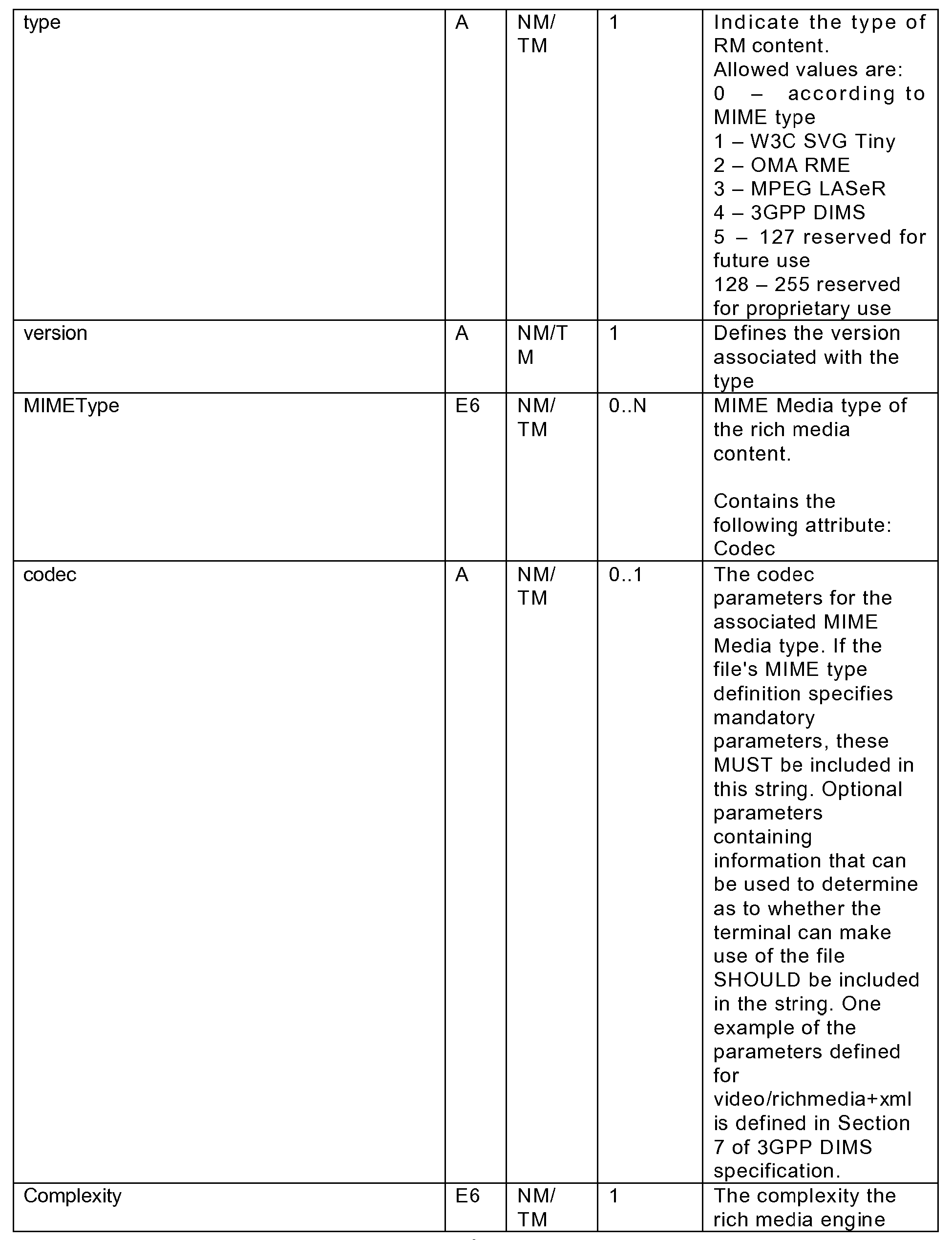

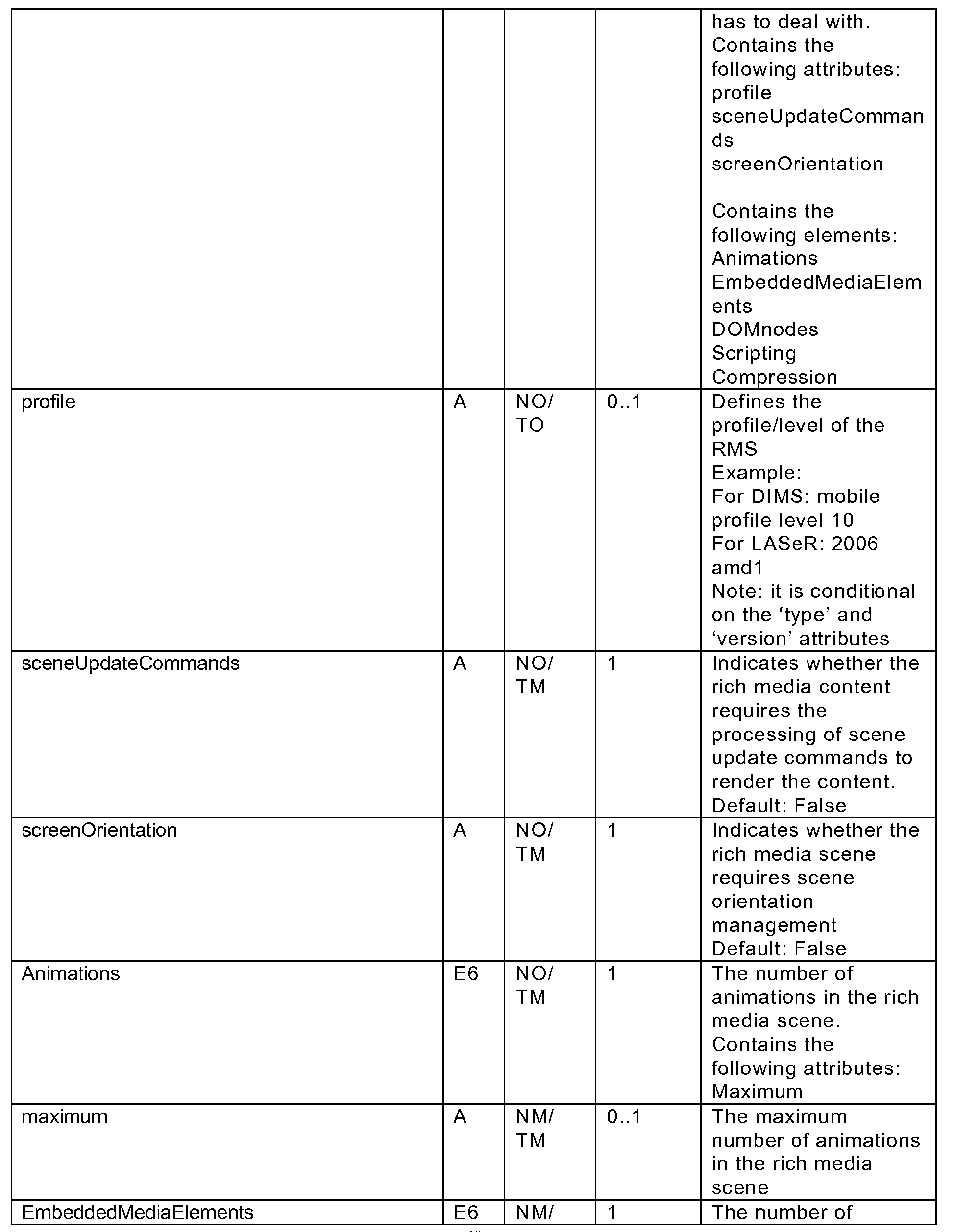

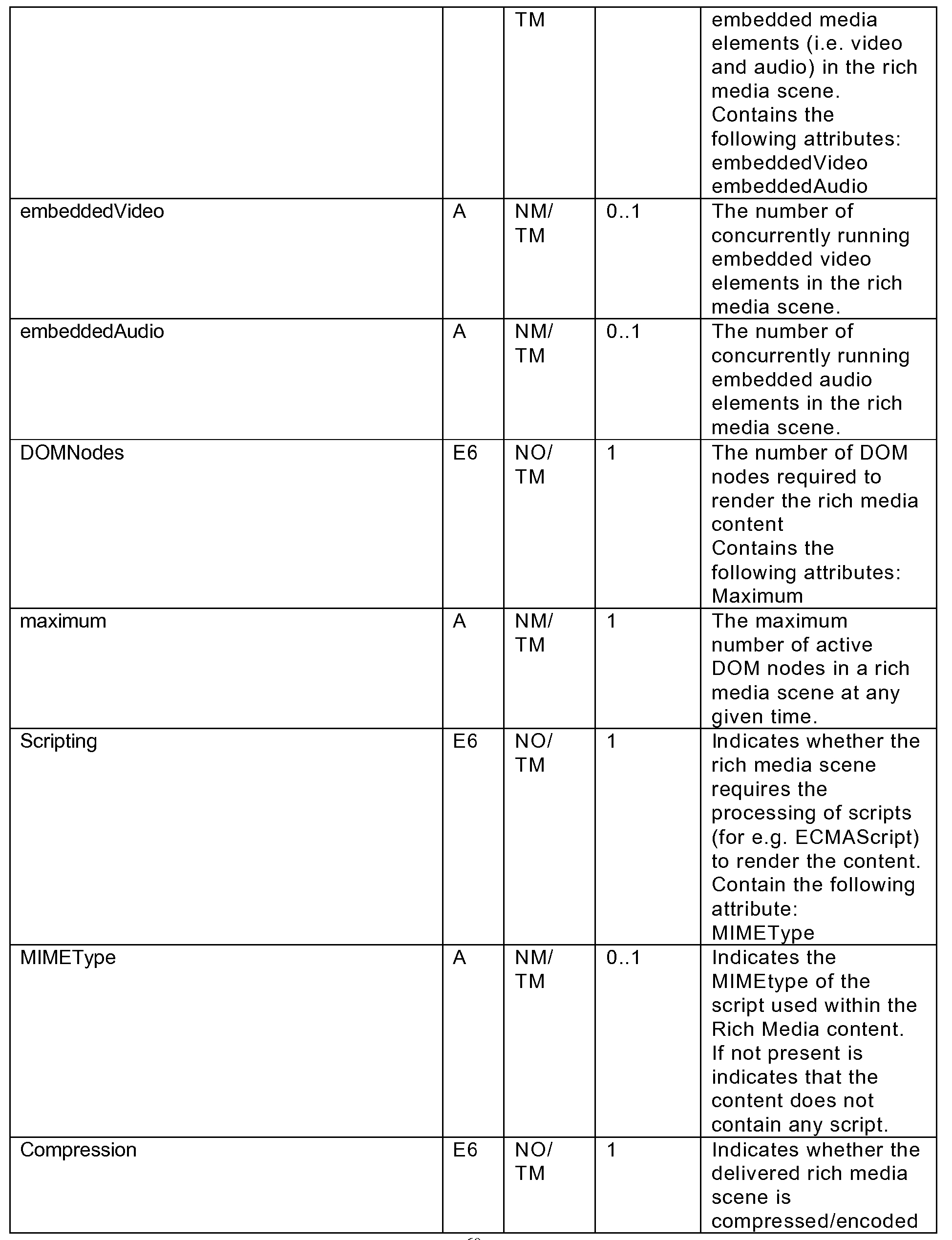

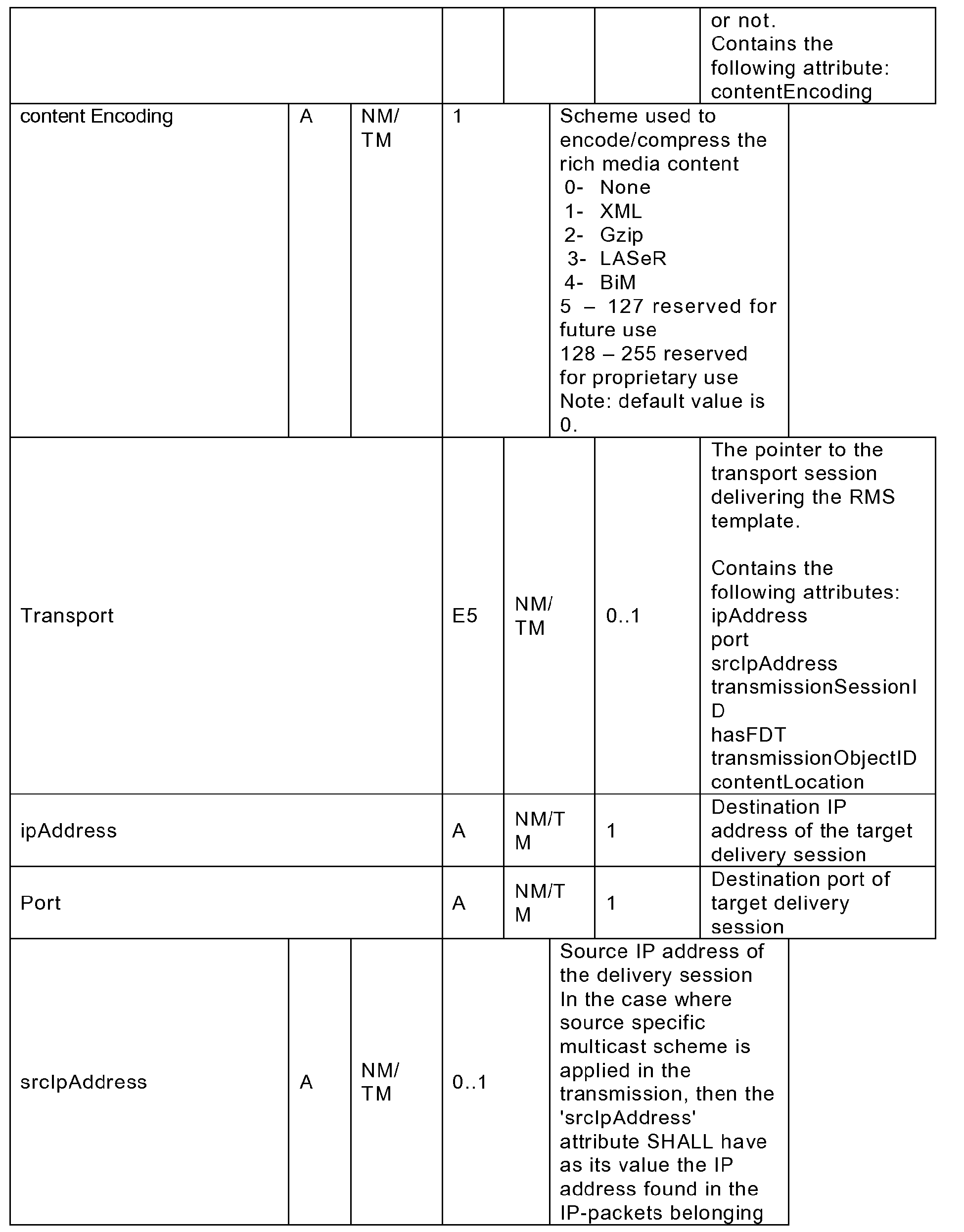

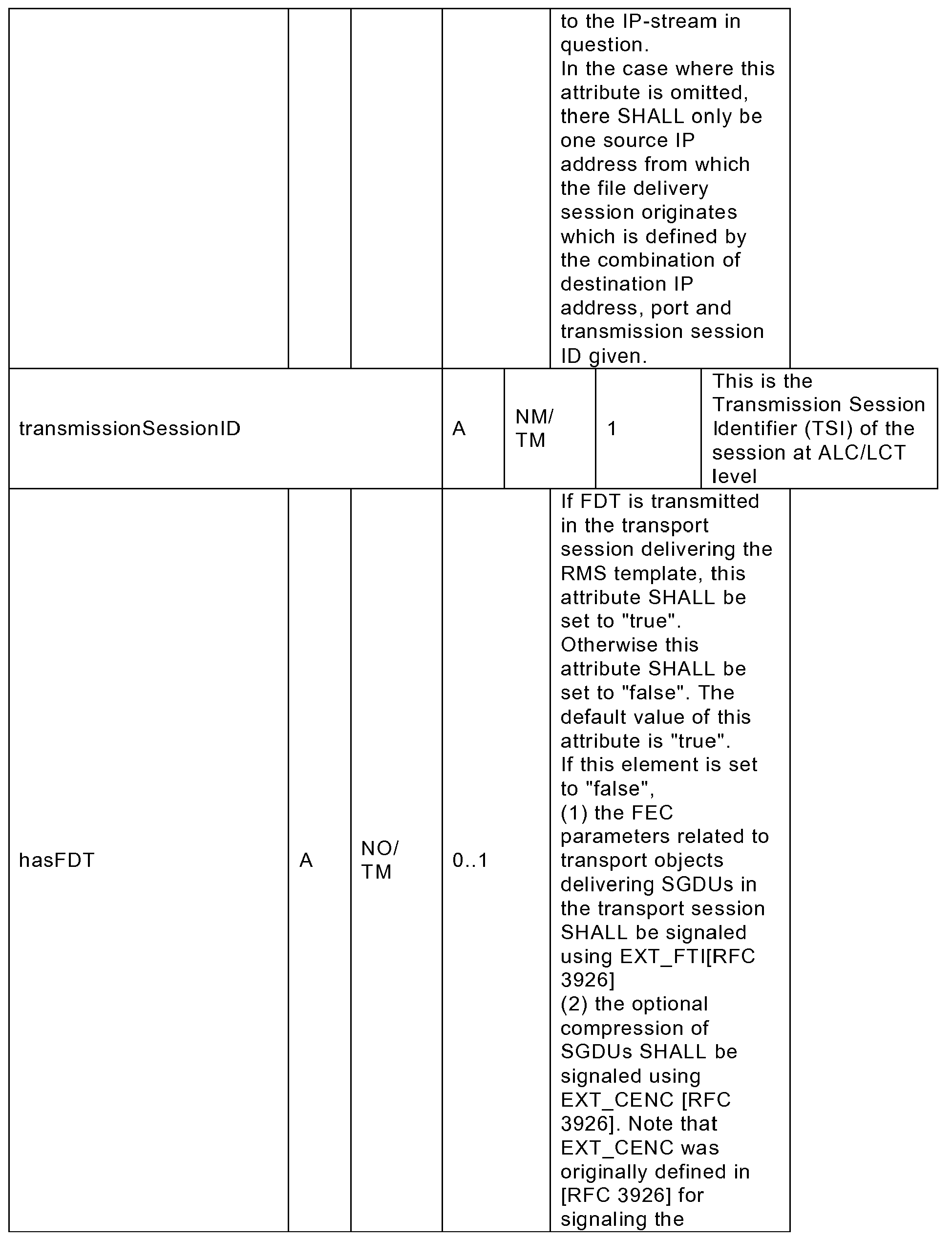

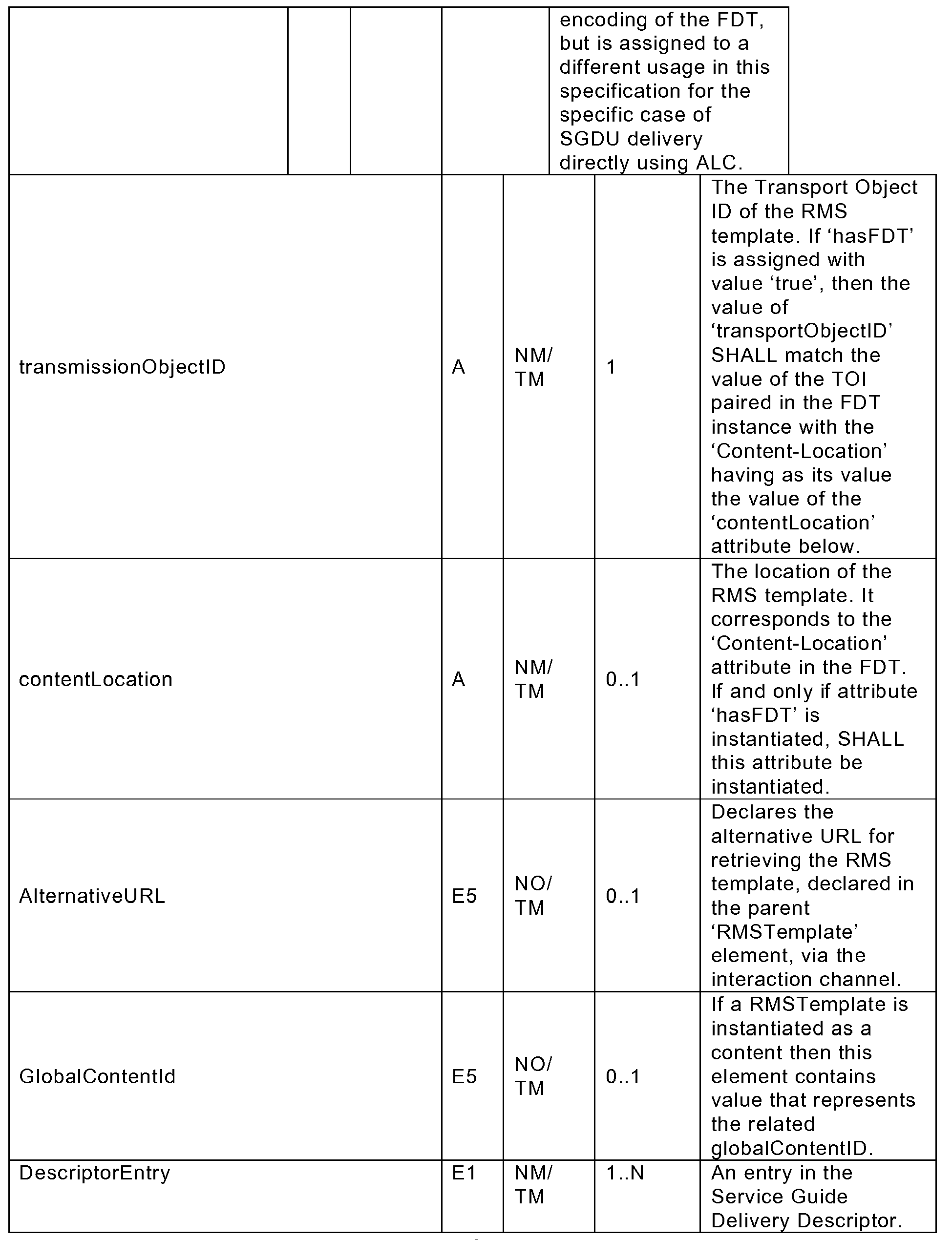

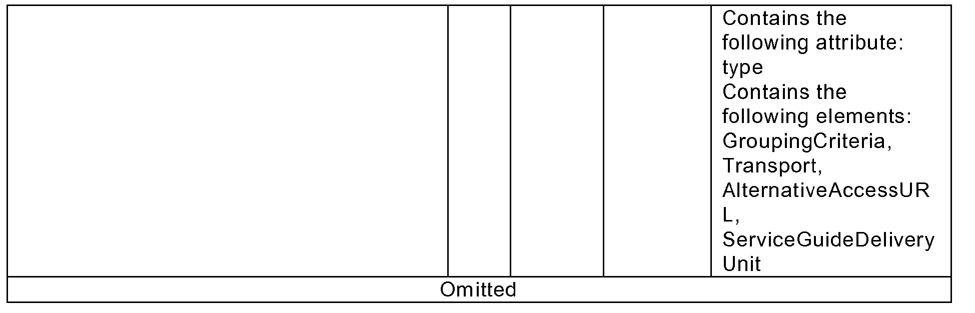

The RMS information according to the second embodiment of the present invention is defined in consideration of the case where multiple service providers are sharing a single network. In the case where multiple service providers are sharing the network, the RMS information can provide the rich media service guide templates of the individual service providers.

Referring to Table 3b, when multiple BSMs share the SGDD, this information is provided by using the BSMSelector element which is a sub-element of a BSMList element. In an embodiment of the present invention, the BSMSelector element also contains the information on whether the RMS template exists.

That is, the RMS element is contained in the BSMSelector element and contains the RMSTemplate element.

The RMSTemplate element contains the Criteria, Capabilities, Transport, AlternativeURL, and GlobalContentID elements.

The BSMSelector is an element to provide the information for identifying the service provider in BCAST. The BSMSelector element provides important criteria to discriminate between the service guides of the multiple service providers when the SGDD is shared by them. For this reason, the RMSTemplate element is added as a sub-element of the BSMSelector to support the providerspecific service guide templates. By inserting the RMS element into the SGDD, the terminal can prepare the RMS process before the receipt of the metadata delivered by the service guide fragment in advance, and thus display the service guide in the rich media format quickly.

The Criteria element provides a filtering rule such that only the terminals fulfilling specific conditions to use the RMS template.

The Criteria element is not defined specifically such that the service provider can define various conditions required and contains the templateVersion and, attributeName, and attributeValue attributes. The templateVersion attribute allows the terminal to receive the RMS template which is newer than the one stored in the terminal based on the time. The attributeName and attributeValue attributes can be defined per service provider.

The Capabilities element provides the information on the capability required for the terminal to display the RMS template. Since a problem may occur with the terminal which does not fulfill the requirements of the Capabilities element, such terminal does not receive the template.

The Transport element contains the information required for the terminal 105 to receive the RMS template via the broadcast channel. The Transport element is identical with that in Table 3a according to the first embodiment of the present invention.

The AlternativeURL element provides the information on the alternative URL for retrieving the RMS template via one-to-one interaction channel.

The GlobalContentId element provides identifier of the content fragment when the service provider wants to provide the RMS template as content.

Although the RMS template is transported according to the file transport method of the conventional BCAST in the above method, it may be delayed for the terminal to display the service guide using the RMS template as compared to use the Transport element contained in the SGDD.

The structure of RMS information according to a third embodiment of the present invention is described hereinafter. FIG. 7 and Table 3c describes the structure of the RMS information according to the third embodiment of the present invention. The third embodiment is identical with the second embodiment in terms of supporting the SGDD share of multiple BSMs except that the RMS element is a higher element containing the BSM information.

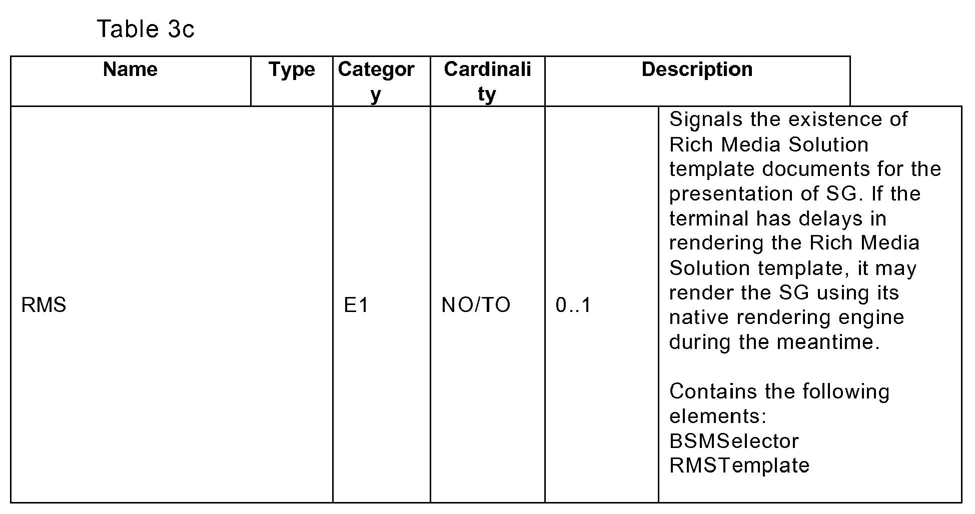

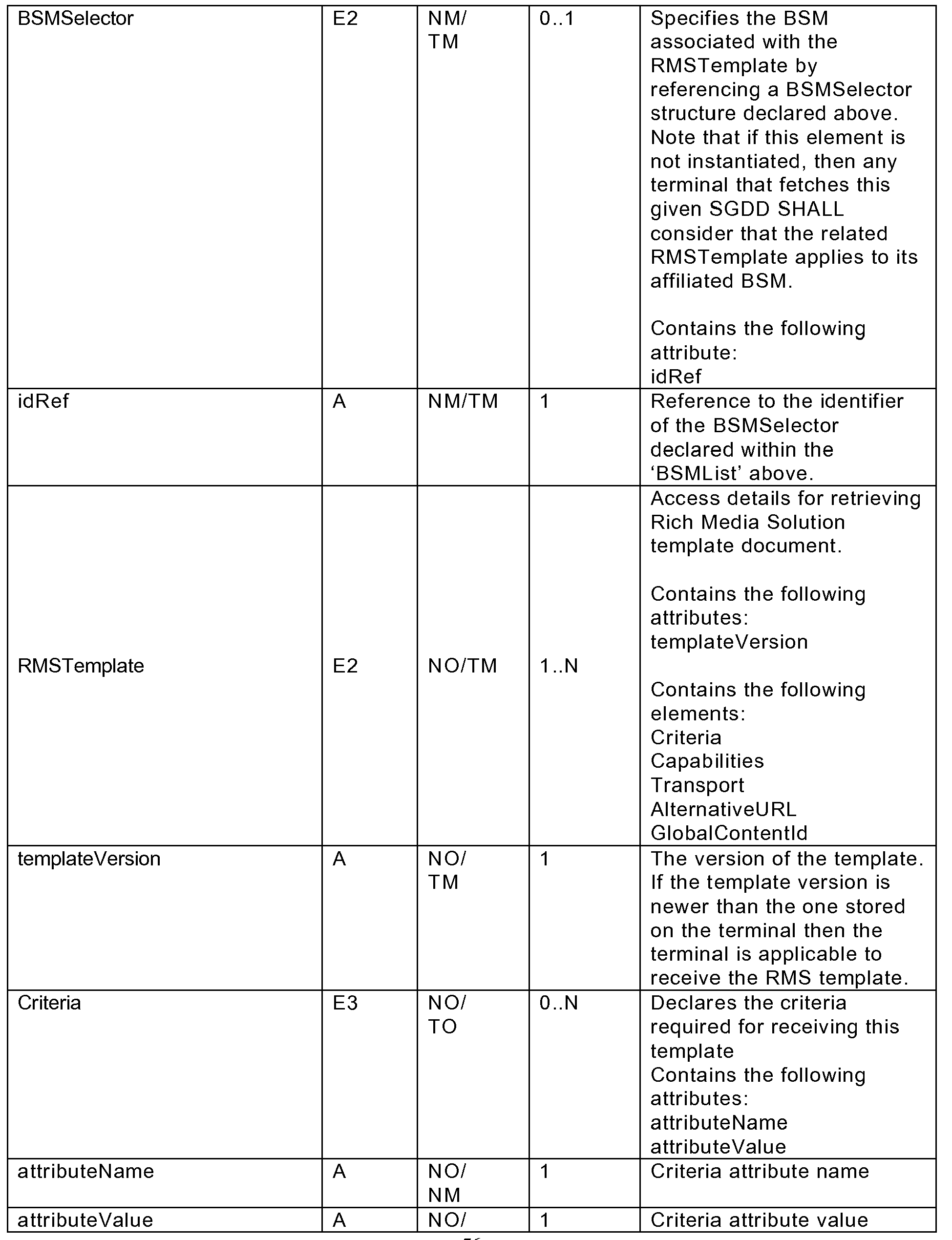

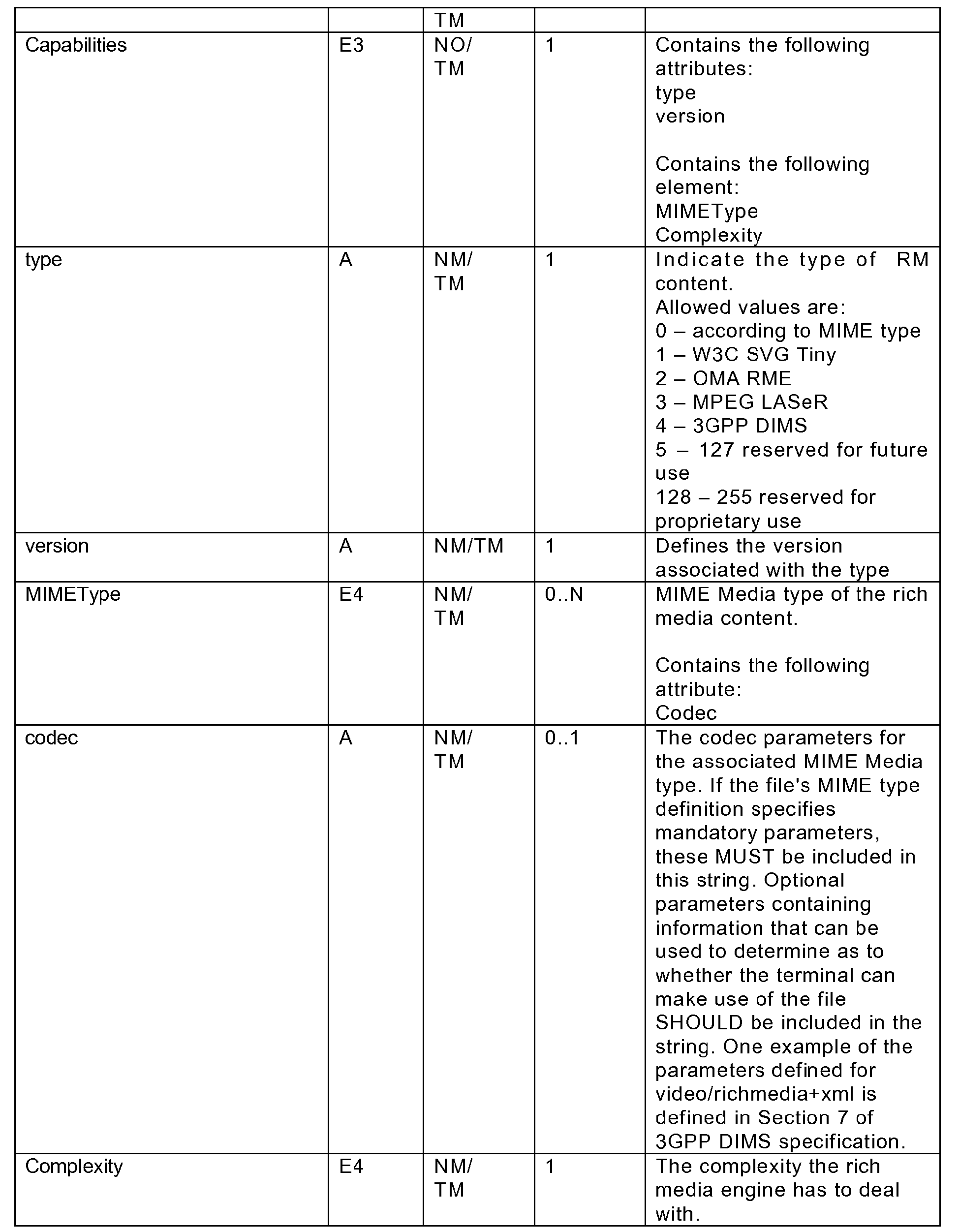

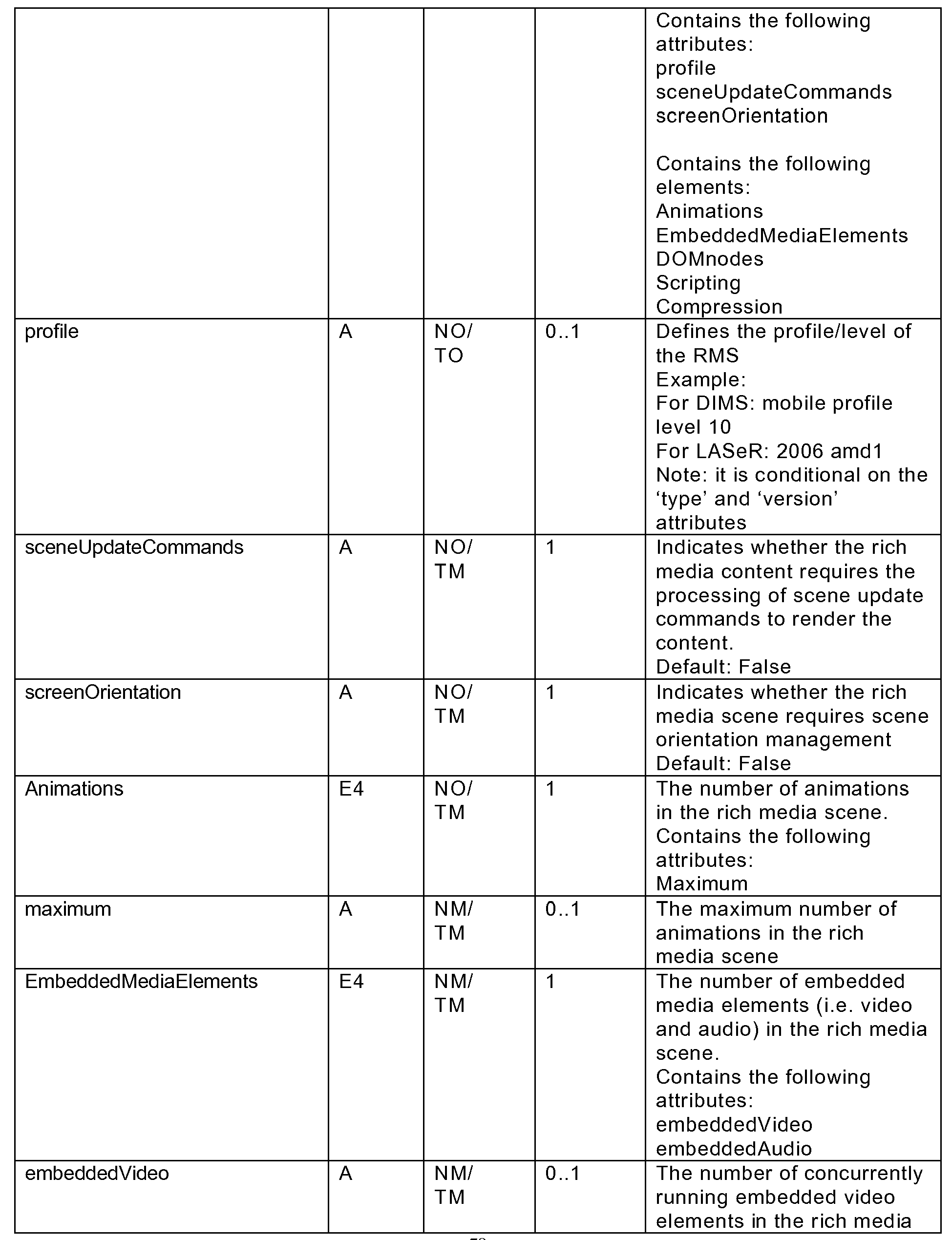

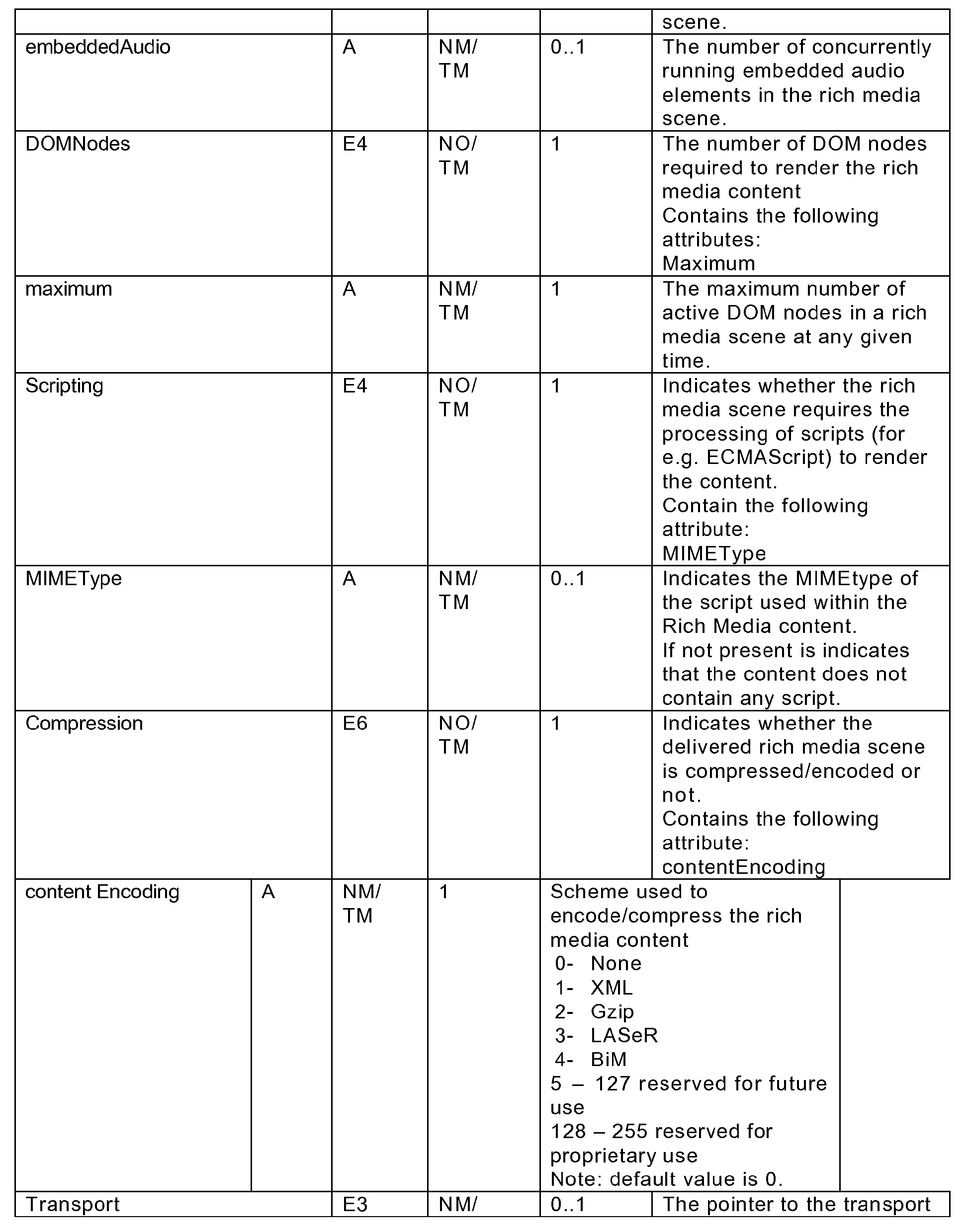

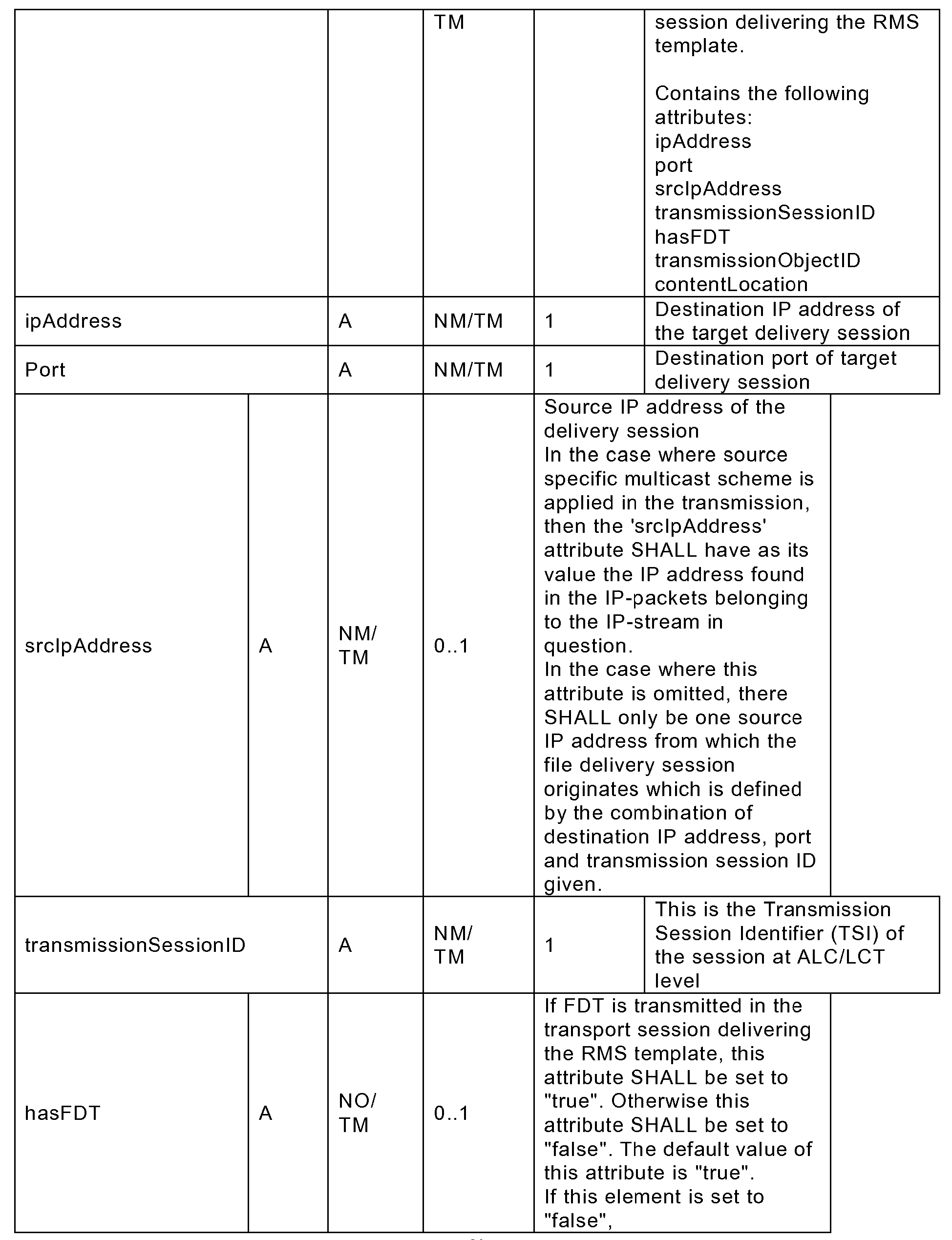

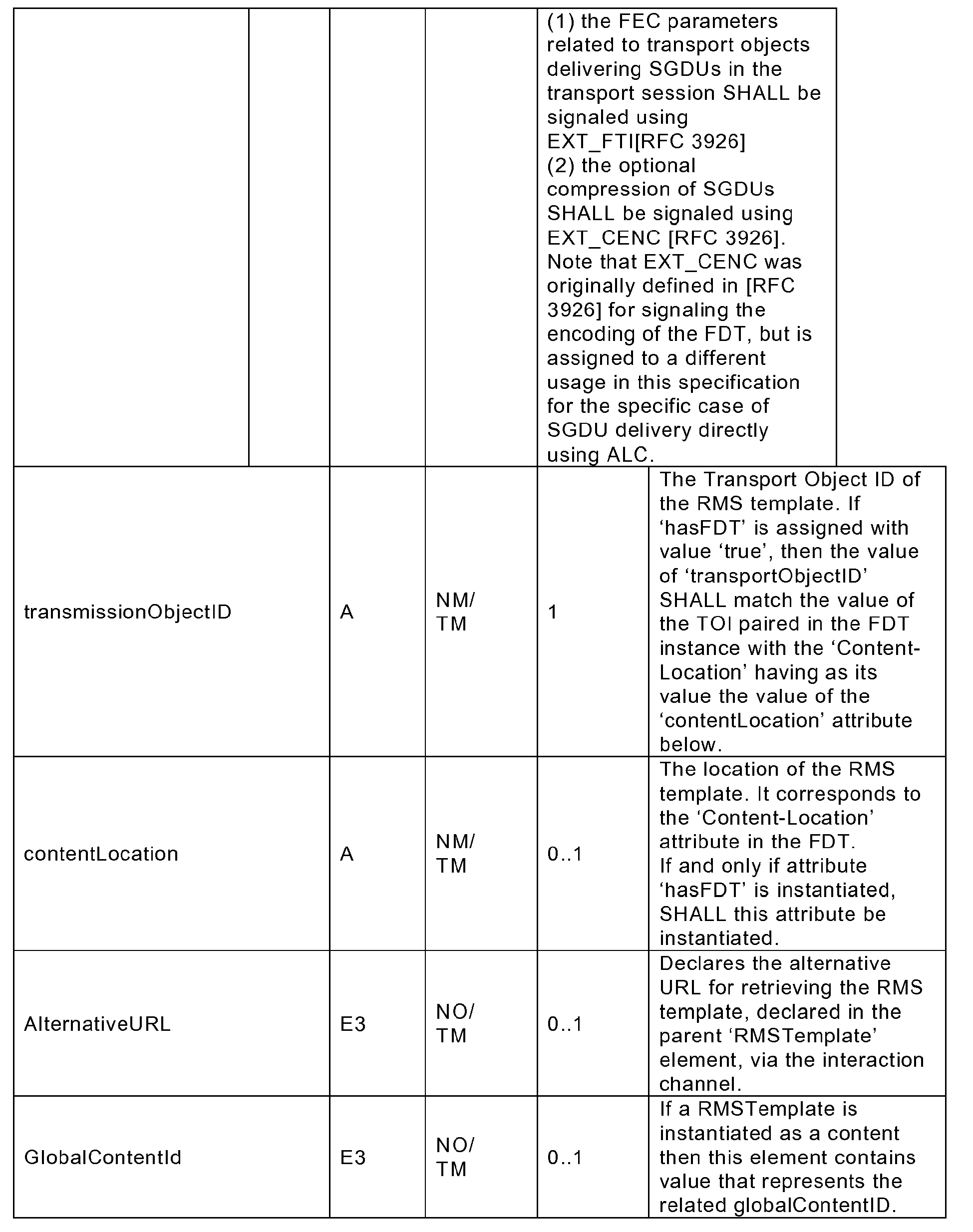

Descriptions are made of the elements that are newly introduced in the RMS information of Table 3c but not included and described in the RMS information of Table 3b.

The BSMSelector element contains an idRef attribute containing the service provider value to designate a BSM value representing the service provider. It is determined whether to apply the RMS template depending on the value of the idRdf attribute.

An RMS transmission method according to an embodiment of the present invention is described hereinafter.

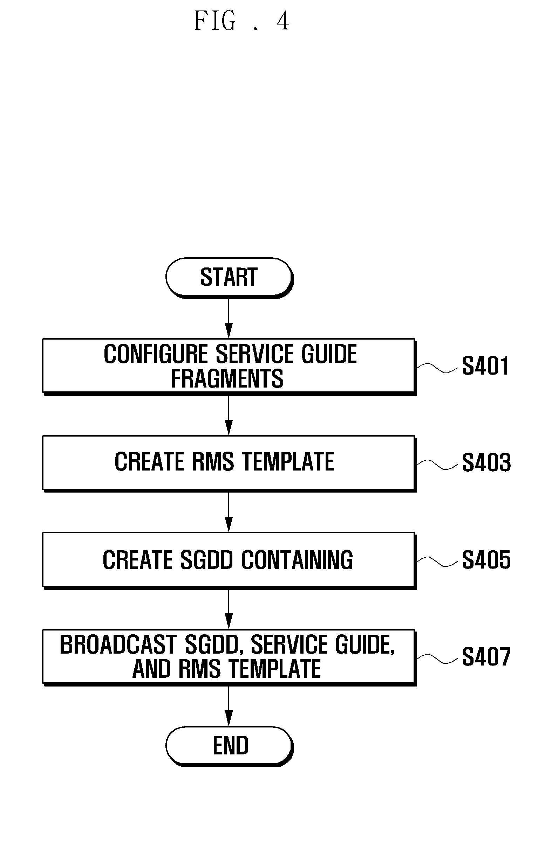

FIG. 4 is a flowchart illustrating a rich media-enabled service guide provisioning method according to an embodiment of the present invention.

Referring to FIG. 4, the BSDA 103 creates a Service Guide (SG) with the required service guide fragments in step S401.

Once the Service Guide has been created, the BSDA 103 creates an RMS template for the terminal 105 to display the Service Guide in step S403. At step S403, the BSDA 130 selects an RMS technology to be used for creating the RMS template among the W3C SVT Tiny, OMA RME, MPEG LASeR, and 3GPP DIMS.

In the case where there is no previously created template, the BSDA 103 can create a new template and, if any, selects one of the previously created templates.

Once a template has been selected or created, the BSDA 103 creates an SGDD containing the RMS information in step S405. The RMS information can be provided in one of the formats described in Tables 3a, 3b, and 3c. That is, the BSDA 103 generates the SGDD containing the information about the service guide fragments required for forming the service guide as described in Table 2 along with the RMS information formatted as shown in Tables 3a, 3b, or 3c.

Finally, the BSDA 103 broadcasts the SGDD, Service Guide, and RMS template such that the terminal 105 receives them in step S407.

In the case where the RMS template is transmitted via an interaction channel, the BSDA 103 adds the RMS information notifying of the transmission of the RMS template via the interaction channel to the SGDD at step S405, and broadcasts the service guide fragment and transmits the RMS template via the interaction channel at step S407.

A procedure for the terminal to receive the service guide with the RMS template in the rich media-enabled service guide provision method according to an embodiment of the present invention is described hereinafter.

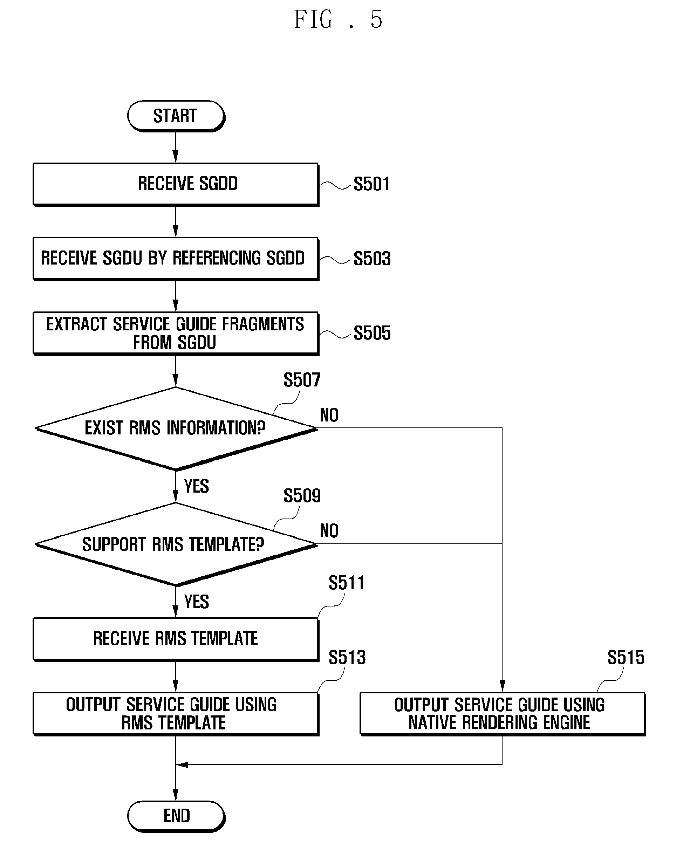

FIG. 5 is a flowchart illustrating a procedure for handling a received rich media-enabled-service guide in the rich media-enabled service guide provision method according to an embodiment of the present invention.

Referring to FIG. 5, the terminal 105 first receives the SGDDs transmitted by the BSDA 103 in step S501. At this time, the terminal 105 access an SG Announcement Channel to receive the SGDDs as shown in FIG. 3. As shown in FIG. 3, at least one SGDD 301 is transmitted on the SG Announcement Channel 300, and the terminal 105 receives the SGDDs destined to itself.

Sequentially, the terminal 105 receives the SGDUs destined to itself by referencing the SGDDs in step S503 and extracts the service guide fragment from the received SGDU in step S505. The service guide fragment can be metadata.

Next, the terminal 105 analyzes the received SGDDs to detect the RMS information (formatted as shown in Table 3a, 3b, or 3c) from the SGDDs in step S507. If the RMS information has been detected at step S507, the terminal 105 determines whether the RMS template contained in the RMS information is supportable in step S509. Whether the RMS template is supportable or not can be determined based on the RMS information described in Tables 3a, 3b, and 3c. For instance, the RMS information is formatted as shown in Table 3a, the terminal 105 references the Type attribute and the Version attribute contained in the RMSTemplate element to determine whether it supports the RMS template.

In the case where the RMS information is formatted as shown in Table 3b, the terminal 105 references the Criteria element and the Capability element contained in the RMSTemplate element to determine whether the terminal 105 supports the RMS template.

If it has been determined that the terminal supports the RMS template at step S590, the terminal receives the RMS template in step S511. Here, the RMS information includes the information on the transmission. Transmission information includes the Transport element (containing the IpAddress attribute, the Port attritute, the srclpAddress attribute, the transmissionSessionID attribute, the hasFDT attribute, the contentLocation attribute, and the transmissionObjectID attribute), and AlternativeURL element. The terminal 105 receives the RMS template with reference to these elements and attributes.

Once the RMS template has been received, the terminal 105 displays the service guide (service guide fragments) extracted from the SGDUs at step S505 using the RMS template in step S513. In this manner, the terminal 105 can outputs the services in the environment intended by the service provider.

If no RMS information has been detected at step S507, or if it has been determined that the RMS template is not supportable at step S509, the terminal 105 renders the service guide using its native rendering engine in step S515.

The structure and operations of the terminal supporting the rich media-enabled service guide provision method according to an embodiment of the present invention is described hereinafter.

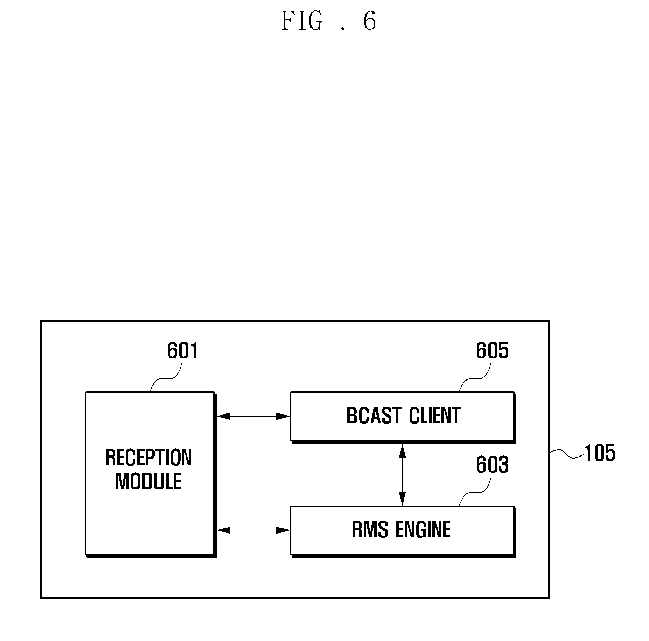

FIG. 6 is a block diagram illustrating a configuration of the terminal according to an embodiment of the present invention.

As shown in FIG. 6, the terminal 105 includes a reception module 601, an RMS engine 603, and a BCAST client 605.

The reception module 601 receives the SGDDs, acquires the SGDUs with reference to the SGDDs, and extracts the service guide fragments from the SGDUs. The reception module 601 also acquires the RMS template with reference to the RMS information contained in the SGDDs.

The RMS engine 603 interprets the RMS template and outputs the result to the BCAST client 605.

The BCAST client 605 interprets the service guide fragments and output the service guide using the RMS template provided by the RMS engine 603. The service guide can be provided in the form of metadata.

Detailed description is made of the RMS engine 603 for rendering the service guide. In an embodiment of the present invention, the description is made under the assumption that the RMS engine 603 is the Lightweight Application for Scene Representation (LASeR) engine. However, the RMS engine 603 can be implemented with other rich media rending engine. In case that the RMS engine 603 (or system) is substituted by other type of rending engine (or other system), the related terms can be changed in consistency with the substituted technology, and this is obvious to those skilled in the art.

In an embodiment of the present invention, the RMS engine 603 decodes the receive RMS template, i.e. LASeR template. In case that the LASeR template is delivered in the form of raw service content without compression, the decoding process is omitted.

The RMS engine 603 checks the LASeR commands in the decoded LASeR template and executes the commands.

The LASeR commands express the change of scene in declarative manner and include 'NewScene' element (command) to instruct the drawing of a new scene, 'Insert' element (command) to instruct the insertion of an attribute, and 'Delete' element (command) to instruct the deletion of an attribute.

The components of a scene, based on the LASeR, include the elements and attributes representing the properties of the elements that are expressing the media and graphic objects constituting a scene in the declarative manner, events, and scripts.

The LASeR template includes the information about the links and references for displaying the service guide using the information contained in the service guide fragments acquired from the SGDUs. The RMS engine 603 interprets the link and reference information of the LASeR template and checks the information contained in the service guide fragments based on the interpreted information.

The LASeR engine 603 renders the LASeR content in the format appropriate for the terminal using the information contained in the service guide fragments. The LASeR engine 603 outputs the rendered service guide through the user interface means supporting video and audio.

The information provided by the service guide fragments is the metadata for outputting the service guide. A description is made of the service guide metadata (hereinafter called SG metadata).

Table 4 shows an exemplary SG metadata according to an embodiment of the present invention.

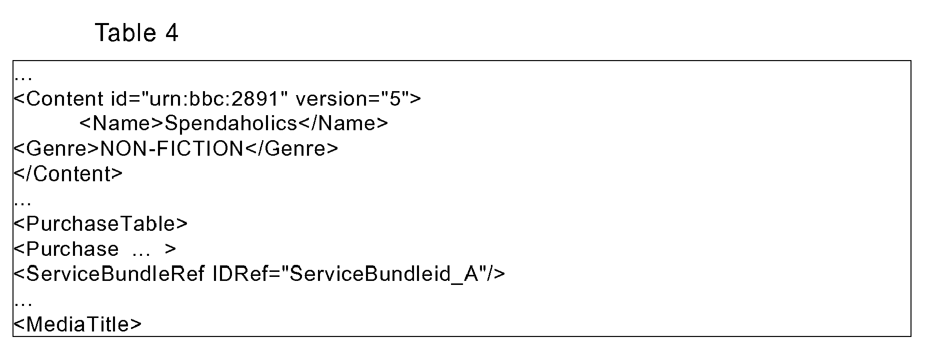

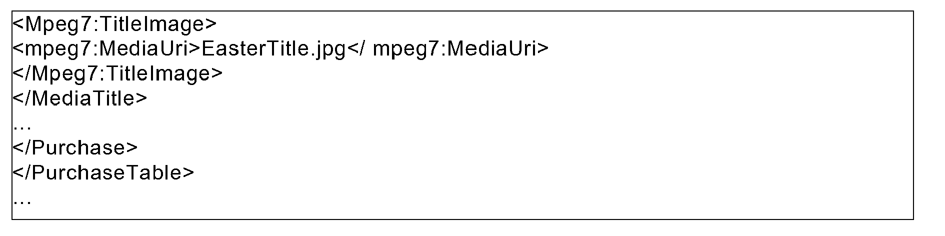

Table 4 is a structured XML data format expressing a SG metadata to be displayed on the LASeR template.

As aforementioned, the SG metadata is displayed to the user through the RMS template. Table 5 shows an RMS template according to an embodiment of the present invention.

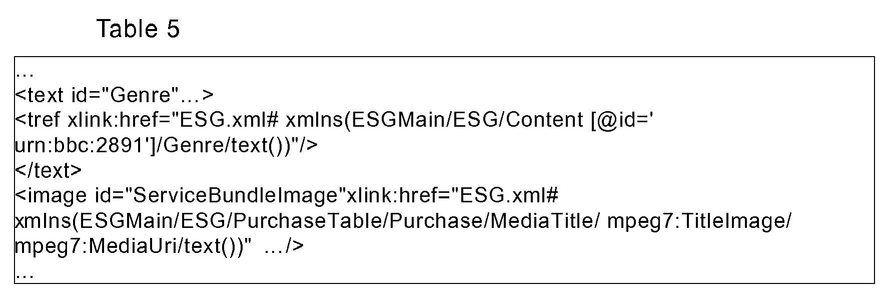

Table 5 shows the information provided by the service guide fragments, i.e. the SG metadata of Table 4, expressed in the LASeR template as the RMS template.

Here, the LASeR template includes a text identified by an id having the attribute value of "genre" and an image identified and id having the attribute value "ServiceBundlelmage".

In order to indicate the actual data and image file of the "text" element and the image file of "image" element, the file name or the file location can be used as shown in Table 5. For instance, it can be used to express the file name (such as "a.jpg") or the file location (such as ".../.../.../a.jpg"). That is, in order to present the information provided by the acquired service guide fragments by means of the RMS engine 603, e.g. LASeR engine, the file name, file path, and location are provided for the RMS engine 603 to access the files.

In Table 5, the LASeR engine references the external data using "tref" attribute and presents the reference data in the form of 'text' data of the LASeR service content.

The data such as 'image', 'video', and 'audio' can be presented as the component elements of the LASeR service content using the 'xlink:href' attribute providing a link to external data, e.g. 'xlink:href=' ESG.xml#xmlns(ESGMain/ESG/PurchaseTable/Purchase/MediaTitle/mpeg7:Title Image/ mpeg7:MediaUri/text())'.

In this case, the text data of the 'text' of which 'id' attribute has the attribute value 'Genre' is presented as the information 'NON_FICTION' provided by the service guide fragments when the LASeR template of Table 5 is displayed on the screen. Also, the actual image file of the 'image' of which 'id' attribute has the attribute value 'ServiceBundlelmage' is presented as the information 'EasterTitle.jpg' provided by the service guide fragments.

Table 6 shows an RMS template according to another embodiment of the present invention.

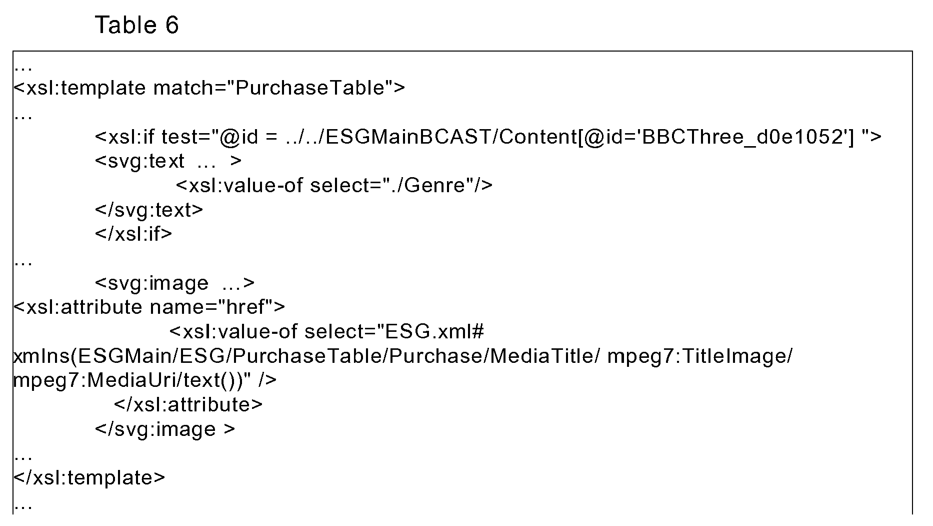

Table 6 shows the information provided by the service guide fragments expressed in the W3C SVG template and the result is identical with that of Table 5.

In this case, the RMS engine 603 references the external data using various expressions and referencing methods such as Xpath, Xpointer, and eXtensible Stylesheet Language Transformations (XSLT).

Although the description is directed to the method for the RMS engine to reference the SG metadata, the present invention is not limited thereto but can be implemented using various referencing methods.

Although the description on the terminal is made with reference to the RMS information formatted as shown in Table 3a, the mobile terminal can be configured to support the RMS information formats of Tables 3b and 3c as well as Table 3a.

As described above, the rich media-enabled service guide provision method and system of the present invention is capable of providing the rich media-enabled service guide to the terminals having different capabilities in a service provider's intended format by using RMS templates.

Also, the rich media-enabled service guide provision method and system of the present invention is capable of distributing the rich media-enabled service guide without compromising backward compatibility.

Although embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

## Claims

1. A method of creating a rich media-enabled service guide for a digital broadcast service, comprising the steps of:
collecting content information of one or more broadcast services to be delivered to a user device;
generating a service guide delivery descriptor (SGDD) based on the collected content information, the SGDD including rich media content information, the rich media content information including capability data of the user device; and
broadcasting the SGDD to the user device.

2. The method of claim 1, wherein the capability data of the user device is provided in a rich media solution (RMS) template descriptor.

3. The method of claim 2, wherein the RMS template descriptor includes a transport pointer to an RMS template for rendering the rich media-enabled service guide on the user device.

4. The method of claim 3, wherein the transport pointer includes at least one of a destination address, port number, source address, and a transmission session identifier.

5. The method of claim 1, wherein the rich media content information further includes a broadcast subscription manager (BSM) identifier that identifies a BSM affiliated with an RMS template for rendering the rich media-enabled service guide.

6. A method of rendering a rich media-enabled service guide for a digital broadcast service on a user device, comprising the steps of:
receiving a service guide delivery descriptor (SGDD) that is based on content information of one or more broadcast services to be delivered to the user device, the SGDD including rich media content information, the rich media content information including capability data of the user device;
determining compatibility of the user device with the rich media content information; and
rendering the rich media-enabled guide on the user device based on the SGDD if the user device is determined to be compatible with the rich media content information.

7. The method of claim 6, wherein the capability data of the user device is provided in a rich media solution (RMS) template descriptor.

8. The method of claim 7, wherein the RMS template descriptor includes a transport pointer to an RMS template for rendering the rich media-enabled service guide on the user device.

9. The method of claim 8, wherein the transport pointer includes at least one of a destination address, port number, source address, and a transmission session identifier.

10. The method of claim 6, wherein the rich media content information further includes a broadcast subscription manager (BSM) identifier that identifies a BSM affiliated with an RMS template for rendering the rich media-enabled service guide.

11. A data structure embodied on a processor readable medium for a rich media-enabled service guide in a digital broadcast service, the data structure comprising:
a service guide delivery descriptor (SGDD) that is based on content information of one or more broadcast services to be delivered to a user device;
a rich media solution (RMS) fragment containing rich media content information of the rich media-enabled service guide; and
an RMS template descriptor including capability data of the user device for determining compatibility of the user device with the rich media content information.

12. The data structure of claim 11 further comprising a transport pointer to an RMS template for rendering the rich media-enabled service guide on the user device.

13. The data structure of claim 12, wherein the transport pointer includes at least one of a destination address, port number, source address, and a transmission session identifier.

14. The data structure of claim 11 further comprising a broadcast subscription manager (BSM) identifier that identifies a BSM affiliated with an RMS template for rendering the rich media-enabled service guide.

15. A unit arranged to execute the method according to any one of claims 1 - 5.

16. A user device arranged to execute the method according to any one of claims 6 - 10.

17. A system comprising a unit as defined in claim 15 and a user device as defined in claim 16.

18. A rich media-enabled service guide provisioning system for a digital broadcast service comprising:
- a broadcast distribution/adaptation unit arranged to transport a service guide delivery descriptor comprising information on service guide fragments, a Rich Media Solution (RMS) template, service guide fragment information, and RMS template information; and
- a terminal arranged to extract the service guide fragments with reference to the service guide fragment information of the service guide delivery descriptor, to receive the RMS template with reference to the RMS template information of the service guide delivery descriptor, and to output a service guide rendered with the service guide fragments using the RMS template.
